# EUROPEAN PATENT SPECIFICATION

(11) **EP 2 208 950 B1**
(45) Date of publication and mention of the grant of the patent: **04.05.2016**
(21) Application number: 08847733.6
(22) Date of filing: 05.11.2008
(51) Int. Cl.: F25D 23/00, B05B 5/057

(54) **REFRIGERATOR**
KÜHLVORRICHTUNG
RÉFRIGÉRATEUR

(30) Priority: 06.11.2007 JP 2007288369; 06.11.2007 JP 2007288371; 06.11.2007 JP 2007288373
(43) Date of publication of application: 21.07.2010
(73) Proprietor: Panasonic Corporation, Kadoma-shi Osaka 571-8501 (JP)
(72) Inventor: MAMEMOTO, Tosiaki, Chuo-ku, Osaka 540-6207 (JP); KAMISAKO Toyoshi, Chuo-ku, Osaka 540-6207 (JP); UEDA Yoshihiro, Chuo-ku, Osaka 540-6207 (JP); HORII, Katsunori, Chuo-ku, Osaka 540-6207 (JP); KAKITA, Kenichi, Chuo-ku, Osaka 540-6207 (JP); ADACHI, Tadashi, Chuo-ku, Osaka 540-6207 (JP); TSUJIMOTO, Kahoru, Chuo-ku, Osaka 540-6207 (JP); MORI, Kiyoshi, Chuo-ku, Osaka 540-6207 (JP)
(74) Representative: Eisenführ Speiser
(86) International application number: PCT/JP2008/003172
(87) International publication number: WO 2009/060593

(56) References cited:
- JP-A- 6 257 933
- JP-A- 2000 220 949
- JP-A- 2004 125 179
- JP-A- 2005 270 669
- JP-A- 2007 046 888
- US-A1- 2006 130 498
- US-B1- 6 390 378

## Description

### Technical Field

The present invention relates to a refrigerator having an atomization unit installed in a storage compartment for storing vegetables and the like.

### Background Art

Influential factors in a decrease in freshness of vegetables include temperature, humidity, environmental gas, microorganisms, light, and so on. Vegetables are living things that perform respiration and transpiration. To maintain freshness, such respiration and transpiration need to be suppressed. Except some vegetables such as those susceptible to low temperature damage, many vegetables can be prevented from respiration by a low temperature and prevented from transpiration by a high humidity.

In recent years, household refrigerators are provided with a sealed vegetable container for the purpose of vegetable preservation, where vegetables are cooled at a proper temperature and also control is exercised to suppress transpiration of the vegetables by creating a high humidity state inside the container. Such refrigerators include a refrigerator having a mist spray function for creating a high humidity state inside the container.

Conventionally, this type of refrigerator having the mist spray function generates and sprays a mist using an ultrasonic atomization apparatus to humidify the inside of a vegetable compartment when the vegetable compartment is at a low humidity, thereby suppressing transpiration of vegetables.

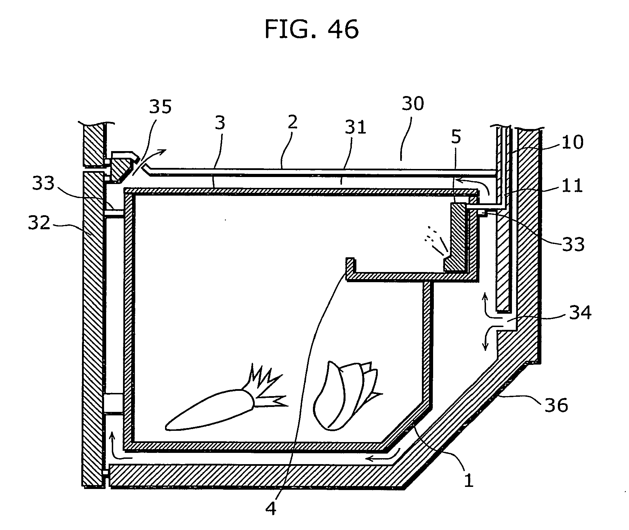

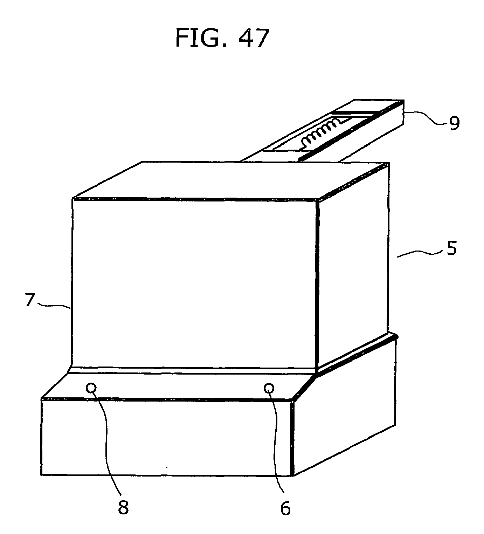

FIG. 46 is a relevant part longitudinal sectional view showing a longitudinal section when the vegetable compartment of the conventional refrigerator is cut into left and right. FIG. 47 is an enlarged perspective view showing a relevant part of the ultrasonic atomization apparatus provided in the vegetable compartment of the conventional refrigerator.

As shown in FIG. 46, a vegetable compartment 31 is provided at a lower part of a main body case 36 of a refrigerator main body 30, and has a front opening closed by a drawer door 32 that can be slid in and out. The vegetable compartment 31 is separated from a refrigerator compartment (not shown) located above, by a partition plate 2.

A fixed hanger 33 is fixed to an inner surface of the drawer door 32, and a vegetable case 1 for storing foods such as vegetables is mounted on the fixed hanger 33. An upper opening of the vegetable case 1 is sealed by a lid 3. A thawing compartment 4 is provided inside the vegetable case 1, and an ultrasonic atomization apparatus 5 is included in the thawing compartment 4.

As shown in FIG. 47, the ultrasonic atomization apparatus 5 includes a mist blowing port 6, a water storage tank 7, a humidity sensor 8, and a hose receptacle 9. The water storage tank 7 is connected to a defrost water hose 10 by the hose receptacle 9. A purifying filter 11 for purifying defrost water is equipped in a part of the defrost water hose 10.

An operation of the refrigerator having the above-mentioned structure is described below.

Air cooled by a heat exchange cooler (not shown) flows along outer surfaces of the vegetable case 1 and the lid 3, as a result of which the vegetable case 1 and the foods stored in the vegetable case 1 are cooled. Moreover, defrost water generated from the cooler during refrigerator operation is purified by the purifying filter 11 when passing through the defrost water hose 10, and supplied to the water storage tank 7 in the ultrasonic atomization apparatus 5.

When the humidity sensor 8 detects an inside humidity to be equal to or lower than 90%, the ultrasonic atomization apparatus 5 starts humidification, allowing for an adjustment to a proper humidity for freshly preserving vegetables and the like in the vegetable case 1.

When the humidity sensor 8 detects the inside humidity to be equal to or higher than 90%, the ultrasonic atomization apparatus 5 stops excessive humidification. Thus, the inside of the vegetable compartment can be humidified speedily by the ultrasonic atomization apparatus 5, with it being possible to constantly maintain a high humidity in the vegetable compartment. This suppresses transpiration of vegetables and the like, so that the vegetables and the like can be kept fresh.

Note that the technical contents described above are disclosed in Patent Reference 1.

On the other hand, a refrigerator provided with an ozone water mist apparatus is disclosed in Patent Reference 2.

The refrigerator disclosed in Patent Reference 2 includes an ozone generator, an exhaust port, a water supply path directly connected to tap water, and an ozone water supply path, near a vegetable compartment. The ozone water supply path is led to the vegetable compartment. The ozone generator is connected to the water supply unit directly connected to tap water, and the exhaust port is connected to the ozone water supply path. An ultrasonic element is included in the vegetable compartment.

In the above-mentioned structure, ozone generated by the ozone generator is brought into contact with water to obtain ozone water as treated water. The generated ozone water is guided to the vegetable compartment in the refrigerator, atomized by the ultrasonic vibrator, and sprayed in the vegetable compartment.

Moreover, there is another form of humidification method.

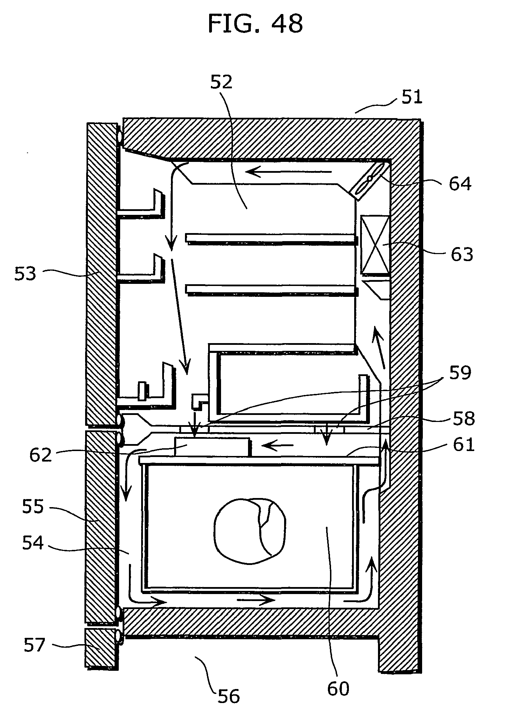

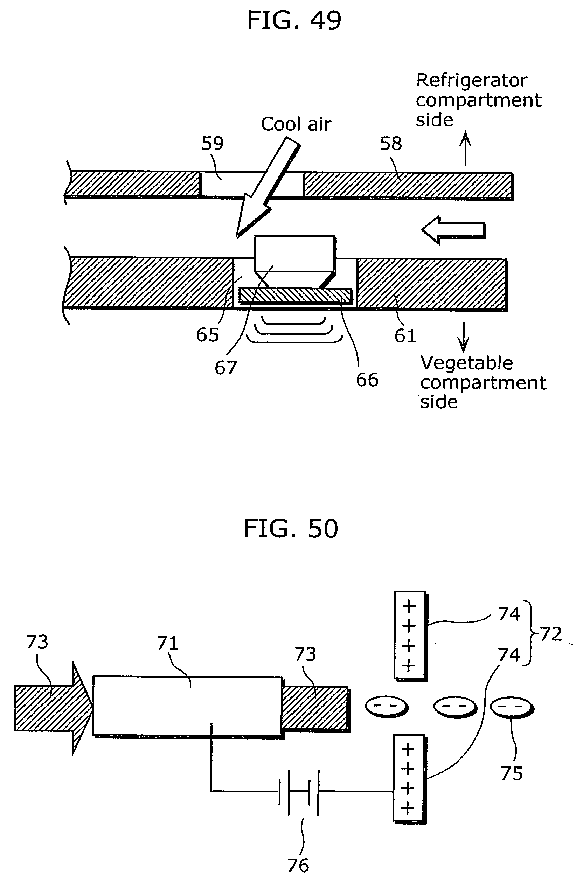

FIG. 48 is a relevant part longitudinal sectional view showing a longitudinal section when a refrigerator compartment and a vegetable compartment of a conventional refrigerator described in Patent Reference 3 are cut into left and right. FIG. 49 is a relevant part enlarged sectional view showing a longitudinal section of a humidification unit provided in the vegetable compartment of the conventional refrigerator described in Patent Reference 3.

In FIGS. 48 and 49, a refrigerator 51 includes a refrigerator compartment 52 (one refrigeration temperature zone compartment), a pivoted door 53 of the refrigerator compartment 52, a vegetable compartment 54 (another refrigeration temperature zone compartment), a drawer door 55, a freezer compartment 56, a drawer door 57, and a partition plate 58. The partition plate 58 separates the refrigerator compartment 52 and the vegetable compartment 54 from each other. A hole 59 is used to flow cool air from the refrigerator compartment 52 into the vegetable compartment 54.

A vegetable container 60 is pulled out together with the drawer door 55. A vegetable container lid 61 is fixed to a refrigerator main body. The vegetable container lid 61 covers the vegetable container 60 when the drawer door 55 is closed. An ultrasonic humidification unit 62 evaporates water into the vegetable container 60. A cooler 63 is a refrigeration temperature zone compartment cooler, and cools the refrigerator compartment 52 and the vegetable compartment 54.

Though not shown, this refrigerator also includes a freezing temperature zone compartment cooler that cools the freezer compartment 56. A refrigeration temperature zone compartment cool air circulation fan 64 operates to cause the cool air from the cooler 63 to circulate in the refrigerator compartment 52 and the vegetable compartment 54. The ultrasonic humidification unit 62 is provided in a hole 65 of the vegetable container lid 61, and composed of an absorbent member 66 and an ultrasonic oscillator 67.

An operation of the refrigerator having the above-mentioned structure is described below.

When the refrigerator compartment 52 and the vegetable compartment 54 increase in temperature, a refrigerant flows into the cooler 63 and the cool air circulation fan 64 is driven. As a result, ambient cool air of the cooler 63 passes through the refrigerator compartment 52, the hole 59, and the vegetable compartment 54 and then returns to the cooler 63, as indicated by arrows in FIG. 48. Thus, the refrigerator compartment 52 and the vegetable compartment 54 are cooled. This state is referred to as a "cooling mode".

Once the refrigerator compartment 52 and the vegetable compartment 54 have been roughly cooled, the supply of the refrigerant to the cooler 63 is stopped. Meanwhile, the fan 64 continues its operation. Hence, frost adhering to the cooler 63 melts down and as a result the refrigerator compartment 52 and the vegetable compartment 54 are humidified. This state is referred to as a "humidification mode" (the so-called "moisture operation").

After the humidification mode is continued for a predetermined time period (several minutes), the fan 64 is stopped to switch to an operation stop mode. Subsequently, when the refrigerator compartment 52 and the vegetable compartment 54 increase in temperature, the refrigerator 51 enters the cooling mode again.

The ultrasonic humidification unit 62 shown in FIG. 49 is described next.

The absorbent member 66 is made of a water-absorbing material such as silica gel, zeolite, and activated carbon. Accordingly, the absorbent member 66 adsorbs water in the flowing air in the above-mentioned humidification mode. In the latter part of the cooling mode, the ultrasonic oscillator 67 is driven. This causes the water in the absorbent member 66 to be discharged outwardly and the inside of the vegetable container to be humidified. By driving the ultrasonic oscillator 67 in the latter part of the cooling mode, the vegetable compartment 54 is kept from drying due to a decrease in humidity.

As described above, the ultrasonic humidification unit 62 includes the absorbent member 66 and the ultrasonic oscillator 67 for vibrating the absorbent member 66. This makes it unnecessary to provide a water tank and a water supply pipe for humidification.

Moreover, in the refrigerator having the humidification mode, the ultrasonic humidification unit 62 is operated other than during the humidification mode. Hence, a fluctuation in humidity in the storage compartment can be suppressed.

In addition, in the refrigerator that cools the storage compartment by flowing the refrigerant into the cooler 63 and operating the cool air circulation fan 64, the ultrasonic humidification unit 62 is operated at the time of this cooling. Thus, the humidification is performed at the time of cooling during which drying tends to occur, so that a fluctuation in humidity in the storage compartment can be suppressed.

Furthermore, the ultrasonic humidification unit 62 includes the absorbent member 66 and the ultrasonic oscillator 67 for vibrating the absorbent member 66, where the absorbent member 66 absorbs water in the air above the vegetable container lid 61, and the ultrasonic oscillator 67 vibrates the absorbent member 66 to emit the water contained in the absorbent member 66 into the vegetable container 60. This allows the inside of the vegetable container 60 to be humidified.

As a liquid spray apparatus that utilizes electrostatic atomization, there is a structure in the form of an air purifier.

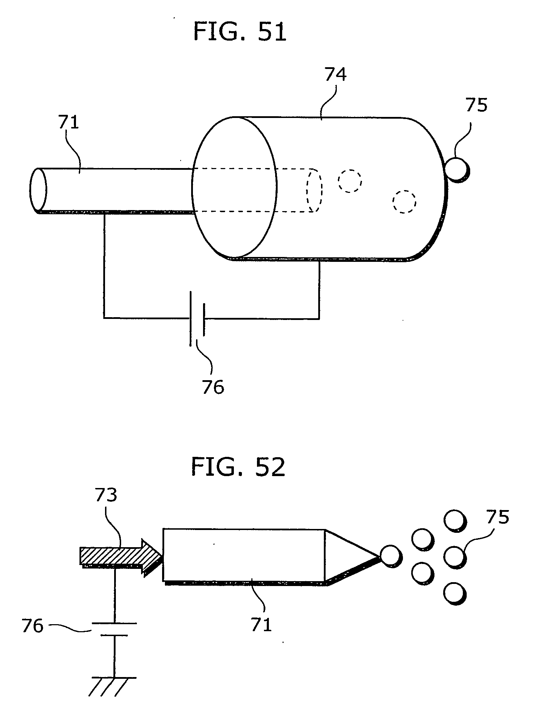

FIG. 50 is a schematic configuration diagram showing a conventional deodorant spray apparatus described in Patent Reference 4. FIG. 51 is a schematic perspective view showing one form of the conventional deodorant spray apparatus described in Patent Reference 4. FIG. 52 is a schematic configuration diagram showing another form of the conventional deodorant spray apparatus described in Patent Reference 4.

In FIG. 50, the conventional deodorant spray apparatus includes a nozzle 71 that sprays a liquid deodorant, a charging unit 72 that forms a high-voltage electric field to cause the sprayed deodorant to be electrostatically charged and atomized, and a high voltage source 76 that charges the charging unit 72. The charging unit 72 electrostatically atomizes a plume 73 of the deodorant sprayed from the nozzle 71, by a charging electrode 74 according to a dielectric charging method. That is, by passing the plume 73 through the high-voltage electric field, the plume 73 is reduced in particle diameter, and sprayed as water droplets 75 of charged fine particles.

In FIG. 51, a part of the nozzle 71 is entered into the cylindrical charging electrode 74, and a high voltage is applied by the high voltage source 76 with the nozzle 71 as a positive pole and the charging electrode 74 as a negative pole, thereby negatively charging the fine particle water droplets 75 of the deodorant sprayed from the nozzle 71 to cause electrostatic atomization of the water droplets 75.

When the water droplets 75 are negatively charged as in this case, negative ion effects can be attained, too. Moreover, by mixing a microbicide or an antioxidant such as vitamin C with the deodorant and electrostatically atomizing and spraying them together, it is possible to remove active oxygen staying in the air by the antioxidant or perform sterilization by the microbicide. Furthermore, by using an AC high voltage source as the high voltage source 76, the fine particle water droplets 75 can be both positively and negatively charged. This allows the water droplets 75 to discharge. For example, by installing a grounded electrostatic adsorption unit (not shown) at an end of the charging unit 72 formed by the charging electrode 74, floating particles and the like in the air can be adsorbed and collected by static electricity simultaneously with the water droplets 75 of the deodorant.

In FIG. 52, when a high voltage is directly applied to the nozzle 71 itself, the nozzle 71 itself serves as a charging unit, so that the deodorant can be directly charged by the nozzle 71 at the time of spray. Note that these technical contents can also be applied to an air purifier.

In the conventional structures described above, the control of operating and stopping the ultrasonic atomization apparatus is typically performed according to the inside humidity detected by the humidity sensor. However, this method rather lacks accuracy and responsiveness because an actual atomization state of the ultrasonic atomization apparatus cannot be determined. Especially in a sealed low temperature space such as a storage compartment in a refrigerator, when the amount of spray is excessive, vegetables and the like suffer water rot and dew condensation occurs in the storage compartment. When the amount of spray is insufficient, on the other hand, the storage compartment cannot be sufficiently humidified, making it impossible to preserve freshness of vegetables and the like.
Patent Reference 1: Japanese Unexamined Patent Application Publication No. 6-257933
Patent Reference 2: Japanese Unexamined Patent Application Publication No. 2000-220949
Patent Reference 3: Japanese Unexamined Patent Application Publication No. 2004-125179
Patent Reference 4: Japanese Unexamined Patent Application Publication No. 2005-270669
Patent Reference 5: Document US 6 390 378 B1

Prior art document US 6 390 378 B1 discloses a centralized humidification controlled container system for transporting and holding perishable goods, wherein a plurality of containers for perishable goods is provided and control is performed by a control unit of a master unit container. Specifically, temperature and humidity in the particular containers is monitored and controlled. The system includes a source of humidification water, and all containers are connected to the master unit container having the control equipment. The centralized humidification control system includes a sprayer system which delivers a finely divided mist or atomized fog of water into the refrigerated stream of atmospheric gas in which it is vaporized to humidify the stream of atmospheric gas. This humidity injection process may include high pressure water to be fed to the sprayer system to obtain the mist or atomized fog. Humidity is sensed and humidity injection is controlled to obtain a predetermined level of humidity.

### Disclosure of Invention

The present invention provides a refrigerator of high safety that performs an appropriate amount of mist spray by adjusting an atomization amount.

The refrigerator according to the present invention is disclosed in claim 1.

According to this, appropriate atomization can be achieved by accurately recognizing the atomization state of the atomization unit and controlling the operation of the atomization unit. Moreover, a refrigerator including an atomization apparatus can be further improved in quality.

### Brief Description of Drawings

FIG. 1 is a longitudinal sectional view of a refrigerator in a first embodiment of the present invention.
FIG. 2 is a relevant part front view of a vegetable compartment and its periphery in the refrigerator in the first embodiment of the present invention.
FIG. 3 is a sectional view taken along line 3-3 in FIG. 2.
FIG. 4 is a functional block diagram of the refrigerator in the first embodiment of the present invention.
FIG. 5A is a characteristic chart showing a relation between a discharge voltage and a discharge current of an electrostatic atomization apparatus in the refrigerator in the first embodiment of the present invention.
FIG. 5B is a characteristic chart showing a correlation between a state of an atomization unit and a relation between a discharge current of the electrostatic atomization apparatus and an output detection unit in the refrigerator in the first embodiment of the present invention.
FIG. 6 is a timing chart showing an example of an operation of the refrigerator in the first embodiment of the present invention.
FIG. 7A is a flowchart showing an example of control of the refrigerator in the first embodiment of the present invention.
FIG. 7B is a flowchart showing the example of control of the refrigerator in the first embodiment of the present invention.
FIG. 8 is a functional block diagram of a refrigerator in a second embodiment of the present invention.
FIG. 9 is a timing chart showing an example of an operation of the refrigerator in the second embodiment of the present invention.
FIG. 10A is a flowchart showing an example of control of the refrigerator in the second embodiment of the present invention.
FIG. 10B is a flowchart showing the example of control of the refrigerator in the second embodiment of the present invention.
FIG. 11 is a timing chart showing an example of an operation of a refrigerator in a third embodiment of the present invention.
FIG. 12A is a control flowchart showing an example of control of the refrigerator in the third embodiment of the present invention.
FIG. 12B is a control flowchart showing the example of control of the refrigerator in the third embodiment of the present invention.
FIG. 13 is a longitudinal sectional view of a refrigerator in a fourth embodiment not forming part of the present invention.
FIG. 14 is a relevant part enlarged sectional view of a vegetable compartment in the refrigerator in the fourth embodiment.
FIG. 15 is a block diagram showing a control structure related to an electrostatic atomization apparatus in the refrigerator in the fourth embodiment.
FIG. 16 is a characteristic chart showing a relation between a particle diameter and a particle number of a mist generated by the electrostatic atomization apparatus in the refrigerator in the fourth embodiment.
FIG. 17A is a characteristic chart showing a relation between a mist spray amount and a water content recovery effect for a wilting vegetable and a relation between a mist spray amount and a vegetable appearance sensory evaluation value in the refrigerator in the fourth embodiment.
FIG. 17B is a characteristic chart showing a change in vitamin C amount in the refrigerator in the fourth embodiment, as compared with a conventional example.
FIG. 17C is a characteristic chart showing agricultural chemical removal performance of the electrostatic atomization apparatus in the refrigerator in the fourth embodiment.
FIG. 17D is a characteristic chart showing microbial elimination performance of the electrostatic atomization apparatus in the refrigerator in the fourth embodiment.
FIG. 18 is a flowchart showing control of the refrigerator in the fourth embodiment.
FIG. 19 is a flowchart showing control in the case of going to an atomization amount determination step in the flowchart shown in FIG. 18.
FIG. 20 is a relevant part enlarged sectional view of a vegetable compartment in a refrigerator in a fifth embodiment not forming part of the present invention.
FIG. 21 is a block diagram showing a control structure related to an electrostatic atomization apparatus in the refrigerator in the fifth embodiment.
FIG. 22 is a flowchart showing control of the refrigerator in the fifth embodiment.
FIG. 23 is a flowchart showing control in the case of going to an atomization amount determination step in the flowchart shown in FIG. 22.
FIG. 24 is a relevant part enlarged sectional view showing a portion from a periphery of a water supply tank in a refrigerator compartment to a vegetable compartment in a refrigerator in a sixth embodiment not forming part of the present invention.
FIG. 25 is a block diagram showing a control structure related to an electrostatic atomization apparatus in the refrigerator in the sixth embodiment.
FIG. 26 is a flowchart showing control in the case of going to an atomization amount determination step in control of the refrigerator in the sixth embodiment.
FIG. 27 is a relevant part enlarged sectional view of a vegetable compartment and its periphery in a refrigerator in a seventh embodiment not forming part of the present invention.
FIG. 28 is a longitudinal sectional view of a refrigerator in an eighth embodiment not forming part of the present invention.
FIG. 29 is a relevant part enlarged sectional view of a vegetable compartment in the refrigerator in the eighth embodiment.
FIG. 30 is a block diagram showing a control structure related to an electrostatic atomization apparatus in the refrigerator in the eighth embodiment.
FIG. 31 is a characteristic chart showing a relation between a particle diameter and a particle number of a mist generated by the electrostatic atomization apparatus in the refrigerator in the eighth embodiment.
FIG. 32A is a characteristic chart showing a relation between a discharge current and an ozone generation concentration in an ozone amount determination unit in the refrigerator in the eighth embodiment.
FIG. 32B is a characteristic chart showing a relation between an atomization amount of the electrostatic atomization apparatus and each of an ozone concentration and a discharge current value in the refrigerator in the eighth embodiment.
FIG. 33A is a characteristic chart showing a relation between a mist spray amount and a water content recovery effect for a wilting vegetable and a relation between a mist spray amount and a vegetable appearance sensory evaluation value in the refrigerator in the eighth embodiment.
FIG. 33B is a characteristic chart showing a change in vitamin C amount in the refrigerator in the eighth embodiment, as compared with a conventional example.
FIG. 33C is a characteristic chart showing agricultural chemical removal performance of the electrostatic atomization apparatus in the refrigerator in the eighth embodiment.
FIG. 33D is a characteristic chart showing microbial elimination performance of the electrostatic atomization apparatus in the refrigerator in the eighth embodiment.
FIG. 34 is a flowchart showing control of the refrigerator in the eighth embodiment.
FIG. 35 is a flowchart showing control in the case of going to an ozone amount determination step in the flowchart shown in FIG. 34.
FIG. 36 is a relevant part enlarged sectional view of a vegetable compartment in a refrigerator in a ninth embodiment not forming part of the present invention.
FIG. 37 is a block diagram showing a control structure related to an electrostatic atomization apparatus in the refrigerator in the ninth embodiment.
FIG. 38 is a flowchart showing control of the refrigerator in the ninth embodiment.
FIG. 39 is a flowchart showing control in the case of going to an ozone amount determination step in the flowchart shown in FIG. 38.
FIG. 40 is a relevant part enlarged sectional view showing a portion from a periphery of a water supply tank in a refrigerator compartment to a vegetable compartment in a refrigerator in a tenth embodiment not forming part of the present invention.
FIG. 41 is a block diagram showing a control structure related to an electrostatic atomization apparatus in the refrigerator in the tenth embodiment.
FIG. 42 is a flowchart showing control in the case of going to an ozone amount determination step in control of the refrigerator in the tenth embodiment.
FIG. 43 is a relevant part enlarged sectional view showing a portion from a periphery of a water supply tank in a refrigerator compartment to a vegetable compartment in a refrigerator in an eleventh embodiment not forming part of the present invention.
FIG. 44 is a block diagram showing a control structure related to an electrostatic atomization apparatus in the refrigerator in the eleventh embodiment.
FIG. 45 is a block diagram showing a control structure related to an electrostatic atomization apparatus in a refrigerator in a twelfth embodiment not forming part of the present invention.
FIG. 46 is a relevant part longitudinal sectional view showing a longitudinal section when a vegetable compartment in a conventional refrigerator is cut into left and right.
FIG. 47 is an enlarged perspective view showing a relevant part of an ultrasonic atomization apparatus provided in the vegetable compartment in the conventional refrigerator.
FIG. 48 is a relevant part longitudinal sectional view showing a longitudinal section when a refrigerator compartment and a vegetable compartment in a conventional refrigerator are cut into left and right.
FIG. 49 is a relevant part enlarged sectional view showing a longitudinal section of a humidification unit provided in the vegetable compartment in the conventional refrigerator.
FIG. 50 is a schematic configuration diagram showing a conventional deodorant spray apparatus.
FIG. 51 is a schematic perspective view showing one form of the conventional deodorant spray apparatus.
FIG. 52 is a schematic configuration diagram showing another form of the conventional deodorant spray apparatus.

### Numerical References

100, 401, 801 Refrigerator
107, 407, 807 Vegetable compartment (storage compartment)
109 Compressor
131, 415, 502, 815 Electrostatic atomization apparatus
133, 435, 835 Voltage application unit
139 Atomization unit
145 Damper
148 Outside air temperature detection unit
156 Atomization state determination unit
157 Timer
158 Output detection unit
416, 816 Water collection unit
418, 818 Atomization tank
419, 504, 819 Nozzle tip
420, 503 Atomization electrode
421, 505 Counter electrode
428 Water collection cover
436, 836 Discharge current detection unit
437, 837 Atomization apparatus control circuit
438 Atomization amount determination unit
439, 839 Refrigerator control circuit
454, 854 On-off valve
455, 855 Flow path
465, 865 Water pump
820 Application electrode
838 Ozone amount determination unit
871 Ozone concentration sensor

### (First Embodiment)

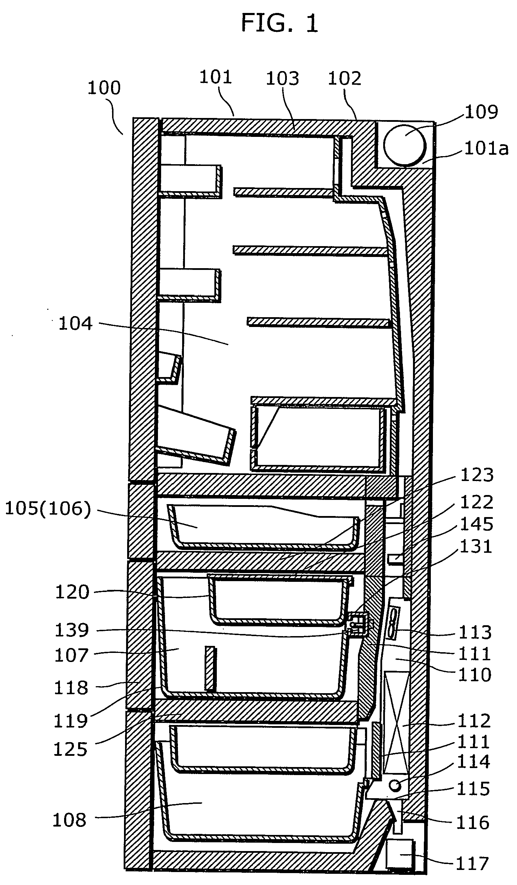

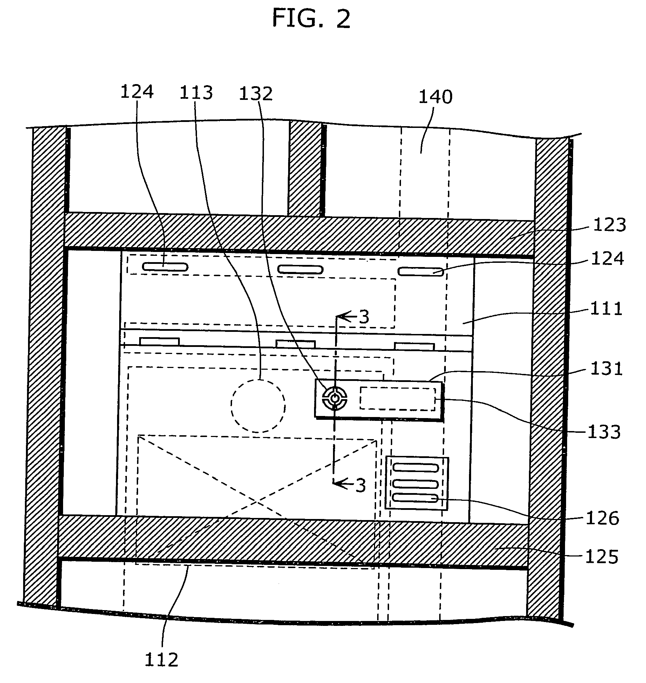

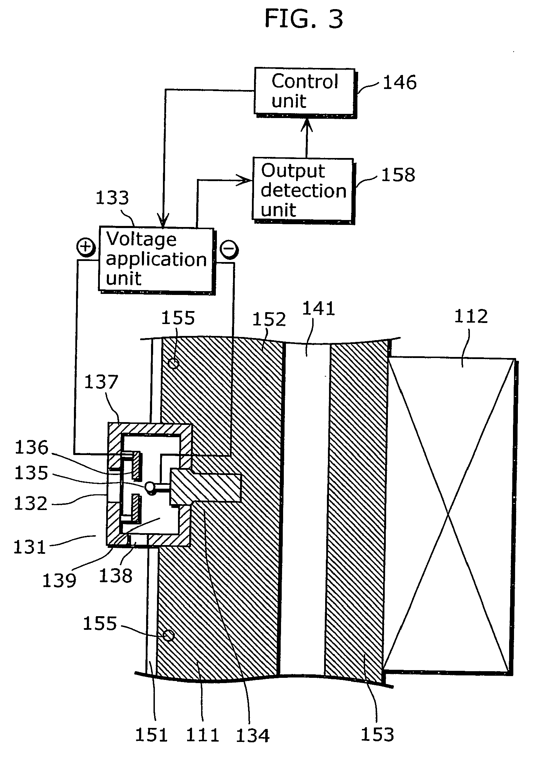

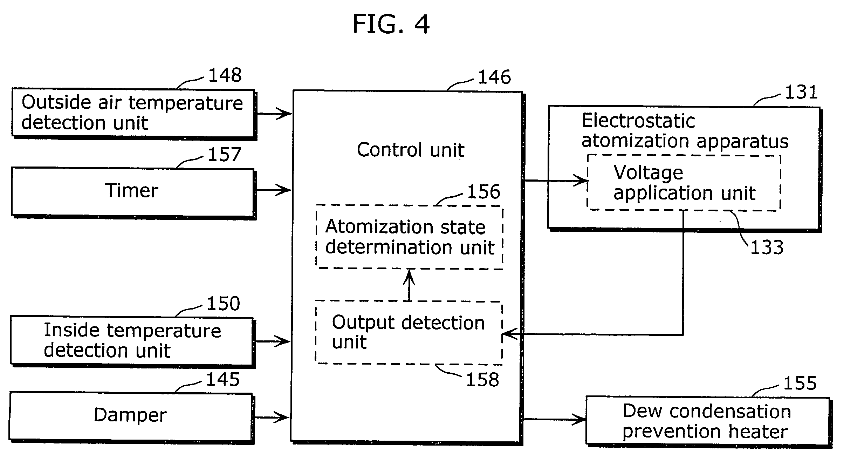

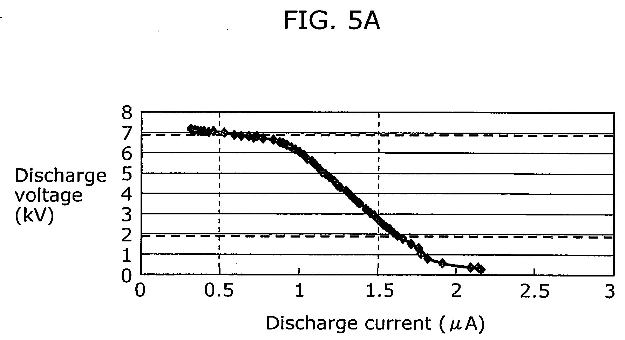

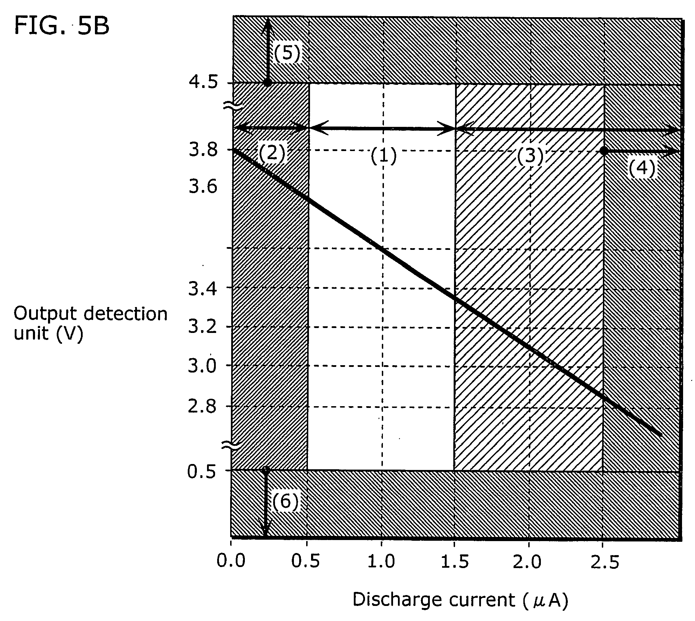

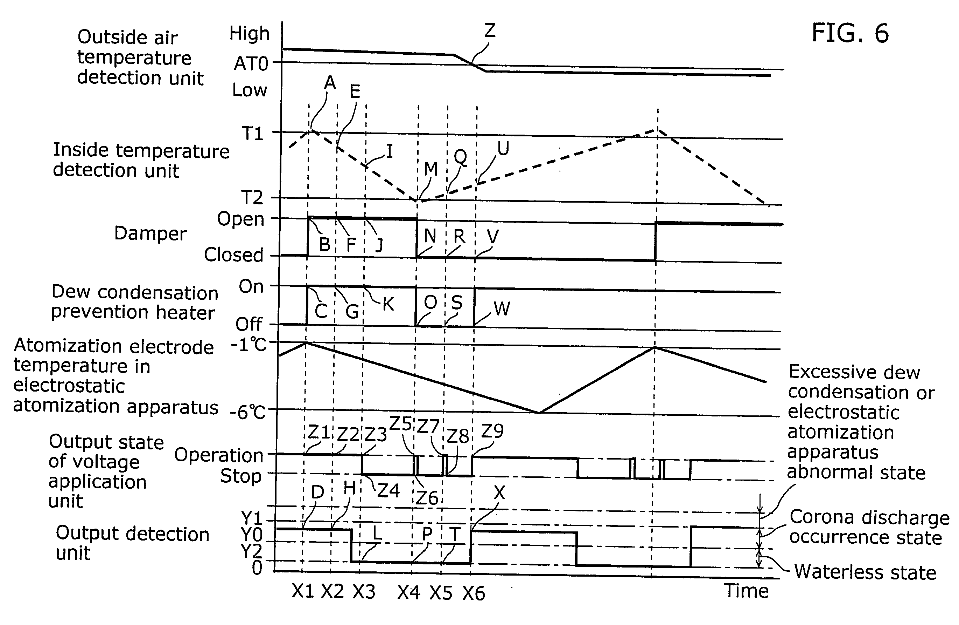

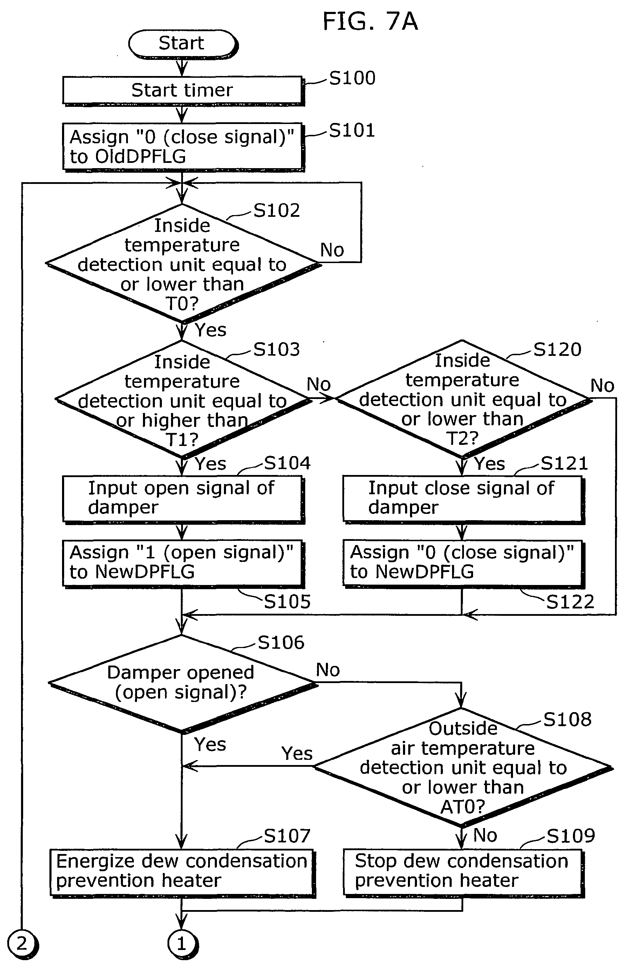

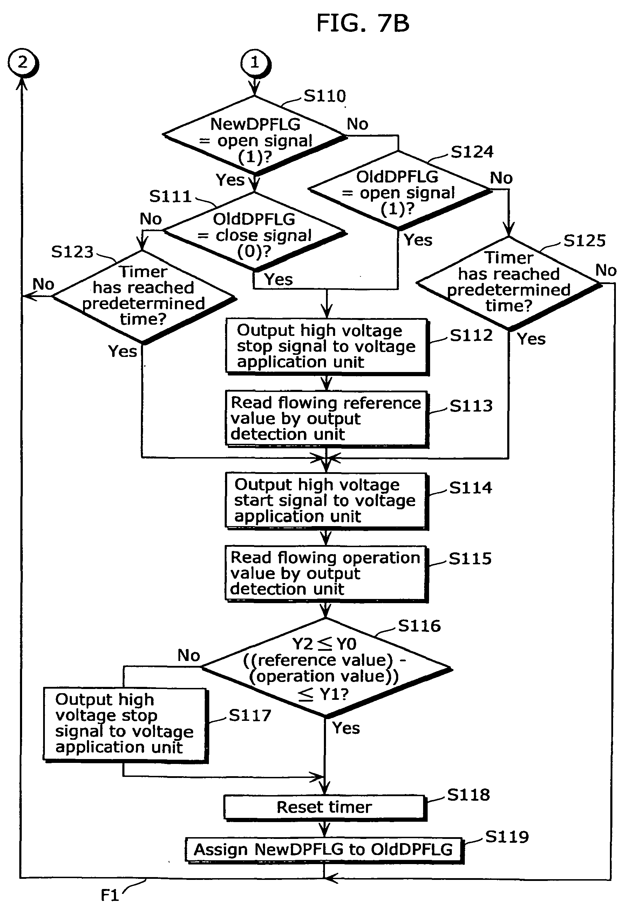

FIG. 1 is a longitudinal sectional view showing a left longitudinal section when a refrigerator in a first embodiment of the present invention is cut into left and right. FIG. 2 is a relevant part front view of a vegetable compartment and its periphery in the refrigerator in the first embodiment of the present invention, as seen with a door removed. FIG. 3 is a sectional view taken along line 3-3 in FIG. 2. FIG. 4 is a functional block diagram of the refrigerator in the first embodiment of the present invention. FIG. 5A is a characteristic chart showing a relation between a discharge current and a discharge voltage of an electrostatic atomization apparatus in the refrigerator in the first embodiment of the present invention. FIG. 5B is a characteristic chart showing a correlation between a state of an atomization unit and a relation between a discharge current of the electrostatic atomization apparatus and an output detection unit in the refrigerator in the first embodiment of the present invention. FIG. 6 is a timing chart showing an example of an operation of the refrigerator in the first embodiment of the present invention. FIGS. 7A and 7B are a flowchart showing an example of control of the refrigerator in the first embodiment of the present invention.

In FIGS. 1 to 7A and 7B, a heat-insulating main body 101 of a refrigerator 100 is formed by an outer case 102 mainly composed of a steel plate, an inner case 103 molded with a resin such as ABS, and a foam heat insulation material such as rigid urethane foam charged in a space between the outer case 102 and the inner case 103. The heat-insulating main body 101 is thermally insulated from its surroundings, and partitioned into a plurality of storage compartments.

A refrigerator compartment 104 as a first storage compartment is located at the top. A switch compartment 105 as a fourth storage compartment and an ice compartment 106 as a fifth storage compartment are located side by side below the refrigerator compartment 104. A vegetable compartment 107 as a second storage compartment is located below the switch compartment 105 and the ice compartment 106. A freezer compartment 108 as a third storage compartment is located at the bottom.

The refrigerator compartment 104 is typically set to 1°C to 5°C, with a lower limit being a temperature low enough for refrigerated storage but high enough not to freeze. The vegetable compartment 107 is set to a temperature of 2°C to 7°C that is equal to or slightly higher than the temperature of the refrigerator compartment 104. The freezer compartment 108 is set to a freezing temperature zone. The freezer compartment 108 is typically set to -22°C to -15°C for frozen storage, but may be set to a lower temperature such as -30°C and -25°C for an improvement in frozen storage state. The switch compartment 105 is capable of switching to not only the refrigeration temperature zone of 1°C to 5°C, the vegetable temperature zone of 2°C to 7°C, and the freezing temperature zone of typically -22°C to -15°C, but also a preset temperature zone between the refrigeration temperature zone and the freezing temperature zone. The switch compartment 105 is a storage compartment with an independent door arranged side by side with the ice compartment 106, and often has a drawer door.

Note that, though the switch compartment 105 is a storage compartment including the refrigeration and freezing temperature zones in the first embodiment, the switch compartment 105 may be a storage compartment specialized for switching to only the above-mentioned intermediate temperature zone between the refrigerated storage and the frozen storage, while leaving the refrigerated storage to the refrigerator compartment 104 and the vegetable compartment 107 and the frozen storage to the freezer compartment 108. Alternatively, the switch compartment 105 may be a storage compartment fixed to a specific temperature zone.

The ice compartment 106 makes ice by an automatic ice machine (not shown) disposed in an upper part of the ice compartment 106 using water sent from a water storage tank (not shown) in the refrigerator compartment 104, and stores the ice in an ice storage container (not shown) disposed in a lower part of the ice compartment 106.

A top part of the heat-insulating main body 101 has a depression stepped toward the back of the refrigerator 100. A machinery compartment 101a is formed in this stepped depression, and high-pressure components of a refrigeration cycle such as a compressor 109 and a dryer (not shown) for water removal are housed in the machinery compartment 101a. That is, the machinery compartment 101a including the compressor 109 is formed cutting into a rear area of an uppermost part of the refrigerator compartment 104.

By forming the machinery compartment 101a to dispose the compressor 109 in the rear area of the uppermost storage compartment (refrigerator compartment 104) in the heat-insulating main body 101 which is hard to reach and so used to be a dead space, a machinery compartment space provided at the bottom of the heat-insulating main body 101 in a conventional refrigerator can be effectively converted to a storage compartment capacity. This significantly improves storability and usability, making the refrigerator 100 more user-friendly.

Note that the matters relating to the relevant part of the present invention described below in the first embodiment are also applicable to a conventional type of refrigerator in which the machinery compartment is formed to dispose the compressor 109 in the rear area of the lowermost storage compartment in the heat-insulating main body 101.

A cooling compartment 110 for generating cool air is provided behind the vegetable compartment 107 and the freezer compartment 108. An air path for conveying cool air to each compartment having heat insulation properties and a back partition wall 111 for heat insulating partition from each compartment are formed between the vegetable compartment 107 and the cooling compartment 110 or between the freezer compartment 108 and the cooling compartment 110.

A cooler 112 is disposed in the cooling compartment 110, and a cooling fan 113 for blowing air cooled by the cooler 112 into the refrigerator compartment 104, the switch compartment 105, the ice compartment 106, the vegetable compartment 107, and the freezer compartment 108 by a forced convection method is placed in a space above the cooler 112. A radiant heater 114 made up of a glass tube for defrosting by removing frost or ice adhering to the cooler 112 and its periphery during cooling is provided in a space below the cooler 112. Furthermore, a drain pan 115 for receiving defrost water generated during defrosting and a drain tube 116 passing from a deepest part of the drain pan 115 through to outside the compartment are formed below the radiant heater 114. An evaporation dish 117 is formed outside the compartment downstream of the drain tube 116.

The vegetable compartment 107 includes a lower storage container 119 that is mounted on a frame attached to a drawer door 118 of the vegetable compartment 107, and an upper storage container 120 mounted on the lower storage container 119.

A lid 122 for sealing mainly the upper storage container 120 in a closed state of the drawer door 118 is held by the inner case 103 and a first partition wall 123 above the vegetable compartment 107. In the closed state of the drawer door 118, left, right, and back sides of an upper surface of the upper storage container 120 are in close contact with the lid 122, and a front side of the upper surface of the upper storage container 120 is in close contact with the lid 122. In addition, a boundary between the lower storage container 119 and left, right, and lower sides of a back surface of the upper storage container 120 has a gap narrowed so as to prevent moisture in the food storage unit from escaping, in a range of not interfering with the upper storage container 120 during operation.

An air path of cool air discharged from a discharge port 124 of the vegetable compartment 107 formed in the back partition wall 111 is provided between the lid 122 and the first partition wall 123. Moreover, a space is provided between the lower storage container 119 and a second partition wall 125 below the lower storage container 119, thereby forming a cool air path. A suction port 126 of the vegetable compartment 107 through which cool air, having cooled the inside of the vegetable compartment 107 and undergone heat exchange, returns to the cooler 112 is disposed in a lower part of the back partition wall 111 on the back of the vegetable compartment 107.

Note that the matters relating to the relevant part of the present invention described below in the first embodiment are also applicable to a conventional type of refrigerator that is opened and closed by a frame attached to a door and a rail formed on an inner case.

The back partition wall 111 includes a back partition surface 151 made of a resin such as ABS, and a heat insulator 152 made of styrene foam or the like for ensuring heat insulation by isolating the storage compartment from the air path and the cooling compartment 110. Here, a depression is formed in a part of a storage compartment side wall surface of the back partition wall 111 so as to be lower in temperature than other parts, and an electrostatic atomization apparatus 131 as an atomization apparatus having an atomization unit 139 for spraying a mist is buried in the depression.

Moreover, a damper 145 for adjusting cool air for cooling each storage compartment is embedded in the air path provided on the heat insulator 152.

The electrostatic atomization apparatus 131 is mainly composed of the atomization unit 139, a voltage application unit 133, and an external case 137. A spray port 132 and a moisture supply port 138 are each formed in a part of the external case 137. An atomization electrode 135 is placed in the atomization unit 139. The atomization electrode 135 is thermally fixed to a cooling pin 134 which is a good heat conductive member such as aluminum, stainless steel, or the like, either directly or indirectly.

The cooling pin 134 is fixed to the external case 137, where the cooling pin 134 itself protrudes from the external case 137. Moreover, a counter electrode 136 shaped like a circular doughnut plate is installed in a position facing the atomization electrode 135 on the storage compartment side so as to have a constant distance from a tip of the atomization electrode 135, and the spray port 132 is formed on its extension.

Furthermore, the voltage application unit 133 is formed near the atomization unit 139. A negative potential side of the voltage application unit 133 generating a high voltage is electrically connected to the atomization electrode 135, and a positive potential side of the voltage application unit 133 is electrically connected to the counter electrode 136. For example, a ground (0 V) which is a reference potential is applied to the atomization electrode 135, and a high voltage of 4 kV to 10 kV is applied to the counter electrode 136.

The voltage application unit 133 communicates with and is controlled by a control unit 146 of the refrigerator 100, and switches the high voltage on or off according to an input signal from the control unit 146 of the refrigerator 100, thereby controlling the operation of the electrostatic atomization apparatus 131 as the atomization apparatus.

The control unit 146 includes an outside air temperature detection unit 148 that detects an ambient temperature of the refrigerator 100, a timer 157 that counts time, an inside temperature detection unit 150 that detects an inside temperature of a storage compartment (such as the refrigerator compartment 104, the vegetable compartment 107, and the freezer compartment 108) in the refrigerator 100, and a control function of receiving an input of a signal from the damper 145 that adjusts the cooling amount and the flow of air and determining whether the electrostatic atomization apparatus 131 is to be operated or stopped and whether a dew condensation prevention heater 155 that adjusts the temperature of the storage compartment and prevents surface dew condensation in the storage compartment is to be operated or stopped.

The control unit 146 outputs a signal of applying or stopping a high voltage of the voltage application unit 133. According to this signal, the high voltage to the voltage application unit 133 is applied or stopped. In this state, a current value (discharge current) flowing between the atomization electrode 135 and the counter electrode 136 connected to the voltage application unit 133 or a voltage value (discharge voltage) applied between the atomization electrode 135 and the counter electrode 136 is detected, and inputted to an output detection unit 158 as an analog signal or a digital signal.

On the basis of this input signal, an atomization state determination unit 156 determines a normal operation state (an atomization occurrence state, a waterless state, an excessive dew condensation state, and so on) or an abnormal operation state (a circuit failure, freezing of the atomization electrode 135, and so on), and determines whether the high voltage to the voltage application unit 133 is to be applied or stopped. Thus, the control unit 146 performs feedback control.

Note that the dew condensation prevention heater 155 for adjusting the temperature of the storage compartment or preventing surface dew condensation is disposed between the heat insulator 152 and the back partition surface 151 to which the electrostatic atomization apparatus 131 is fixed. A cover 153 is located in front of the cooler 112, and the discharge air path 141 of the freezer compartment 108 is situated between the cover 153 and the back partition wall 111 behind the vegetable compartment 107.

An operation and effects of the refrigerator 100 having the above-mentioned structure are described below.

An operation of the refrigeration cycle is described first. The refrigeration cycle is activated by a signal from a control board (not shown) according to a set temperature inside the refrigerator, as a result of which a cooling operation is performed. A high temperature and high pressure refrigerant discharged by an operation of the compressor 109 is condensed into liquid to some extent by a condenser (not shown), is further condensed into liquid without causing dew condensation of the refrigerator 100 while passing through a refrigerant pipe (not shown) and the like disposed on the side and back surfaces of the refrigerator 100 and in a front opening of the refrigerator 100, and reaches a capillary tube (not shown). Subsequently, the refrigerant is reduced in pressure in the capillary tube while undergoing heat exchange with a suction pipe (not shown) leading to the compressor 109 to thereby become a low temperature and low pressure liquid refrigerant, and reaches the cooler 112.

Here, the low temperature and low pressure liquid refrigerant undergoes heat exchange with the air in each storage compartment such as the discharge air path 141 of the freezer compartment 108 conveyed by an operation of the cooling fan 113, as a result of which the refrigerant in the cooler 112 evaporates. Hence, the cool air for cooling each storage compartment is generated in the cooling compartment 110.

The low temperature cool air generated in the cooling compartment 110 is branched from the cooling fan 113 into the refrigerator compartment 104, the switch compartment 105, the ice compartment 106, the vegetable compartment 107, and the freezer compartment 108 using air paths and the damper 145, and cools each storage compartment to a desired temperature zone.

A cool air amount of the refrigerator compartment 104 is adjusted by the damper 145 according to a temperature sensor (not shown) provided in the refrigerator compartment 104, so that the refrigerator compartment 104 is cooled to a desired temperature. In particular, the vegetable compartment 107 is adjusted to 2°C to 7°C by cool air allocation and an on/off operation of a heating unit (not shown) and the like, and usually does not have the inside temperature detection unit 150.

After cooling the refrigerator compartment 104, the air is discharged into the vegetable compartment 107 from the discharge port 124 of the vegetable compartment 107 formed in a refrigerator compartment return air path 140 for circulating the air to the cooler 112, and flows around the upper storage container 120 and the lower storage container 119 for indirect cooling. The air then returns to the cooler 112 from the suction port 126 of the vegetable compartment 107.

In a part of the back partition wall 111 that is in a relatively high humidity environment, the heat insulator 152 has a smaller wall thickness than other parts. In particular, the thickness of the heat insulator 152 behind the cooling pin 134 is equal to or less than 10 mm. Thus, a depression is formed in the back partition wall 111, and the electrostatic atomization apparatus 131 is attached in this depression.

Cool air of about -15°C to -25°C generated by the cooler 112 and blown by the cooling fan 113 according to an operation of a cooling system flows in the discharge air path 141 of the freezer compartment 108 behind the cooling pin 134, as a result of which the cooling pin 134 is cooled to, for example, about 0°C to -10°C by heat conduction from the air path surface. Since the cooling pin 134 is a good heat conductive member, the cooling pin 134 transmits cold heat extremely easily, so that the atomization electrode 135 is also cooled to about 0°C to -10°C.

Here, the vegetable compartment 107 is 2°C to 7°C in temperature, and also is in a relatively high humidity state due to transpiration from vegetables and the like. Accordingly, when the atomization electrode 135 drops to a dew point temperature or below, water is generated and adheres to the atomization electrode 135 including the tip of the atomization electrode 135 as a spray tip.

The voltage application unit 133 applies a high voltage between the atomization electrode 135 to which the water droplets adhere and the counter electrode 136 (for example, 0 V (GND) to the atomization electrode 135 and 4 kV to 10 kV to the counter electrode 136), where the atomization electrode 135 is on a negative voltage side and the counter electrode 136 is on a positive voltage side. This starts an operation of the electrostatic atomization apparatus 131.

At this time, corona discharge occurs between the atomization electrode 135 and the counter electrode 136. The water droplets (the water droplets formed by dew condensation of water in the air in this embodiment) adhering to the spray tip of the atomization electrode 135 are finely divided by electrostatic energy. Furthermore, since the liquid droplets are electrically charged, a charged invisible nano-level fine mist of a several nm level, accompanied by ozone, OH radicals, oxygen radicals, and so on, is generated by Rayleigh fission.

The voltage applied between the electrodes is an extremely high voltage of 4 kV to 10 kV. However, a discharge current value at this time is at a several µA level, and therefore an input is extremely low, about 0.5 W to 1.5 W. Hence, proper spray is carried out.

When the nano-level fine mist generated by the atomization electrode 135 is sprayed from the atomization unit 139 in such a way, an ion wind is generated. During this time, high humidity air newly flows into the atomization unit 139 from the moisture supply port 138. This allows the spray to be performed continuously.

The generated fine mist is carried by the ion wind and sprayed into the lower storage container 119, but also reaches the upper storage container 120 because the fine mist is made up of extremely small particles and so has high diffusivity. The sprayed fine mist is generated by high voltage discharge, and so is negatively charged.

Meanwhile, green leafy vegetables, fruits, and the like stored in the vegetable compartment 107 tend to wilt more by transpiration or by transpiration during storage. Usually, some of vegetables and fruits stored in the vegetable compartment 107 are in a rather wilted state as a result of transpiration on the way home from shopping or transpiration during storage, and these vegetables and fruits are positively charged. Accordingly, the atomized mist tends to gather on vegetable surfaces, thereby enhancing freshness preservation.

The nano-level fine mist adhering to the vegetable surfaces contains a large amount of OH radicals and so is negatively charged, and also sufficiently contains ozone and the like though in a small amount. Such a nano-level fine mist is effective in antimicrobial activity, microbial elimination, and so on, further benefiting freshness preservation of the vegetables stored in the storage compartment. In addition, the negatively charged mist adhering to the vegetable surfaces eases removal of harmful substances such as agricultural chemicals attached to the vegetable surfaces, by causing the harmful substances to emerge or to be taken into the mist. This delivers an agricultural chemical removal effect by oxidative decomposition. Furthermore, stimulating the vegetables by the mist induces an antioxidative action, which produces an effect of promoting increases in nutrient of the vegetables such as vitamin C.

As mentioned earlier, the refrigerator compartment 104 is controlled by the damper 145 so as to be in the desired temperature zone. That is, when the refrigerator compartment 104 is higher than the desired temperature, the damper 145 is opened to introduce more cool air, thereby cooling the refrigerator compartment 104. In accordance with this operation, relatively dry air after cooling the refrigerator compartment 104 flows into the vegetable compartment 107 from the discharge port 124 of the vegetable compartment 107 via the refrigerator compartment return air path 140, thereby cooling the vegetable compartment 107. Thus, in this embodiment, the vegetable compartment 107 is not provided with the damper 145, and is cooled by cool air flowing in from the refrigerator compartment 104.

During this time, the cooling pin 134 is cooled via the heat insulator 152 from the discharge air path 141 of the freezer compartment 108 which is separated by the heat insulator 152 on the back of the vegetable compartment 107 and in which cool air of about -15°C to -20°C flows. This provides a structure in which, by cooling the cooling pin 134 to an extremely low temperature as compared with the vegetable compartment 107, water in the air in the vegetable compartment 107 forms dew condensation on the cooling pin 134.

Here, excessive dew condensation can occur on the atomization electrode 135 depending on an environment in the vegetable compartment 107. In such a case, the excessive dew condensation water droplets on the atomization electrode 135 are dried by using the relatively dry return air from the refrigerator compartment 104 controlled by the damper 145, in order to obtain an appropriate dew condensation amount. In this way, the atomization electrode 135 is controlled to be in an atomizable state.

Typically, the cool air in the vegetable compartment 107 is high in humidity as compared with the cool air in the refrigerator compartment 104, and the cool air flowing in from the refrigerator compartment 104 is relatively dry air in the vegetable compartment 107. Accordingly, the cool air flowing in from the refrigerator compartment 104 is used to dry the atomization electrode 135 in the first embodiment.

Thus, the opening/closing of the damper 145 of the refrigerator compartment 104 located in the cool air path upstream of the vegetable compartment 107 changes the air flow, the atmospheric temperature, and the dry state in the vegetable compartment 107. The opening/closing of the damper 145 disposed in the air path upstream of the vegetable compartment 107 is estimated to particularly change the flow of cool air influencing dew condensation and drying around the atomization unit 139 among environmental changes specific to the storage compartment of the refrigerator 100, so that the opening/closing of the damper 145 is an important factor influencing dew condensation and drying around the atomization unit 139.

Accordingly, the opening/closing of the damper 145 of the refrigerator compartment 104 located upstream of the vegetable compartment 107 represents an important timing at which the environment of the vegetable compartment 107 and the periphery of the atomization unit 139 can be estimated to change and especially the flow of cool air around the atomization unit 139 can be estimated to change. This being so, in the first embodiment, the damper 145 is used as a determination timing setting unit. At the timing when the opening/closing of the damper 145 is performed, the atomization state determination unit 156 determines the atomization state of the atomization unit 139 in order to determine whether or not proper atomization is performed. By reflecting the result of the determination in the operation of the spray unit, improved spray accuracy can be attained.

Through such atomization state feedback control whereby the atomization state determination is repeatedly performed at an efficient and accurate timing according to the timing setting unit and the result of the determination is reflected in the operation of the atomization unit 139, the spray accuracy of the atomization unit 139 can be improved, with it being possible to achieve mist spray of an appropriate spray amount.

A specific operation of the refrigerator 100 in the first embodiment is described below, with reference to FIG. 4.

In an operating state of the refrigerator 100, a signal from the outside air temperature detection unit 148 that detects the ambient temperature of the refrigerator 100, a signal from the inside temperature detection unit 150 that detects the atmospheric temperature inside the storage compartment, and a signal of the opening/closing of the damper 145 that adjusts the temperature of the storage compartment according to each detected temperature are inputted to the control unit 146.

The control unit 146 controls the compressor 109 so that the compressor 109 operates to execute the cooling operation, according to a preset temperature in the storage compartment. When the cooling operation is performed, cool air for cooling each storage compartment is generated in the cooling compartment 110, and conveyed into each storage compartment by the cooling fan 113. By the opening/closing of the damper 145, each storage compartment is adjusted to be cooled to a desired temperature zone.

For example, the inside temperature detection unit 150 in the storage compartment detects the inside temperature, and outputs the inside temperature to the control unit 146. The control unit 146 determines whether the inside temperature is higher or lower than the preset inside temperature. When the control unit 146 determines that the inside temperature is higher than the preset inside temperature, the damper 145 for cooling the inside of the storage compartment switches to open. At this timing, a signal (for example, opening = an open signal) of the damper 145 is inputted to the control unit 146. When the control unit 146 determines that the inside temperature is lower than the preset inside temperature, on the other hand, the damper 145 for cooling the inside of the storage compartment switches to closed. At this timing, a signal (for example, closing = a close signal) of the damper 145 is inputted to the control unit 146.

When the damper 145 as the determination timing setting unit switches from open (open signal) to closed (close signal) or from closed (close signal) to open (open signal), this timing is recognized as a timing for determining the atomization state. In order to determine the atomization state of the atomization unit 139, in a state where the high voltage of the voltage application unit 133 in the electrostatic atomization apparatus 131 is stopped, the output detection unit 158 reads the output value of the current (discharge current) flowing between the electrodes or the voltage (discharge voltage) applied between the electrodes, and sets the read value as a reference voltage value which is a reference value in a high voltage stop state. Next, in a state where the high voltage is applied to the voltage application unit 133, the output detection unit 158 reads the output value of the current (discharge current) flowing between the electrodes or the voltage (discharge voltage) applied between the electrodes, and sets the read value as an operation voltage value which is an operation value in a high voltage operation state.

The control unit 146 determines the atomization state by the atomization state determination unit 156, on the basis of a difference calculated by subtracting the operation voltage value which is the operation value in the high voltage operation state from the reference voltage value which is the reference value in the high voltage stop state. In detail, the control unit 146 determines whether or not the high voltage application to the voltage application unit 133 is to be continued, that is, whether the atomization unit 139 is to be operated or stopped. The timer 157 is then reset.

When the difference between the reference voltage value and the operation voltage value is in a specified range (for example, a range of an atomization occurrence state (1) in FIG. 5B) determined in advance, the atomization state determination unit 156 determines that proper corona discharge occurs and proper spray is performed, and continues the high voltage output to the voltage application unit 133 and also starts the timer 157.

The appropriate range shown in FIG. 5B is referenced when estimating the amount of water adhering mainly to the atomization tip and determining whether or not the water amount is in an appropriate range. There are the atomization occurrence state (1), a waterless state (2), an excessive dew condensation state (3), and an excessive ozone state (4) in FIG. 5B depending on the difference in adhering water amount.

The estimation of the adhering water amount is performed according to an amount of energy required when spraying the adhering water as a mist. In the first embodiment, the amount of water adhering to the atomization tip is estimated by using a proportional relation between the adhering water amount and the amount of energy required for the mist spray according to the value of the voltage (discharge voltage) applied to the electrostatic atomization apparatus 131 or the current (discharge current) flowing in the electrostatic atomization apparatus 131. Note that abnormal states (5) and (6) of the atomization apparatus shown in FIG. 5B are unrelated to the amount of water adhering to the atomization tip, and are set to be out of the proper range from a viewpoint of ensuring safety.

When the timer 157 has reached a predetermined time, the output detection unit 158 again reads the operation voltage value in the high voltage operation state of the voltage (discharge voltage) applied between the electrodes. The control unit 146 subtracts the operation voltage value in the high voltage operation state from the reference voltage value in the high voltage stop state, performs the determination in the atomization state determination unit 156 using the calculated difference to determine whether or not to energize the voltage application unit 133, and continues the operation of the atomization unit 139.

When the difference calculated by subtracting the operation voltage value in the high voltage operation state from the reference voltage value in the high voltage stop state is not in the specified range (for example, a range other than the atomization occurrence state (1) in FIG. 5B), the atomization state determination unit 156 determines that proper corona discharge does not occur. In this case, the control unit 146 outputs a high voltage stop signal to the voltage application unit 133 to stop the operation of the atomization unit 139. The control unit 146 also starts the timer 157.

When the timer 157 has reached the predetermined time, the control unit 146 again outputs a high voltage start signal to the voltage application unit 133, and the output detection unit 158 reads the operation voltage value in the high voltage operation state of the voltage or the current flowing between the electrodes. The control unit 146 subtracts the operation voltage value in the high voltage operation state from the reference value in the high voltage stop state, and performs the determination in the atomization state determination unit 156 using the calculated difference.

Here, delay control may be performed using the timer 157 to control whether or not to energize the electrostatic atomization apparatus 131 by high voltage application, that is, whether the operation of the atomization unit 139 is to be started or stopped, according to the dew condensation state of the atomization electrode 135. This enables an appropriate amount of atomization to be stably performed at an accurate timing when necessary, making it possible to further reduce power consumption.

Though the above describes the case where the voltage applied between the electrodes is set as the operation value and the reference value by the output detection unit 158, the output detection unit 158 may set the current (discharge current) flowing between the electrodes in the high voltage stop state as a reference current value which is a reference value, and the operation current value in the high voltage application state as an operation current value which is an operation value. In such a case, the atomization state determination unit 156 performs the determination on the basis of a difference between the reference value and the operation value, namely, a difference between the reference current value and the operation current value, thereby determining whether or not to energize the voltage application unit 133. The control unit 146 can control the operation of the atomization unit 139 in this manner, too.

The first embodiment describes the case where dry air flowing in when the damper 145 is open (open signal) is used to dry excessive dew condensation water of the atomization electrode 135. However, for example, the excessive dew condensation water droplets of the atomization electrode 135 can also be reliably dried by providing the dew condensation prevention heater 155 for excessive dew condensation prevention around the electrostatic atomization apparatus 131 and operating the dew condensation prevention heater 155 instead of using the dry air. Moreover, by using the dry air and the dew condensation prevention heater 155 in combination, the state of the atomization electrode 135 can be more stabilized to thereby perform appropriate spray.

When the damper 145 is closed (close signal), no cool air flows in, so that the dew condensation prevention heater 155 is stopped. Transpiration from vegetables and the like stored in the storage compartment creates a high humidity environment, as a result of which dew condensation occurs on the tip of the atomization electrode 135 and atomization starts.

The above describes the case where the operation of the dew condensation prevention heater 155 is controlled according to the open/close signal of the damper 145. However, when the outside air is relatively low in temperature, the closing of the damper 145 increases and the atomization electrode 135 is more likely in an excessive dew condensation state. Accordingly, through the use of the outside air temperature detection unit 148, the dew condensation prevention heater 155 may be operated with a duty factor increased according to the outside air temperature during the closing, thereby suppressing excessive dew condensation of the atomization electrode 135 according to the outside air temperature.

Thus, in the first embodiment, the atomization state determination unit 156 determines the atomization state of the atomization unit 139 by the value of the current (discharge current) flowing between the electrodes or the voltage (discharge voltage) applied between the electrodes which is detected by the output detection unit 158, and reflects the determination result in the operation of the atomization unit 139, namely, the on/off state of the electrostatic atomization apparatus 131. This allows accurate mist spray to be performed in the storage compartment, contributing to improved quality such as freshness preservation. In addition, unnecessary energization of the atomization unit 139 can be avoided, so that the power consumption can be reduced.

Furthermore, in the first embodiment, the output detection unit 158 detects the value of the current (discharge current) flowing between the electrodes or the voltage (discharge voltage) applied between the electrodes, as follows. In the state where the high voltage of the voltage application unit 133 in the electrostatic atomization apparatus 131 is stopped, the output detection unit 158 reads the output value of the current (discharge current) flowing between the electrodes or the voltage (discharge voltage) applied between the electrodes, and sets the read value as the reference value in the high voltage stop state. Next, in the state where the high voltage is applied to the voltage application unit 133, the output detection unit 158 reads the output value of the current (discharge current) flowing between the electrodes or the voltage (discharge voltage) applied between the electrodes, and sets the read value as the operation value in the high voltage operation state.

The control unit 146 uses the difference calculated by subtracting the operation value in the high voltage operation state from the reference value in the high voltage stop state. That is, even in the case where the current or the voltage differs in absolute value depending on individual variability of an internal component of the electrostatic atomization apparatus 131, the determination is performed on the basis of the difference between the operation voltage in the operation state and the reference voltage in the state where the high voltage application to the electrostatic atomization apparatus 131 is stopped. Thus, even when there is individual component variability, the spray state of the electrostatic atomization apparatus 131 can be recognized more accurately, so that atomization of a proper spray amount can be achieved when the electrostatic atomization apparatus 131 sprays the mist.

Moreover, in addition to the case where there is individual component variability, even in the case where the same component is used, the absolute value of the discharge voltage, the discharge current, and the like detected by the output detection unit may differ when the ambient temperature of the atomization unit 139 changes depending on the installation environment of the refrigerator 100. However, by estimating and recognizing the spray state (the water adhesion state at the spray tip) of the electrostatic atomization apparatus 131 as the atomization apparatus through the use of the difference of subtracting the operation value in the high voltage operation state from the reference value in the high voltage stop state and controlling the electrostatic atomization apparatus 131, the spray state of the electrostatic atomization apparatus 131 can be recognized more accurately, with it being possible to achieve atomization in a proper range. Particularly when spraying the mist in the storage compartment of the refrigerator 100 which is a sealed low temperature space, the spray amount needs to be controlled more finely and accurately, so that the control using this difference is effective.

The first embodiment describes the case where the difference of subtracting the operation value in the high voltage operation state from the reference value in the high voltage stop state is used in order to recognize the spray state of the electrostatic atomization apparatus 131 more accurately even when there is individual component variability as mentioned earlier. However, in the case such as where there is no need to perform such high accurate control or there is only an insignificant influence of individual component variability, the spray state of the electrostatic atomization apparatus 131 may be recognized by using the absolute value of the current value or the voltage value in the high voltage operation state directly as the operation value.

In the first embodiment, the atomization state of the atomization unit 139 is determined by the atomization state determination unit 156 according to the signal from the determination timing setting unit, and the operation of the atomization unit 139, namely, the operation of the electrostatic atomization apparatus 131 as the atomization apparatus, is controlled according to the signal determined by the atomization state determination unit 156. Through such atomization state feedback control whereby the atomization state determination is repeatedly performed at an efficient and accurate timing according to the timing setting unit and the result of the determination is reflected in the operation of the atomization unit 139, the spray accuracy of the atomization unit 139 can be improved, with it being possible to achieve mist spray of an appropriate spray amount.

Here, the determination timing setting unit is the damper 145 that adjusts the amount of air to the heat-insulated storage compartment, and the atomization state determination unit 156 determines the atomization state of the atomization unit 139 when the damper 145 switches from open to closed or from closed to open. Thus, the behavior of the damper 145 with which the flow of cool air influencing dew condensation and drying around the atomization unit 139 is estimated to change is set as the determination timing. In this way, the dew condensation state and the spray state of the atomization unit 139 can be recognized at an accurate timing, thereby improving the accuracy of determining the spray of the atomization unit 139.

The following describes the operations of the output detection unit 158 and the atomization state determination unit 156 in more detail.

FIG. 5A is a characteristic chart showing a result of measuring a state where there is water at the atomization electrode 135 in the refrigerator according to the present invention.

In a normal atomization occurrence range, the discharge voltage is 2.0 kV to 7.0 kV, and the discharge current is 0.5 µA to 1.5 µA. The output detection unit 158 detects this value and outputs it to the control unit 146. When the atomization state determination unit 156 determines that the discharge voltage is in the range of 2.0 kV to 7.0 kV or the discharge current is in the range of 0.5 µA to 1.5 µA, this indicates stable, proper corona discharge. That is, the atomization state determination unit 156 determines that proper atomization is performed. When the discharge voltage is not in the range of 2.0 kV to 7.0 kV or the discharge current is not in the range of 0.5 µA to 1.5 µA, on the other hand, proper corona discharge does not occur. That is, the atomization state determination unit 156 determines that proper atomization is not performed.

Though the first embodiment describes the case where the discharge voltage is in the range of 2.0 kV to 7.0 kV and the discharge current is in the range of 0.5 µA to 1.5 µA, an actual machine in a spray state operates with a discharge current of 0.5 µA to 1.5 µA and a discharge voltage of 3.0 kV to 7.0 kV. Thus, the absolute value range can be changed in accordance with changes of various conditions such as the effect achieved by atomization, the performance of the atomization unit 139, and the capacity of the spray space.

FIG. 5B is a characteristic chart showing determination areas of a normal operation state and an abnormal operation state by the atomization state determination unit 156 in the refrigerator according to the present invention.

The normal operation state is in a range where the detection voltage of the output detection unit 158 is 2.8 V to 3.8 V (this value varies by ±20% depending on individual component variability). When this value is replaced with the discharge current, the discharge current is 0.0 µA to 2.5 µA. This normal operation state range is classified as follows.

First, the detection voltage of the output detection unit 158 in the range of 3.6 V to 3.8 V corresponds to the waterless state (1) (or an insufficient water state and so on) of the atomization electrode 135, where the discharge current is equal to or less than 0.5 µA. In this case, since there is no water on the atomization unit 139, the atomization state determination unit 156 determines that appropriate atomization is not performed and stops the voltage application to the voltage application unit 133, so that the operation of the atomization unit 139 is suppressed and no mist spray is performed.

The detection voltage of the output detection unit 158 in the range of 3.2 V to 3.6 V corresponds to the atomization occurrence state (2) in which water properly adheres to the tip of the atomization electrode 135, where the discharge current is 0.5 µA to 1.5 µA. This range of the atomization occurrence state (2) corresponds to the case where the atomization amount sprayed into the storage compartment in the refrigerator 100 is appropriate. Accordingly, the atomization state determination unit 156 determines that appropriate spray is performed and performs the voltage application to the voltage application unit 133, so that the atomization unit 139 is operated to perform mist spray.

The detection voltage of the output detection unit 158 in the range of 3.2 V to 2.8 V corresponds to the excessive dew condensation state (3) in which excessive dew condensation occurs on the atomization electrode 135, where the discharge current is 1.5 µA to 2.5 µA. This range of the excessive dew condensation state (3) corresponds to the case where the spray amount is estimated to be excessively high in the storage compartment of the refrigerator 100 which is a sealed low temperature space. Accordingly, the atomization state determination unit 156 determines that appropriate atomization is not performed and stops the voltage application to the voltage application unit 133, so that the operation of the atomization unit 139 is suppressed and no mist spray is performed.

In the case where the discharge current value is equal to or more than 2.5 µA, that is, the discharge current value is higher than the range of the excessive dew condensation state (3), not only the spray amount is excessively high but also the ozone generation amount is high, raising a possibility of exceeding 0.03 ppm which is an upper limit of ozone concentration believed to be safe for users in household refrigerators and thereby promoting an unusual odor and material deterioration. Accordingly, the atomization state determination unit 156 determines that appropriate atomization is not performed, and stops the voltage application to the voltage application unit 133, so that the operation of the atomization unit 139 is suppressed and no mist spray is performed.

Meanwhile, the range of the abnormal operation state is mainly determined on the basis of the voltage value of the output detection unit 158 in the vertical axis. For instance, when the detection voltage of the output detection unit 158 is equal to or more than 4.5 V, the electrostatic atomization apparatus 131 is in an abnormal (such as a circuit failure) state (5). This corresponds to the case where a failure in a state in which no current flows at all is estimated to occur due to some abnormality such as a circuit failure. Accordingly, the atomization state determination unit 156 determines that appropriate atomization is not performed, and stops the voltage application to the voltage application unit 133, so that the operation of the atomization unit 139 is suppressed and no mist spray is performed.

When the detection voltage of the output detection unit 158 is equal to or less than 0.5 V, the electrostatic atomization apparatus 131 is in an abnormal (such as freezing of the atomization electrode 135) state. This corresponds to the case where an excessively large amount of current flows in the atomization unit 139. For example, a failure in a state in which the atomization electrode 135 freezes and contacts with another component and the like or a state in which electrical leakage arises for some reason is estimated to occur. Accordingly, the atomization state determination unit 156 determines that appropriate atomization is not performed, and stops the voltage application to the voltage application unit 133, so that the operation of the atomization unit 139 is suppressed and no mist spray is performed.

Thus, in the case of providing the electrostatic atomization apparatus 131 in a household refrigerator and performing mist spray, when the mist spray is too much, dew condensation occurs in the storage compartment or ozone becomes excessive. On the other hand, when the spray is too little in a waterless state, power is wasted and also heat generation of the electrostatic atomization apparatus 131 causes a temperature increase in the storage compartment. This requires an additional cooling load for cooling the increased temperature, leading to an increase in power consumption. Therefore, it is necessary to constantly recognize the spray state of the atomization unit 139 and control the spray state to be appropriate (the atomization occurrence state (1) in FIG. 5B).

In the case of using the atomization apparatus and especially the electrostatic atomization apparatus 131 in the first embodiment, when some kind of floating object or the like adheres to the atomization electrode 135 or the counter electrode 136 in a waterless state, air discharge or the like occurs. This causes only ozone to be generated, resulting in an increase in ozone concentration in the storage compartment.

For example, in the case of a product such as a humidifier or facial equipment that generates a large amount of spray and stops the spray when a predetermined condition is met, a large amount of spray is continued until a predetermined humidity is reached or for a predetermined time period, with there being no need to constantly monitor the spray amount. In the case of a refrigerator which is a sealed low temperature space, however, complex control needs to be exercised using the atomization state determination unit 156 that determines the atomization state of the atomization unit 139 by monitoring the spray amount.

A detailed operation is described below, with reference to the timing chart of FIG. 6 and the control flowchart of FIGS. 7A and 7B.

First, when the refrigerator 100 is powered on, the timer 157 starts, and a signal outputted from the timer 157 is inputted to the control unit 146 (Step S100). The close signal (0) as an initial value is stored in a storage variable OldDPFLG (Step S101), and the atmospheric temperature in the storage compartment is detected by the inside temperature detection unit 150 provided in the storage compartment.

Following this, an output signal of the inside temperature detection unit 150 is inputted to the control unit 146. When the inside temperature detection unit 150 is equal to or lower than T0, the process goes to next Step S103. When the inside temperature detection unit 150 is not equal to or lower than T0, however, the process does not go to the next step until the inside temperature detection unit 150 is equal to or lower than T0 (Step S102, T0 = 12°C as an example). That is, when the inside temperature detection unit 150 is not equal to or lower than T0, a forced stopping unit operates so as to forcibly suppress the atomization in the atomization unit 139 (this forced stopping unit will be described in detail in a third embodiment).

By such an operation of the forced stopping unit, unnecessary energization of the electrostatic atomization apparatus 131 or the dew condensation prevention heater 155 is prevented until the inside of the storage compartment is cooled to a predetermined temperature. Thus, the spray in the atomization unit 139 is suppressed and the cooling in the storage compartment is given priority.

When the inside temperature detection unit 150 is equal to or lower than T0 in Step S102, the process goes to the next step. When the inside temperature detection unit 150 is equal to or higher than T1 (Step S103: Yes, point A in FIG. 6) and also the compressor 109 operates, the damper 145 switches to open and inputs its state to the control unit 146 (Step S104, point B in FIG. 6), and the open signal (1) is stored in a storage variable NewDPFLG (Step S105).

In Step S106, when the damper 145 is open, the dew condensation prevention heater 155 is energized to promote drying (Step S107, point C in FIG. 6). Furthermore, the storage variables NewDPFLG and OldDPFLG are determined.

When the storage variable NewDPFLG is the open signal (1) and the storage variable OldDPFLG is the close signal (0) (Step S111: Yes), the control unit 146 determines that this is a timing (a timing at time X1 in FIG. 6) when the damper 145 as one of the determination timing setting units changes from the close signal to the open signal.

At this time, the high voltage is applied between the atomization electrode 135 and the counter electrode 136. Since the current flowing here is extremely small at a several µA level, when the current value is converted to the voltage value, a variation in circuit component and a temperature variation in component occur, causing the determined current absolute value to differ depending on component.

However, the difference which represents the change in current value corresponding to the change in atomization amount shows a constant relation regardless of such variations, so that the atomization amount can be accurately determined by using the difference obtained by reading the reference voltage each time and performing the comparison.

In detail, with the reference voltage when not performing atomization being set as an origin, the difference of the atomization amount can be determined by subtraction from the reference voltage which varies. Accordingly, the control unit 146 outputs the high voltage stop signal to the voltage application unit 133 to stop the high voltage application to the voltage application unit 133 (Step S112), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the reference value in the high voltage stop state (Step S113).

Next, having determined that the high voltage is to be applied to the voltage application unit 133 in order to determine the atomization state, the control unit 146 outputs the high voltage start signal to the voltage application unit 133 (Step S114, point Z1 in FIG. 6), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the operation value in the high voltage operation state (Step S115).

The control unit 146 determines whether or not the difference of the operation value in the high voltage operation state from the reference value in the high voltage stop state is in a range of an upper limit Y1 to a lower limit Y2 of the current or the applied voltage stored in advance. When the difference is in the range (Step S116: Yes, point D in FIG. 6), it can be estimated that stable corona discharge occurs in the atomization electrode 135 and proper atomization is performed. Hence, the high voltage is continuously applied to the voltage application unit 133.

Following this, the timer 157 is reset (Step S118), the storage variable NewDPFLG is assigned to OldDPFLG (Step S119), and then the process returns to Step S102.

After the timer 157 has reached the predetermined time (a timing of time X2 in FIG. 6), when the inside temperature detection unit 150 is equal to or lower than T0 (Step S102), the process goes to next Step S103. When the inside temperature detection unit 150 is not equal to or lower than T0, however, the process does not go to the next step until the inside temperature detection unit 150 is equal to or lower than T0, as mentioned earlier (Step S102, T0 = 12°C as an example). This prevents unnecessary energization of the electrostatic atomization apparatus 131 and the dew condensation prevention heater 155.

When the inside temperature detection unit 150 is equal to or lower than T0 in Step S102, the process goes to next Step S103 to determine whether or not the inside temperature detection unit 150 is equal to or higher than T1. When the inside temperature detection unit 150 is not equal to or higher than T1, the process goes to Step S120 to determine whether or not the inside temperature detection unit 150 is equal to or lower than T2. When the inside temperature detection unit 150 is not equal to or lower than T2 (Step S120: No, point E in FIG. 6), the open signal of the damper 145 is continuously inputted to the control unit 146 (Step S104, point F in FIG. 6). When the damper 145 is open (Step S106: Yes), the energization of the dew condensation prevention heater 155 is continued (Step S107, point G in FIG. 6).

Moreover, the storage variable NewDPFLG is determined (Step S110). When the storage variable is the open signal (1), the process goes to Step S111 to also determine the storage variable OldDPFLG. When the storage variable is not the close signal (0) (Step S111: No), it is determined that the open signal (1) of the damper 145 is continued.

Following this, it is determined whether or not the timer 157 has reached the predetermined time (Step S123). When the timer 157 has not reached the predetermined time, the process goes to Step S102.

When the timer 157 has reached the predetermined time (Step S123: Yes), it is determined that the high voltage is to be applied to the voltage application unit 133 in order to recognize the atomization state of the electrostatic atomization apparatus 131, and the high voltage start signal is outputted to the voltage application unit 133 (Step S114, point Z2 in FIG. 6). In this case, the timer 157 serves as the determination timing setting unit.

The high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S115).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is in the range (Step S116: Yes, point H in FIG. 6), it can be estimated that proper corona discharge occurs to create an atomization state. Hence, the high voltage is continuously applied to the voltage application unit 133. Next, the timer 157 is reset (Step S118), the storage variable NewDPFLG is assigned to OldDPFLG (Step S119), and the process returns to Step S102. Here, though not shown, such control that does not go to the next step unless a closed state of the door of the storage compartment is detected may be added.

After the timer 157 has reached the predetermined time (a timing of time X3 in FIG. 6), when the inside temperature detection unit 150 is equal to or lower than T0 (Step S102), the process goes to next Step S103. When the inside temperature detection unit 150 is not equal to or lower than T0, however, the process does not go to the next step until the inside temperature detection unit 150 is equal to or lower than T0, as mentioned earlier (Step S102, T0 = 12°C as an example). This prevents unnecessary energization of the electrostatic atomization apparatus 131 and the dew condensation prevention heater 155.

When the inside temperature detection unit 150 is equal to or lower than T0 in Step S102, the process goes to next Step S103 to determine whether or not the inside temperature detection unit 150 is equal to or higher than T1. When the inside temperature detection unit 150 is not equal to or higher than T1 (Step S103: No, point I in FIG. 6), it is determined whether or not the inside temperature detection unit 150 is equal to or lower than T2 (Step S120). When the inside temperature detection unit 150 is not equal to or lower than T2 (Step S120: No, point I in FIG. 6), the open signal of the damper 145 is continuously inputted to the control unit 146 (Step S104, point J in FIG. 6). When the output signal indicates opening (Step S106: Yes), the energization of the dew condensation prevention heater 155 is continued (Step S107, point K in FIG. 6).

Here, the storage variable NewDPFLG is determined. When the storage variable is the open signal (1) (Step S110: Yes), the storage variable OldDPFLG is also determined. When the storage variable is not the close signal (0) (Step S111: No), it is determined that the open signal (1) of the damper 145 is continued.

It is then determined whether or not the timer 157 has reached the predetermined time (Step S123). When the timer 157 has reached the predetermined time (Step S123: Yes), it is determined that the high voltage is to be applied to the voltage application unit 133 in the electrostatic atomization apparatus 131, and the high voltage start signal is outputted to the voltage application unit 133 (Step S114, point Z3 in FIG. 6).

The high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S115).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is not in the range (Step S116: No, point L in FIG. 6), it can be estimated that proper corona discharge does not occur. Hence, the control unit 146 outputs the high voltage stop signal to the voltage application unit 133 to stop the high voltage application to the voltage application unit 133 (Step S117, point Z4 in FIG. 6). Following this, the timer 157 is reset (Step S118), the storage variable NewDPFLG is assigned to OldDPFLG (Step S119), and the process returns to Step S102.

When the timer 157 has not reached the predetermined time (Step S123: No), the process returns to Step S102.

When the inside temperature detection unit 150 is equal to or lower than T0 (Step S102), the process goes to next Step S103. When the inside temperature detection unit 150 is not equal to or lower than T0, however, the process does not go to the next step until the inside temperature detection unit 150 is equal to or lower than T0 (Step S102, T0 = 12°C as an example). This prevents unnecessary energization of the electrostatic atomization apparatus 131 and the dew condensation prevention heater 155.

When the inside temperature detection unit 150 is equal to or lower than T0 in Step S102, the process goes to next Step S103 to determine whether or not the inside temperature detection unit 150 is equal to or higher than T1. When the inside temperature detection unit 150 is not equal to or higher than T1 (Step S103: No, point M in FIG. 6), it is determined whether or not the inside temperature detection unit 150 is equal to or lower than T2 (Step S120). When the inside temperature detection unit 150 is equal to or lower than T2 (Step S120: Yes, point M in FIG. 6), the damper 145 outputs the close signal which is then inputted to the control unit 146 (Step S121, point N in FIG. 6), and the close signal (0) is stored in the storage variable NewDPFLG as the operation signal state (Step S122).

Subsequently, the value detected by the outside air temperature detection unit 148 is determined with respect to a preset outside air temperature AT0. When the detected value is determined to be higher than the preset temperature (Step S108: No), the dew condensation prevention heater 155 is stopped (Step S109, point O in FIG. 6).

Following this, the storage variable NewDPFLG is determined. When the storage variable is the close signal (0) (Step S110: No), the storage variable OldDPFLG is determined next. When the storage variable is the open signal (1) (Step S124: Yes), it is determined that this is a timing when the damper 145 changes from the open signal to the close signal (a timing of time X4 in FIG. 6).

At this time, the high voltage is applied between the atomization electrode 135 and the counter electrode 136. Since the current flowing here is extremely small at a several µA level, when the current value is converted to the voltage value, a variation in circuit component and a temperature variation in component occur, causing the determined current absolute value to differ depending on component.

However, the change in current value corresponding to the change in atomization amount shows a constant relation regardless of such variations, so that the atomization amount can be accurately determined by reading the reference voltage each time and performing the comparison.

In detail, with the reference voltage when not performing atomization being set as an origin, the absolute value of the difference of the atomization amount can be determined by subtraction from the reference voltage which varies. Accordingly, the control unit 146 outputs the high voltage stop signal to the voltage application unit 133 to stop the high voltage application to the voltage application unit 133 (Step S112), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the reference value in the high voltage stop state (Step S113).

Next, having determined that the high voltage is to be applied to the voltage application unit 133 in the electrostatic atomization apparatus 131, the control unit 146 outputs the high voltage start signal to the voltage application unit 133 (Step S114, point Z5 in FIG. 6), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S115).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is not in the range (Step S116: No, point P in FIG. 6), it can be estimated that the atomization electrode 135 has insufficient water droplets and so proper corona discharge does not occur, or that the atomization electrode 135 is in an excessive dew condensation state and so proper corona discharge does not occur. Hence, the control unit 146 outputs the high voltage stop signal to the voltage application unit 133 (Step S117, point Z6 in FIG. 6). Following this, the timer 157 is reset (Step S118), the storage variable NewDPFLG is assigned to OldDPFLG (Step S119), and then the process returns to Step S102.

After the timer 157 has reached the predetermined time (a timing of time X5 in FIG. 6), when the inside temperature detection unit 150 is equal to or lower than T0 (Step S102), the process goes to next Step S103. When the inside temperature detection unit 150 is not equal to or lower than T0, however, the process does not go to the next step until the inside temperature detection unit 150 is equal to or lower than T0 (Step S102, T0 = 12°C as an example). This prevents unnecessary energization of the electrostatic atomization apparatus 131 and the dew condensation prevention heater 155.

When the inside temperature detection unit 150 is equal to or lower than T0 in Step S102, the process goes to next Step S103 to determine whether or not the inside temperature detection unit 150 is equal to or higher than T1. When the inside temperature detection unit 150 is not equal to or higher than T1 (Step S103: No, point Q in FIG. 6), it is determined whether or not the inside temperature detection unit 150 is equal to or lower than T2 (Step S120). When the inside temperature detection unit 150 is not equal to or lower than T2 (Step S120: No, point Q in FIG. 6), it is determined that the close signal of the damper 145 is continued. When the damper 145 is not open (Step S106: No), the value of the outside air temperature detection unit 148 is determined with respect to the preset outside air temperature AT0. When the value is determined to be higher than the preset temperature (Step S108: No), the dew condensation prevention heater 155 is stopped (Step S109, point S in FIG. 6).

Next, the storage variable NewDPFLG is determined (Step S110). When the storage variable is not the open signal (1) (Step S110: No), the storage variable OldDPFLG is also determined. When the storage variable is not the open signal (1) (Step S124: No), it is determined that the close signal (0) of the damper 145 is continued.

Following this, it is determined whether or not the timer 157 has reached the predetermined time (Step S125). When the timer 157 has reached the predetermined time (Step S125: Yes), it is determined that the high voltage is to be applied to the voltage application unit 133 in the electrostatic atomization apparatus 13. Accordingly, the high voltage start signal is outputted to the voltage application unit 133 (Step S114, point Z7 in FIG. 6), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S115).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is not in the range (Step S116: No, point T in FIG. 6), it is determined that proper corona discharge does not occur in the atomization electrode 135. Hence, the control unit 146 outputs the high voltage stop signal to the voltage application unit 133 (Step S117, point Z8 in FIG. 6). Next, the timer 157 is reset (Step S118), the storage variable NewDPFLG is assigned to OldDPFLG (Step S119), and the process returns to Step S102.

After the timer 157 has reached the predetermined time (a timing of time X6 in FIG. 6), when the inside temperature detection unit 150 is equal to or lower than T0 (Step S102), the process goes to next Step S103. When the inside temperature detection unit 150 is not equal to or lower than T0, however, the process does not go to the next step until the inside temperature detection unit 150 is equal to or lower than T0 (Step S102, T0 = 12°C as an example).

This prevents unnecessary energization of the electrostatic atomization apparatus 131 and the dew condensation prevention heater 155. When the inside temperature detection unit 150 is equal to or lower than T0 in Step S102, the process goes to next Step S103 to determine whether or not the inside temperature detection unit 150 is equal to or higher than T1. When the inside temperature detection unit 150 is not equal to or higher than T1 (Step S103: No, point U in FIG. 6), it is determined whether or not the inside temperature detection unit 150 is equal to or lower than T2 (Step S120). When the inside temperature detection unit 150 is not equal to or lower than T2 (Step S120: No, point U in FIG. 6), it is determined that the close signal of the damper 145 is continued. When the output signal does not indicate opening (Step S106: No), the value of the outside air temperature detection unit 148 is determined with respect to the preset outside air temperature AT0. When the value is determined to be lower than the preset temperature (Step S108: Yes, point Z in FIG. 6), the dew condensation prevention heater 155 is energized (Step S107, point W in FIG. 6).

Here, when the outside air temperature is relatively low, the closed state of the damper 145 increases, and the atomization electrode 135 is more likely in the excessive dew condensation state. This being so, by energizing the dew condensation prevention heater 155 with a higher input than usual, it is possible to set such an environment that eases the dew condensation state and the drying state.

Next, the storage variable NewDPFLG is determined (Step S110). When the storage variable is not the open signal (1) (Step S110: No), the storage variable OldDPFLG is determined. When the storage variable is not the open signal (1) (Step S124: No), it is determined that the close signal (0) of the damper 145 is continued.

Following this, it is determined whether or not the timer 157 has reached the predetermined time (Step S125). When the timer 157 has reached the predetermined time (Step S125: Yes), it is determined that the high voltage is to be applied to the voltage application unit 133 in the electrostatic atomization apparatus 131. Accordingly, the high voltage start signal is outputted to the voltage application unit 133 (Step S114, point Z9 in FIG. 6), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S115).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is in the range (Step S116: Yes, point X in FIG. 6), it can be estimated that proper corona discharge occurs in the atomization electrode 135 to create an atomization state. Hence, the high voltage is continuously applied to the voltage application unit 133.

Next, the timer 157 is reset (Step S118), the storage variable NewDPFLG is assigned to OldDPFLG (Step S119), and the process returns to Step S102. Subsequently, the above-mentioned operation is repeated.

When the timer 157 has not reached the predetermined time (Step S125: No), on the other hand, the process returns to Step S102.

Thus, in the first embodiment, atomization state feedback control of repeatedly determining the atomization state and reflecting the determination result in the operation of the atomization unit 139 is performed. For example, in the control flowchart of FIGS. 7A and 7B, this atomization state feedback control indicates such a flow that repeatedly returns to control of determining the atomization state as designated by F1.

By repeating the feedback control in such a complex flow as described above, the atomization state determination unit 156 determines the atomization state of the atomization unit 139 according to the signal from the determination timing setting unit that sets the operation timing of the atomization state determination unit 156. The operation of the atomization unit 139 is controlled by the signal determined by the atomization state determination unit 156.

Through such atomization state feedback control whereby the atomization state determination is repeatedly performed at an efficient and accurate timing according to the timing setting unit and the result of the determination is reflected in the operation of the atomization unit 139, i.e., the atomization apparatus, the spray accuracy of the atomization unit 139 can be improved, with it being possible to achieve mist spray of an appropriate spray amount.

The above describes the case where the dew condensation prevention heater 155 is used for both the temperature adjustment in the storage compartment and the surface dew condensation prevention in the storage compartment. However, the use of independent heaters allows for a lower input of the heater for adjusting the temperature of the cooling pint 134, which contributes to finer control for the temperature adjustment of the cooling pin 134. As a result, the dew condensation state can be more stabilized, and also the spray efficiency can be improved.

The above describes the case where the reference value in the high voltage stop state is read at the timing when the damper 145 as one of the determination timing setting units changes from the open signal to the close signal or from the close signal to the open signal. However, by reading the reference value in the high voltage stop state and performing the comparison at each instance of detecting the operation value in the high voltage operation state, the atomization amount can be determined more accurately, with it being possible to improve the spray efficiency.

The first embodiment describes the case where the determination timing setting unit sets the timing when the damper 145 changes from the open signal to the close signal or from the close signal to the open signal, as the flow of cool air around the atomization unit 139 is estimated to change at this timing. Alternatively, for example, the timing when the inside temperature detection unit 150 (such as the inside temperature in the refrigerator compartment) decreases to a preset temperature or below or increases to the preset temperature or above may be used for the determination timing setting unit. When the inside temperature increases, it is estimated that the cooling starts soon and the damper 145 is opened to introduce cool air into the storage compartment. Thus, the opening/closing timing of the damper 145 and the change of the inside temperature are approximately correlated with each other. Therefore, in the case such as where an actual machine of the refrigerator 100 does not detect the opening/closing of the damper 145, the inside temperature detection unit 150 functions as an extremely effective timing setting unit.

As described above, in the first embodiment, the refrigerator 100 includes the vegetable compartment 107 as the heat-insulated storage compartment and the atomization unit 139 that sprays the mist into the vegetable compartment 107, where water adhering to the atomization unit 139 is finely divided and sprayed into the vegetable compartment 107 as the mist. The operation of the atomization unit 139 is controlled by the signal determined by the atomization state determination unit 156 that determines the atomization state of the atomization unit 139. Thus, by controlling the operation of the atomization unit 139 while accurately recognizing the atomization state of the atomization unit 139, appropriate atomization can be achieved. Hence, the quality of the refrigerator 100 including the atomization apparatus can be further improved.

Moreover, by determining the atomization state, abnormal atomization for the refrigerator 100 can be prevented, with it being possible to always perform atomization of an appropriate spray amount. Accordingly, an increase in temperature or power consumption in the storage compartment due to the operation of the atomization apparatus can be suppressed, which contributes to improved energy efficiency.

In the first embodiment, when the signal detected by the atomization state determination unit 156 is in the specified range determined in advance, it is determined that proper spray is performed in the atomization unit 139. When the detected signal is not in the specified range, on the other hand, it is determined that proper atomization is not performed. The operation of the atomization unit 139 is continued only in the state where proper atomization is performed. This allows for atomization apparatus malfunction prevention, failure detection, excessive spray prevention, suppression of a temperature increase in the storage compartment caused by the operation of the atomization apparatus, and also power consumption reduction.

In the first embodiment, the atomization unit 139 includes the voltage application unit 133 that generates the potential difference and the output detection unit 158, and the atomization state determination unit 156 determines the atomization state of the atomization unit 139 according to the current value that is detected by the output detection unit 158 as being applied to the voltage application unit 133. Therefore, by determining that proper atomization is performed and continuing the operation upon detecting that the applied current is in the specified range determined in advance, accurate mist spray determination can be performed for the storage compartment, contributing to improved quality such as freshness preservation. Besides, unnecessary energization can be avoided, so that the power consumption can be reduced.

In the first embodiment, the atomization unit 139 includes the voltage application unit 133 that generates the potential difference and the output detection unit 158, and the atomization state determination unit 156 determines the atomization state of the atomization unit 139 according to the voltage value that is detected by the output detection unit 158 as being applied to the voltage application unit 133. In this way, accurate mist spray determination can be performed for the storage compartment, contributing to improved quality such as freshness preservation. Besides, unnecessary energization of the atomization unit 139 can be avoided, so that the power consumption can be reduced.

In the first embodiment, when the atomization state determination unit 156 determines that proper spray is not performed in the atomization unit 139, the energization of the voltage application unit 133 is stopped. This saves excess power consumption.

Thus, even in the excessive spray state, it is possible to prevent dew condensation in the storage compartment by stopping the high voltage of the voltage application unit 133.

In the first embodiment, when the predetermined time has elapsed after the atomization state determination unit 156 determines that proper atomization is not performed, the atomization state determination unit 156 performs the atomization state determination again. When water is present on the atomization unit 139, the high voltage operation of the voltage application unit 133 is performed until there is no more water, which delivers a further improvement in spray efficiency. When there is no more water, the high voltage of the voltage application unit 133 is stopped, as a result of which the high voltage of the voltage application unit 133 is stopped until the next detection timing. This consumes no excess power, and so the power consumption can be further reduced.

In the first embodiment, the determination timing setting unit sets the operation timing of the atomization state determination unit 156, and the atomization state determination unit 156 determines the atomization state of the atomization unit 139 according to the signal from the determination timing setting unit. In this way, the atomization state can be determined at an efficient and accurate timing. As a result, the spray accuracy of the atomization unit 139 can be more improved, with it being possible to achieve mist spray of an appropriate spray amount.

In the first embodiment, when the environment in the storage compartment including the atomization unit 139 of the refrigerator 100 is estimated to change, the determination timing setting unit sets the determination timing of determining the atomization state of the atomization unit 139 by the atomization state determination unit 156. Thus, by estimating the inside environmental change specific to the storage compartment in the refrigerator 100 beforehand, the atomization state can be determined at a more accurate timing. This further improves the spray accuracy of the atomization unit 139, with it being possible to achieve mist spray of an appropriate spray amount.

In the first embodiment, the damper 145 that adjusts the amount of air to the heat-insulated storage compartment is provided as the determination timing setting unit. The atomization state determination unit 156 determines the atomization state of the atomization unit 139 when the damper 145 switches from open to closed or from closed to open. That is, the behavior of the damper 145 with which the flow of cool air influencing dew condensation and drying around the atomization unit 139 is estimated to change is used as the determination timing. In this way, the dew condensation state and the spray state of the atomization unit 139 can be recognized at an accurate timing, so that the accuracy of determining the spray of the atomization unit 139 can be improved.

In the first embodiment, the outside air temperature detection unit 148 detects the outside air temperature of the refrigerator 100. When the outside air temperature is equal to or higher than the predetermined temperature, the atomization state determination unit 156 determines the atomization state of the atomization unit 139, where the determination timing of the determination timing setting unit is such a timing when the damper 145 that adjusts the temperature of the storage compartment switches from open to closed or from closed to open. In the case where the outside air temperature is relatively low, the closed state of the damper 145 increases, and it can be estimated that the atomization electrode 135 is more likely in the excessive dew condensation state. This being so, by changing the determination timing of the determination timing setting unit according to the outside air temperature, the influence of the outside air temperature can be taken into consideration. Even when the installation condition of the refrigerator 100 changes, the dew condensation state and the spray state of the atomization unit 139 can be recognized at an appropriate and accurate timing, so that the accuracy of determining the spray of the atomization unit 139 can be improved.

Though the air path for cooling the cooling pin 134 is the discharge air path 141 of the freezer compartment 108 in the first embodiment, the air path may instead be a low temperature air path such as a discharge air path of the ice compartment 106 or a return air path of the freezer compartment 108. This expands an area in which the electrostatic atomization apparatus 131 can be installed.

Though no water retainer is provided around the atomization electrode 135 of the electrostatic atomization apparatus 131 in the first embodiment, a water retainer may be provided. This enables dew condensation water generated near the atomization electrode 135 to be retained around the atomization electrode 135, with it being possible to timely supply the water to the atomization electrode 135.

Though the storage compartment to which the mist is sprayed in the refrigerator 100 is the vegetable compartment 107 in the first embodiment, the mist may be sprayed to storage compartments of other temperature zones such as the refrigerator compartment 104 and the switch compartment 105. In such a case, various applications can be developed.

The first embodiment describes the case where the negative potential side and the positive potential side of the voltage application unit 133 that generates the high voltage are electrically connected to the atomization electrode 135 and the counter electrode 136, respectively. However, for example, the high voltage may be applied so that the atomization electrode 135 is at -4 kV to -10 kV and the counter electrode 136 is at a ground (0 V). In this case, the generated fine mist contains more OH radicals and the like, oxidative power of which further contributes to deodorization in the vegetable compartment 107 and antimicrobial activity and sterilization of vegetable surfaces and also allows harmful substances such as agricultural chemicals and wax adhering to the vegetable surfaces to be oxidative-decomposed and removed.

The first embodiment describes the case of using heat conduction from the air path in which cool air generated by the cooler 112 for cooling each storage compartment flows, but a cooling method that utilizes a Peltier element may be employed. In such a case, dry air may be used for a drying method in the same way as in the first embodiment. However, since a cooling surface can be operated as a heating surface through input inversion by exploiting the feature of the Peltier element, the cooling pin 134 may be dried by heating it. This enables the cycle of dew condensation and drying to be controlled more stably.

The first embodiment describes the case where water in the air is caused to form dew condensation on the atomization unit 139 as a water replenishment method when spraying the mist. However, even in the case where water stored in a storage tank or the like is supplied whenever necessary instead of using water in the air, the adhering water amount control method can be equally applied by providing the atomization state determination unit 156 that determines the atomization state of the atomization unit 139 and controlling the operation of the atomization unit 139 by the signal determined by the atomization state determination unit 156. In this case, by inputting information about the state of the atomization unit 139 to a control apparatus for controlling a water replenishment unit such as a storage tank after determining the state of the atomization unit 139, accurate and appropriate water replenishment can be carried out.

Even in such a case where water is replenished from outside, problems specific to refrigerators due to excessive spray or water shortage can be solved by exercising the same control while replacing the dew condensation amount adjustment described in the first embodiment with the water replenishment amount adjustment. Moreover, in the case of installing the mist spray apparatus in a refrigerator, it is possible to provide a high-quality, energy-efficient refrigerator capable of performing appropriate spray.

The first embodiment describes the case where the electrostatic atomization apparatus 131 is used as an example of a specific atomization apparatus for performing mist spray by the atomization unit 139. However, the atomization apparatus may perform atomization by a different method. For instance, in the case of using an ultrasonic atomization apparatus, having recognized the amount of water adhering to an atomization tip of the ultrasonic atomization apparatus, the atomization state determination unit 156 determines whether or not the water amount is in a proper range and controls the operation of the atomization unit 139, that is, the on/off of the atomization apparatus, on the basis of the same technical idea. Through such atomization state feedback control whereby the atomization state determination is repeatedly performed at an efficient and accurate timing and the result of the determination is reflected in the operation of the atomization unit 139, the spray accuracy of the atomization unit 139 can be improved, with it being possible to achieve mist spray of an appropriate spray amount. In this case, the same control unit as the control unit 146 in the first embodiment that takes the inside environment of the refrigerator 100 into consideration may be adopted.

### (Second Embodiment)

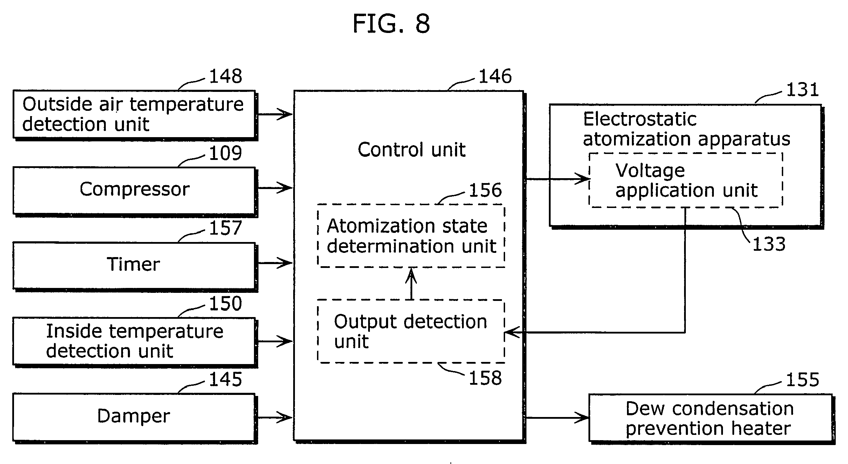

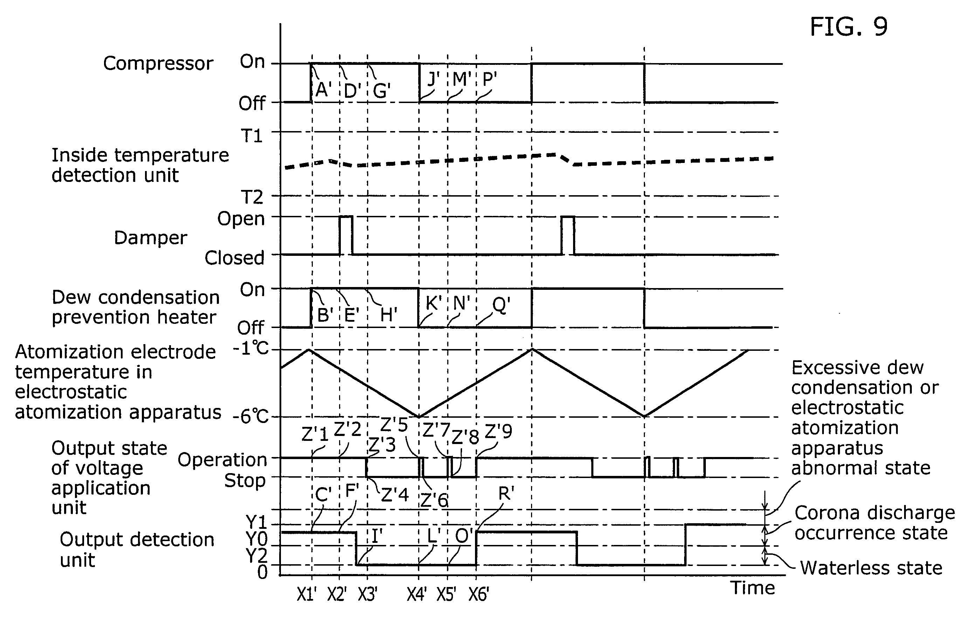

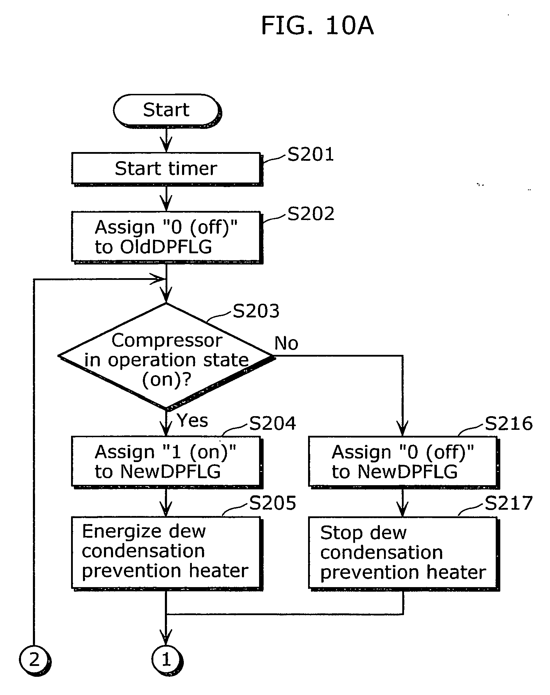

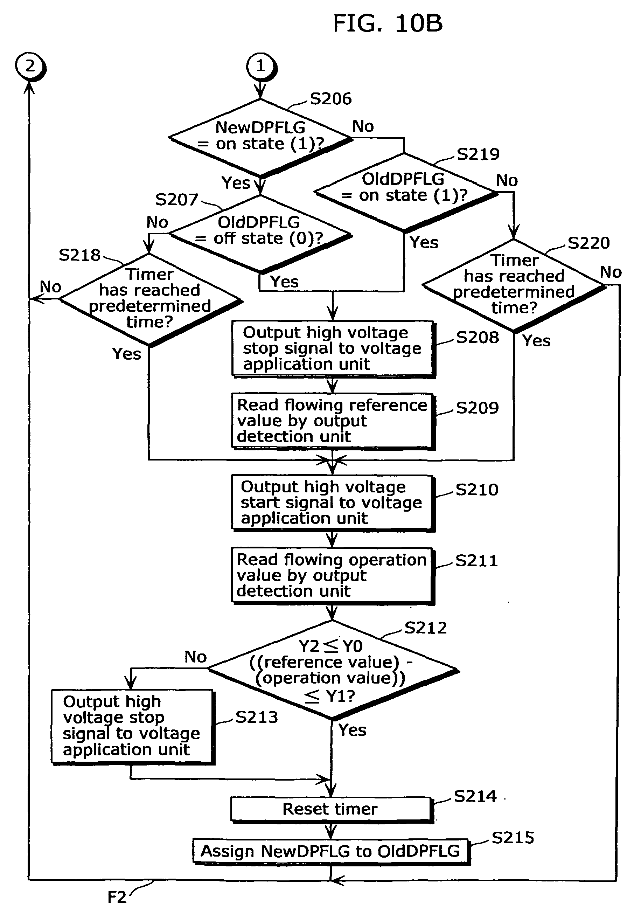

FIG. 8 is a functional block diagram of a refrigerator in a second embodiment of the present invention. FIG. 9 is a timing chart showing an example of an operation of the refrigerator in the second embodiment of the present invention. FIGS. 10A and 10B are a flowchart showing an example of control of the refrigerator in the second embodiment of the present invention.

The relation between the discharge voltage and the discharge current of the electrostatic atomization apparatus 131 in the refrigerator 100 in the second embodiment of the present invention is the same as that in the first embodiment shown in FIG. 5A. The correlation between the state of the atomization unit 139 and the relation between the discharge current value of the electrostatic atomization apparatus 131 and the output detection unit 158 in the refrigerator 100 in the second embodiment is the same as that in the first embodiment shown in FIG. 5B. The same structures as the first embodiment are given the same numerals and their detailed description is omitted.

In FIG. 8, in the refrigerator 100 in this embodiment, the operation of the compressor 109 is inputted to the control unit 146. According to a preset temperature in the refrigerator, the compressor 109 operates to perform a cooling operation. When the cooling operation is performed, cool air for cooling each storage compartment is generated in the cooling compartment 110, and conveyed into each storage compartment by the cooling fan 113. Through the opening/closing of the damper 145, each storage compartment is adjusted to be cooled to a desired temperature zone.

When the outside air temperature is relatively low, the temperature of the inside temperature detection unit 150 is approximately constant, so that the closed state of the damper 145 increases. This decreases an operation factor of the damper 145, making it difficult to control drying and dew condensation of the atomization electrode 135 according to the opening/closing of the damper 145. That is, since the damper 145 is in the closed state, the atomization electrode 135 is more likely in the excessive dew condensation state.

On the other hand, the on/off operation of the compressor 109 is performed at an approximately constant operation factor by varying a rotation frequency of the compressor 109 through inverter control and the like, without being affected by the surrounding environmental temperature of the refrigerator 100.

Accordingly, in the second embodiment, the outside air temperature detection unit 148 detects the outside air temperature of the refrigerator 100, and the determination timing setting unit that sets the operation timing of the atomization state determination unit 156 is changed according to the outside air temperature detected by the outside air temperature detection unit 148. The following mainly describes the case where the outside air temperature detected by the outside air temperature detection unit 148 is equal to or lower than a predetermined temperature.

When the outside air temperature detected by the outside air temperature detection unit 148 is equal to or lower than the predetermined temperature (14°C as an example), the atomization state is determined according to the operation of the cooling fan 113, that is, the signal of the compressor 109, in consideration of the humidity state of the vegetable compartment 107. For example, when the compressor 109 is turned on, the dew condensation prevention heater 155 is energized to create a warming, drying state of the atomization electrode 135. When the compressor 109 is turned off, the dew condensation prevention heater 155 is turned off to create a dew condensation state of the atomization electrode 135, and the mist is sprayed by high voltage application to the atomization electrode 135.

Though the above describes the case where the dew condensation prevention heater 155 is energized when the compressor 109 is on and stopped when the compressor 109 is off, the dew condensation prevention heater 155 may be stopped when the compressor 109 is on and energized when the compressor 109 is off. This allows for a reduction in power consumption.

Though the above describes the case where the dew condensation prevention heater 155 is energized/stopped at the on/off timing of the compressor 109, the duty factor may be changed between on and off of the compressor 109 while constantly energizing the dew condensation prevention heater 155.

Thus, the on/off timing of the compressor 109 is an important timing with which it can be estimated that the humidity state or the like of the vegetable compartment 107 changes and the temperature and humidity state influencing dew condensation and drying around the atomization unit 139 changes. In the second embodiment, the on/off timing of the compressor 109 is used for the determination timing setting unit, where the atomization state determination unit 156 determines the atomization state of the atomization unit 139 when the compressor 109 switches from on to off or from off to on.

Though the above describes the case where the atomization state is determined when the compressor 109 switches from on to off or from off to on, the atomization state may be determined when the cooling fan 113 switches from on to off or from off to on.

In this way, the atomization state is determined at the detection timing determined by the control unit 146 when the compressor 109 switches from on to off or from off to on. In a state where the high voltage of the voltage application unit 133 in the electrostatic atomization apparatus 131 is stopped, the output detection unit 158 reads the output value of the current (discharge current) flowing between the electrodes or the voltage (discharge voltage) applied between the electrodes, and sets the read value as the reference value in the high voltage stop state. Next, in a state where the high voltage is applied to the voltage application unit 133, the output detection unit 158 reads the output value of the current (discharge current) flowing between the electrodes or the voltage (discharge voltage) applied between the electrodes, and sets the read value as the operation value in the high voltage operation state.

The control unit 146 determines the atomization state by the atomization state determination unit 156, on the basis of the difference calculated by subtracting the operation voltage value or the operation current value which is the operation value in the high voltage operation state from the reference voltage value or the reference current value which is the reference value in the high voltage stop state. The control unit 146 determines whether or not the high voltage application of the voltage application unit 133 is to be continued, that is, whether or not the atomization unit 139 is to be operated. The timer 157 is then reset.

When the difference is in the specified range (for example, the range of the atomization occurrence state (1) in FIG. 5B) determined in advance, the atomization state determination unit 156 determines that proper corona discharge occurs and proper spray is performed, and continues to output the high voltage start signal to the voltage application unit 133 to perform mist spray and also starts the timer 157.

Each time the timer 158 has reached the predetermined time, the output detection unit 158 reads the operation value in the high voltage operation state of the current (discharge current) flowing between the electrodes or the voltage (discharge voltage) applied between the electrodes. The control unit 146 subtracts the operation value in the high voltage operation state from the reference value in the high voltage stop state, and performs the determination in the atomization state determination unit 156 using the calculated difference.

When the difference calculated by subtracting the operation value in the high voltage operation state from the reference value in the high voltage stop state is not in the specified range (for example, a range other than the atomization occurrence state (1) in FIG. 5B), the atomization state determination unit 156 determines that proper spray is not performed. In this case, the control unit 146 outputs the high voltage stop signal to the voltage application unit 133 to stop the operation of the atomization unit 139, thereby stopping mist spray. The control unit 146 also starts the timer 157.

When the timer 157 has reached the predetermined time, the control unit 146 again outputs the high voltage start signal to the voltage application unit 133, and reads, in the output detection unit 158, the operation value in the high voltage operation state of the voltage or the current flowing between the electrodes. The control unit 146 subtracts the operation value in the high voltage operation state from the reference value in the high voltage stop state, and performs the determination in the atomization state determination unit 156 using the calculated difference.

Here, delay control may be performed using the timer 157 to control whether or not to energize the electrostatic atomization apparatus 133 by high voltage application, that is, whether the operation of the atomization unit 139 is to be started or stopped, according to the dew condensation state of the atomization electrode 135. In such a case, the timer 157 serves as the timing setting unit. This enables an appropriate amount of atomization to be stably performed at an accurate timing when necessary, making it possible to achieve a reduction in power consumption.

A detailed operation is described below, with reference to the timing chart of FIG. 9 and the control flowchart of FIGS. 10A and 10B.

First, the timer 157 starts (Step S201), and the off state (0) as an initial value is stored in the storage variable OldDPFLG (Step S202). Here, though not shown, control of not going to the next step unless the inside temperature detection unit is equal to or less than a predetermined temperature may be added.

The state of the compressor 109 is inputted, and it is determined whether or not the state of the compressor 109 is the operation state (on) (Step S203). When the compressor 109 is in the on state (Step S203: Yes, point A' in FIG. 9), the on state (1) is stored in the storage variable NewDPFLG (Step S204), and the dew condensation prevention heater 155 is energized for creating the drying state of the atomization electrode 135 (Step S205, point B' in FIG. 9).

Next, NewDPFLG is determined. When the storage variable is the on state (1) (Step S206: Yes), OldDPFLG is also determined. When OldDPFLG is the off state (0) (Step S207: Yes), it is determined that this is a timing when the compressor 109 as one of the determination timing setting units changes from the off state to the on state (a timing of time X1' in FIG. 9).

At this time, the high voltage stop signal is outputted to the voltage application unit 133 to stop the high voltage application to the voltage application unit 133 (Step S208), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the reference value in the high voltage stop state (Step S209).

Next, having determined that the high voltage is to be applied to the voltage application unit 133 in the electrostatic atomization apparatus 131, the control unit 146 outputs the high voltage start signal to the voltage application unit 133 (Step S210, point Z'1 in FIG. 9), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S211).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is in the range (Step S212: Yes, point C' in FIG. 9), it is determined that stable, proper corona discharge occurs in the atomization electrode 135 to generate the mist. Hence, the high voltage is continuously applied to the voltage application unit 133. Following this, the timer 157 is reset (Step S214), the storage variable NewDPFLG is assigned to OldDPFLG (Step S215), and then the process returns to Step S203.

When the timer 157 has reached the predetermined time (a timing of time X2' in FIG. 9), it is determined whether or not the state of the compressor 109 is the operation state (on) (Step S203). When the compressor 109 is in the on state (Step S203: Yes, point D' in FIG. 9), the on state (1) is stored in the storage variable NewDPFLG (Step S204), and the dew condensation prevention heater 155 is continuously energized for creating the drying state of the atomization electrode 135 (Step S205, point E' in FIG. 9).

Following this, the storage variable NewDPFLG is determined (Step S206). When the storage variable is the on state (1) (Step S206: Yes) and also OldDPFLG is not the off state (0) (Step S207: No), it is determined whether or not the timer 157 has reached the predetermined time (Step S218).

When the timer 157 has reached the predetermined time (Step S218: Yes), it is determined that the high voltage is to be applied to the voltage application unit 133 in the electrostatic atomization apparatus 131. Accordingly, the high voltage start signal is outputted to the voltage application unit 133 (Step S210, point Z'2 in FIG. 9), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S211).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is in the range (Step S212: Yes, point F' in FIG. 9), it is determined that the atomization state continues. Hence, the high voltage is continuously applied to the voltage application unit 133. Following this, the timer 157 is reset (Step S214), the storage variable NewDPFLG is assigned to OldDPFLG (Step S215), and then the process returns to Step S203.

When the timer 157 has reached the predetermined time (a timing of time X3' in FIG. 9), it is determined whether or not the state of the compressor 109 is the operation state (on) (Step S203). When the compressor 109 is in the on state (Step S203: Yes, point G' in FIG. 9), the on state (1) is stored in the storage variable NewDPFLG (Step S204), and the dew condensation prevention heater 155 is continuously energized for creating the drying state of the atomization electrode 135 (Step S205, point H' in FIG. 9).

Following this, NewDPFLG is determined (Step S206). When the storage variable is the on state (1) (Step S206: Yes) and also the storage variable OldDPFLG is not the off state (0) (Step S207: No), it is determined whether or not the timer 157 has reached the predetermined time (Step S218).

When the timer 157 has reached the predetermined time (Step S218: Yes), it is determined that the high voltage is to be applied to the voltage application unit 133 in the electrostatic atomization apparatus 131. Accordingly, the high voltage start signal is outputted to the voltage application unit 133 (Step S210, point Z'3 in FIG. 9), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S211).

The control unit 146 determines whether or not the difference of the operation value in the high voltage operation state from the reference value in the high voltage stop state is in the range of the upper limit Y1' to the lower limit Y2' of the current or the applied voltage stored in advance. When the difference is not in the range (Step S212: No, point I' in FIG. 9), it is determined that proper corona discharge does not occur. Hence, the high voltage stop signal is outputted to the voltage application unit 133 (Step S213, point Z'4 in FIG. 9). Following this, the timer 157 is reset (Step S214), the storage variable NewDPFLG is assigned to OldDPFLG (Step S215), and then the process returns to Step S203.

When the timer 157 has not reached the predetermined time, the process up to Step S218 is repeated. When the timer 157 has not reached the predetermined time, the process returns to Step S203 again.

It is determined whether or not the state of the compressor 109 is the operation state (on) (Step S203). When the compressor 109 is in the off state (Step S203: No, point J' in FIG. 9), the off state (0) is stored in the storage variable NewDPFLG (Step S216), and the dew condensation prevention heater 155 is stopped for creating the dew condensation state of the atomization electrode 135 (Step S217, point K' in FIG. 9).

Next, the storage variable NewDPFLG is determined. When the storage variable is the off state (0) (Step S206: No) and also the storage variable OldDPFLG is the on state (1) (Step S219: Yes), it is determined that this is a timing when the compressor 109 as one of the determination timing setting units changes from the on state to the off state (a timing of time X4' in FIG. 9).

The high voltage stop signal is outputted to the voltage application unit 133 to stop the high voltage application to the voltage application unit 133 (Step S208), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the reference value in the high voltage stop state (Step S209).

Next, having determined that the high voltage is to be applied to the voltage application unit 133 in the electrostatic atomization apparatus 131, the high voltage start signal is outputted to the voltage application unit 133 (Step S210, point Z'5 in FIG. 9), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S211).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is not in the range (Step S212: No, point L' in FIG. 9), proper corona discharge does not occur. Hence, the control unit 146 outputs the high voltage stop signal to the voltage application unit 133 (Step S213, point Z'6 in FIG. 9). Following this, the timer 157 is reset (Step S214), and then the process returns to Step S203.

When the timer 157 has reached the predetermined time (a timing of time X5' in FIG. 9), it is determined whether or not the state of the compressor 109 is the operation state (on) (Step S203). When the compressor 109 is in the off state (Step S203: No, point M' in FIG. 9), the off state (0) is stored in NewDPFLG (Step S216), and the dew condensation prevention heater 155 is continuously stopped for creating the dew condensation state of the atomization electrode 135 (Step S217, point N' in FIG. 9).

Following this, NewDPFLG is determined (Step S206). When the storage variable is the off state (0) (Step S206: No) and also the storage variable OldDPFLG is not the on state (1) (Step S219: No), it is determined whether or not the timer 157 has reached the predetermined time (Step S220).

When the timer 157 has reached the predetermined time (Step S220: Yes), it is determined that the high voltage is to be applied to the voltage application unit 133 in the electrostatic atomization apparatus 131. Accordingly, the high voltage start signal is outputted to the voltage application unit 133 (Step S210, point Z'7 in FIG. 9), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S211).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is not in the range (Step S212: No, point O' in FIG. 9), proper corona discharge does not occur. Hence, the control unit 146 outputs the high voltage stop signal to the voltage application unit 133 (Step S213, point Z'8 in FIG. 9). Following this, the timer 157 is reset (Step S214), the storage variable NewDPFLG is assigned to OldDPFLG (Step S215), and then the process returns to Step S203.

When the timer 157 has reached the predetermined time (a timing of time X6' in FIG. 9), it is determined whether or not the state of the compressor 109 is the operation state (on) (Step S203). When the compressor 109 is in the off state (Step S203: No, point P' in FIG. 9), the off state (0) is stored in the storage variable NewDPFLG (Step S216), and the dew condensation prevention heater 155 is continuously stopped for creating the dew condensation state of the atomization electrode 135 (Step S217, point Q' in FIG. 9).

Following this, the storage variable NewDPFLG is determined (Step S206). When the storage variable is not the on state (1) (Step S206: No) and also the storage variable OldDPFLG is not the on state (1) (Step S219: No), it is determined whether or not the timer 157 has reached the predetermined time (Step S220).

When the timer 157 has reached the predetermined time (Step S220: Yes), it is determined that the high voltage is to be applied to the voltage application unit 133 in the electrostatic atomization apparatus 131. Accordingly, the high voltage start signal is outputted to the voltage application unit 133 (Step S210, point Z'9 in FIG. 9), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S211).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is in the range (Step S212: Yes, point R' in FIG. 9), it is determined that proper mist spray is performed in the atomization electrode 135 by corona discharge. Hence, the high voltage is continuously applied to the voltage application unit 133 to perform mist spray.

Following this, the timer 157 is reset (Step S214), the storage variable NewDPFLG is assigned to OldDPFLG (Step S215), and then the process returns to Step S203.

When the timer 157 has not reached the predetermined time, the above-mentioned process up to Step S220 is repeated. When the timer 157 has not reached the predetermined time (Step S220: No), the above-mentioned process is repeated again.

Thus, in the second embodiment, atomization state feedback control of repeatedly determining the atomization state and reflecting the determination result in the operation of the atomization unit 139 is performed. For example, in the control flowchart of FIGS. 10A and 10B, this atomization state feedback control indicates such a flow that repeatedly returns to control of determining the atomization state as designated by F2.

By repeating the feedback control in such a complex flow as described above, the atomization state determination unit 156 determines the atomization state of the atomization unit 139 according to the signal from the determination timing setting unit that sets the operation timing of the atomization state determination unit 156. The operation of the atomization unit 139 is controlled by the signal determined by the atomization state determination unit 156.

Through such atomization state feedback control whereby the atomization state determination is repeatedly performed at an efficient and accurate timing according to the timing setting unit and the result of the determination is reflected in the operation of the atomization unit 139, i.e., the atomization apparatus, the spray accuracy of the atomization unit 139 can be improved, with it being possible to achieve mist spray of an appropriate spray amount.

The above describes the case where the dew condensation prevention heater 155 is used for both the temperature adjustment in the storage compartment and the surface dew condensation prevention in the storage compartment. However, the use of independent heaters allows for a lower input of the heater for adjusting the temperature of the cooling pint 134, which contributes to finer control for the temperature adjustment of the cooling pin 134. As a result, the dew condensation state can be further stabilized to thereby stabilize the spray amount, so that the spray efficiency can be improved.

The above describes the case where, when the outside air temperature is relatively low, the dew condensation prevention heater 155 is controlled according to the state of the compressor 109. Alternatively, a timer that measures a fixed time may be provided so that, for example, a signal is outputted to the control unit 146 once every 10 minutes to perform such temperature adjustment of the cooling pin 134 that energizes the dew condensation prevention heater 155 for 10 minutes and, after 10 minutes, stops the dew condensation prevention heater 155. Moreover, this fixed time may be used as the detection timing to control the atomization state determination unit 156. When the outside air temperature is relatively low, the temperature of the inside temperature detection unit 150 is approximately constant, so that the closed state of the damper 145 increases, and the inside of the storage compartment tends to be in a high humidity condition. Accordingly, by finely controlling the temperature adjustment of the cooling pin 134, the dew condensation state can be more easily created even when the outside air temperature is low, with it being possible to improve the spray efficiency.

As described above, in the second embodiment, the compressor 109 for cooling the storage compartment in the refrigerator 100 is the determination timing setting unit. When the compressor 109 switches from on to off or from off to on, the atomization state determination unit 156 determines the atomization state of the atomization unit 139. Thus, the atomization state is determined by using, as the determination timing, the operation of the compressor 109 relating to the cooling state of cool air around the atomization unit 139. According to this structure, the dew condensation state and the spray state of the atomization unit 139 can be recognized at an accurate timing, so that the accuracy of determining the spray of the atomization unit 139 can be improved.

In addition, by setting the signal of the compressor 109 from on to off or from off to on as the detection timing, when there is water on the atomization unit 139, the high voltage is applied to the voltage application unit 133 until there is no more water. This improves the spray efficiency.

Furthermore, when there is no more water, the high voltage of the voltage application unit 133 is stopped, thereby reducing excess power consumption.

In the second embodiment, in the case where the environment in the storage compartment including the atomization unit 139 is estimated to change and especially in the case where the temperature state around the atomization unit 139 is estimated to change, the determination timing setting unit sets the determination timing when the compressor 109 changes from the on signal to the off signal or from the off signal to the on signal. At a predetermined temperature or higher, the atomization state determination unit 156 determines the atomization state of the atomization unit 156 where the determination timing of the determination timing setting unit is when the damper 145 for adjusting the temperature of the storage compartment switches from open to closed or from closed to open. In the case where the outside air temperature is relatively low, the closed state of the damper 145 increases, and it can be estimated that the atomization electrode 135 is more likely in the excessive dew condensation state. This being so, by changing the determination timing of the determination timing setting unit according to the outside air temperature, the influence of the outside air temperature can also be taken into consideration. Even when the installation condition of the refrigerator 100 changes, the dew condensation state and the spray state of the atomization unit 139 can be recognized at an appropriate and accurate timing, so that the accuracy of determining the spray of the atomization unit 139 can be improved.

In the second embodiment, when the outside air temperature detected by the outside air temperature detection unit 148 is equal to or lower than the predetermined temperature, the determination timing of the determination timing setting unit is a timing when the compressor 109 switches from on to off or from off to on. When the outside air temperature is relatively low, the opening/closing rate of the damper 145 significantly decreases and the closed state increases. In such a case, the atomization state of the atomization electrode 135 is determined with the on/off operation of the compressor 109 being mainly set as the timing setting unit. By taking the actual operation state of the refrigerator 100 into consideration in this manner, the dew condensation state and the spray state of the atomization unit 139 can be recognized at a more appropriate and accurate timing, so that the accuracy of determining the spray of the atomization unit 139 can be improved.

In the second embodiment, when the outside air temperature detected by the outside air temperature detection unit 148 is equal to or higher than the predetermined temperature, the determination timing of the determination timing setting unit is a timing when the damper 145 for adjusting the temperature of the storage compartment switches from open to closed or from closed to open as described in the first embodiment. When the outside air temperature is relatively high, the frequency with which the compressor 109 is in the off state is low, and the compressor 109 often continues to be in the on state. In such a case, the atomization state determination unit 156 determines the atomization state of the atomization unit 139 with the open-to-closed or closed-to-open switching of the damper 145 being mainly set as the timing setting unit. Hence, by taking the influence of the outside air temperature into consideration and further taking the actual operation state of the refrigerator 100 in the case such as where the installation condition of the refrigerator 100 changes into consideration, the dew condensation state and the spray state of the atomization unit 139 can be recognized at a more appropriate and accurate timing, so that the accuracy of determining the spray of the atomization unit 139 can be improved.

Thus, in the second embodiment, the outside air temperature detection unit 148 detects the outside air temperature of the refrigerator 100, and the determination timing setting unit that sets the operation timing of the atomization state determination unit 156 is changed according to the outside air temperature detected by the outside air temperature detection unit 148. Accordingly, in consideration of the influence of the outside air temperature, even in the case where the installation condition of the refrigerator 100 changes, the dew condensation state and the spray state of the atomization unit 139 can be recognized at an appropriate and accurate timing, so that the accuracy of determining the spray of the atomization unit 139 can be improved.

Besides, when there is no more water, the high voltage of the voltage application unit 133 is stopped, as a result of which the high voltage of the voltage application unit 133 is stopped until the next detection timing. This further reduces excess power consumption.

In the second embodiment, the outside air temperature detection unit 148 detects the outside air temperature of the refrigerator 100. When the outside air temperature detected by the outside air temperature detection unit 148 is equal to or lower than the predetermined temperature, the switching of the compressor 109 from on to off or from off to on is set as the detection timing to determine whether or not spray is performed in a proper atomization state. When the detected outside air temperature is equal to or higher than the predetermined temperature, the switching of the damper 145 for adjusting the temperature of the storage compartment from open to closed or from closed to open is set as the detection timing to determine whether or not spray is performed in a proper atomization state. When the outside air temperature is relatively low, the closed state of the damper 145 increases, and the atomization electrode 135 is more likely in the excessive dew condensation state. This being so, by changing the detection timing according to the outside air temperature, the atomization efficiency of the electrostatic atomization apparatus 131 can be improved without being affected by the outside air temperature.

### (Third Embodiment)

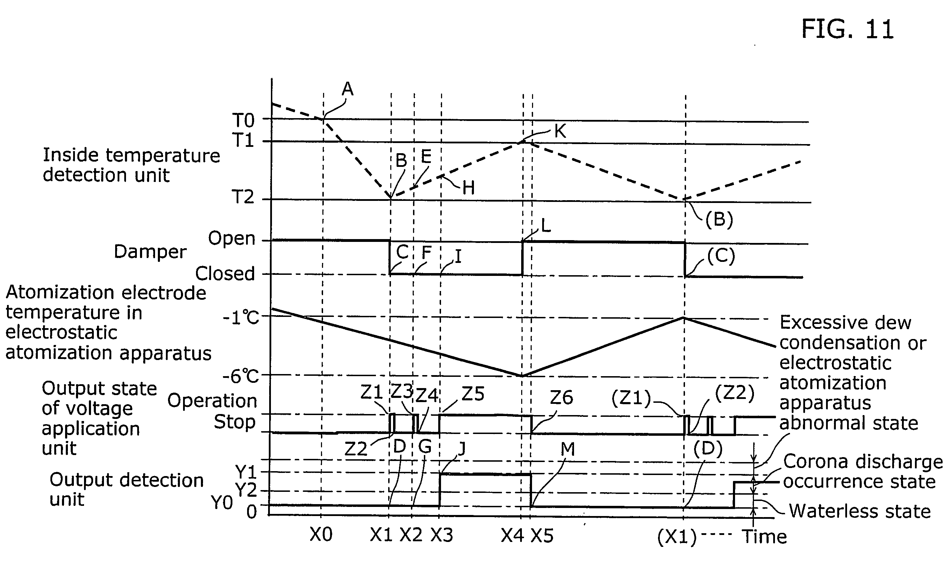

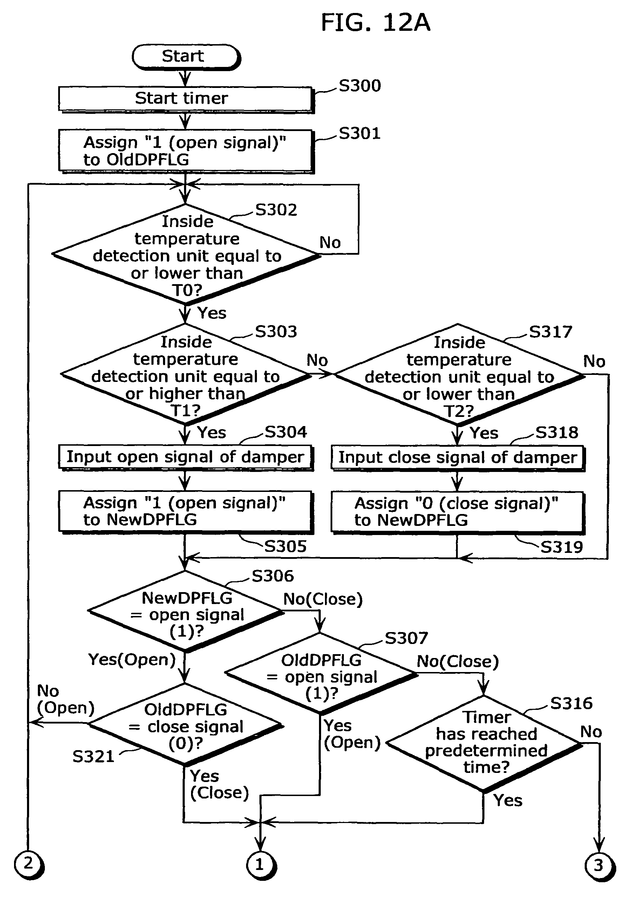

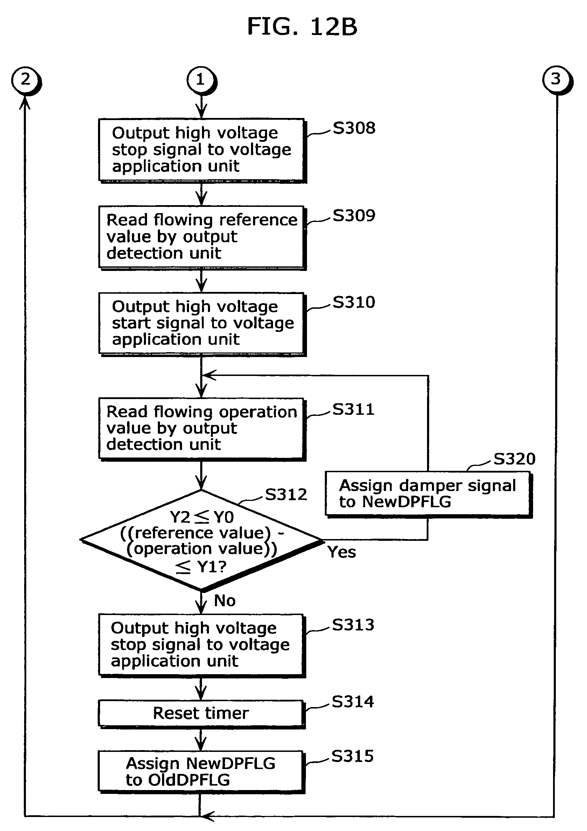

FIG. 11 is a timing chart showing an example of an operation of the refrigerator in the third embodiment of the present invention. FIGS. 12A and 12B are a control flowchart showing an example of control of the refrigerator in the third embodiment of the present invention.

Note that the same structures as the first and second embodiments are given the same numerals and their detailed description is omitted.

A detailed operation is described below, with reference to the timing chart of FIG. 11 and the control flowchart of FIGS. 12A and 12B.

First, the timer 157 starts (Step S300), and the open signal (1) as an initial value is stored in the storage variable OldDPFLG (Step S301). The atmospheric temperature in the storage compartment is detected by the inside temperature detection unit 150 provided in the storage compartment.

Following this, an output signal of the inside temperature detection unit 150 is inputted to the control unit 146. When the inside temperature detection unit 150 is equal to or lower than T0, the process goes to next Step S303. When the inside temperature detection unit 150 is not equal to or lower than T0, however, a forced stopping unit operates so as not to go to the next step until the inside temperature detection unit 150 is equal to or lower than T0 (a timing of time X0 in FIG. 1, point A).

Thus, the refrigerator 100 in the third embodiment includes the forced stopping unit that stops the electrostatic atomization apparatus 131 without operating it until a predetermined condition is met. For example, with regard to the inside temperature detection unit 150, when the refrigerator 100 is powered on, when the door is frequently opened/closed, or when there is a clearance because the door is not completely closed, there is a possibility that the temperature inside the storage compartment increases. In such a case where the inside temperature is high, priority is given to the operation of the refrigeration system for decreasing the inside temperature, while suppressing the operation of the electrostatic atomization apparatus 131.

In this case, until the storage compartment is cooled to a preset inside temperature, the damper 145 is in the open state and a large amount of air is blown from the cooling fan 133, and also the operation factor of the compressor 109 increases, so that a large amount of cool air flows into the vegetable compartment 107. This facilitates drying around the atomization unit 139. Therefore, even when the electrostatic atomization apparatus 131 is operated, water does not gather on the atomization electrode 135. In such a state, the operation of the electrostatic atomization apparatus 131 is stopped and the cooling system is given priority, thereby reducing power consumption required for the electrostatic atomization apparatus 131 and improving the energy-saving effect.

Moreover, when spray is performed while the inside temperature is high, mist particles of a relatively high temperature will end up being sprayed into the storage compartment. This causes deterioration of the stored contents such as vegetables. Accordingly, stopping the operation of the electrostatic atomization apparatus 131 until a predetermined inside temperature is reached also leads to improved freshness preservation.

In addition, it is also effective that the forced stopping unit stops the operation of the electrostatic atomization apparatus 131 to suppress mist spray during when a defrosting control unit is in operation. This defrosting control is such control whereby, in a refrigerator including a defrosting control unit for periodically performing defrosting in order to enhance operation efficiency of the cooler 112 during normal operation, a defrosting heater (the radiant heater 114) is energized to melt frost adhering to the cooler 112 by heat of the defrosting heater and thereby remove the frost adhering to the cooler 112 during the operation of the defrosting control unit or immediately after the operation of the defrosting control unit stops.

In this case, by flowing high humidity air generated by the frost melted through the defrosting control into the vegetable compartment 107, the vegetable compartment 107 is brought into a high humidity state, which facilitates the dew condensation state of the atomization electrode 135 when the electrostatic atomization apparatus 131 is later operated. Hence, the spray efficiency can be improved.

Thus, by adding such control by the forced stopping unit that suppresses atomization without going to the next step until a predetermined temperature is reached in the case where the temperature of the cooler 112 is high after power on or the temperature of the refrigerator compartment (not shown), the freezer compartment (not shown), or the like is high, unnecessary energization of the electrostatic atomization apparatus 131 and the dew condensation prevention heater 155 is prevented. This makes it possible to suppress a further temperature increase in the storage compartment caused by the operation of the atomization apparatus when the inside temperature is high, and reduce power consumption associated with such an operation. Accordingly, the atomization apparatus can be installed in the refrigerator energy-efficiently.

When the inside temperature detection unit 150 is equal to or lower than T0 in Step S302, the process goes to next Step S303 to determine whether or not the inside temperature detection unit 150 is equal to or higher than T1. When the inside temperature detection unit 150 is not equal to or higher than T1 (Step S303: No, point B in FIG. 11), it is also determined whether or not the inside temperature detection unit 150 is equal to or lower than T2 (Step S317). When the inside temperature detection unit 150 is equal to or lower than T2 (Step S317: Yes, point B in FIG. 11), the damper 145 outputs the signal of the closing which is inputted to the control unit 146 (Step S318, point C in FIG. 11), and the close signal (0) is stored in the storage variable NewDPFLG as the operation signal state (Step S319).

Following this, the storage variable NewDPFLG is determined. When the storage variable is the close signal (0) (Step S306: No), the storage variable OldDPFLG is determined next. When the storage variable is the open signal (1) (Step S307: Yes), it is determined that this is a timing (a timing of time X1 in FIG. 11) when the damper 145 changes from the open signal to the close signal.

At this time, the high voltage is applied between the atomization electrode 135 and the counter electrode 136. Since the current flowing here is extremely small at a several µA level, when the current value is converted to the voltage value, a variation in circuit component and a temperature variation in component occur, causing the determined current absolute value to differ depending on component. However, the difference which represents the change in current value corresponding to the change in atomization amount shows a constant relation regardless of such variations, so that the atomization amount can be accurately determined by reading the reference voltage each time and performing the comparison.

In detail, with the reference voltage when not performing atomization being set as the reference value which is an origin, the absolute value of the difference of the atomization amount can be determined by subtraction from the reference voltage which varies. Accordingly, the control unit 146 outputs the high voltage stop signal to the voltage application unit 133 to stop the high voltage application to the voltage application unit 133 (Step S308), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the reference value in the high voltage stop state (Step S309).

Next, having determined that the high voltage is to be applied to the voltage application unit 133 in the electrostatic atomization apparatus 131 in order to determine the atomization state, the control unit 146 outputs the high voltage start signal to the voltage application unit 133 (Step S310, point Z1 in FIG. 11), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the operation value in the high voltage operation state (Step S311).

When the difference of the operation value in the high voltage operation state from the reference value in the high voltage stop state is not in the range of the upper limit Y1 to the lower limit Y2 of the current or the applied voltage stored in advance (Step S312: No, point D in FIG. 11), the control unit 146 can estimate that proper corona discharge does not occur. Hence, the control unit 146 outputs the high voltage stop signal to the voltage application unit 133 to stop the high voltage application to the voltage application unit 133 (Step S313, point Z2 in FIG. 11). Following this, the timer 157 is reset (Step S314), the storage variable NewDPFLG is assigned to OldDPFLG (Step S315), and then the process returns to Step S302.

After the timer 157 has reached the predetermined time (a timing of time X2 in FIG. 11), when the inside temperature detection unit 150 is equal to or lower than T0 (Step S302), the process goes to next Step S303. When the inside temperature detection unit 150 is not equal to or lower than T0, however, the process does not go to the next step by the forced stopping unit, until the inside temperature detection unit 150 is equal to or lower than T0 (Step S302).

When the inside temperature detection unit 150 is equal to or lower than T0 in Step S302, the process goes to next Step S303 to determine whether or not the inside temperature detection unit 150 is equal to or higher than T1. When the inside temperature detection unit 150 is not equal to or higher than T1 (Step S303: No, point E in FIG. 11), it is determined whether or not the inside temperature detection unit 150 is equal to or lower than T2 (Step S317). When the inside temperature detection unit 150 is not equal to or lower than T2 (Step S317: No, point E in FIG. 11), it is determined that the close signal of the damper 145 is continued (point F in FIG. 11), and the process goes to the next step.

Here, though not shown, when the outside air temperature is relatively low, the closed state of the damper 145 increases, and the atomization electrode 135 is more likely in the excessive dew condensation state. This being so, by energizing the dew condensation prevention heater 155 with a higher input than usual, it is possible to set such an environment that eases the dew condensation state and the drying state.

Moreover, the storage variable NewDPFLG is determined (Step S306). When the storage variable is not the open signal (1) (Step S306: No), the storage variable OldDPFLG is also determined. When the storage variable is not the open signal (1) (Step S307: No), it indicates that the close signal (0) of the damper 145 is continued.

Following this, it is determined whether or not the timer 157 has reached the predetermined time (Step S316). When the timer 157 has reached the predetermined time (Step S316: Yes), the control unit 146 outputs the high voltage stop signal to the voltage application unit 133 to stop the high voltage application to the voltage application unit 133 (Step S308), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the reference value in the high voltage stop state (Step S309).

Next, having determined that the high voltage is to be applied to the voltage application unit 133 in the electrostatic atomization apparatus 131 in order to determine the atomization state, the control unit 146 outputs the high voltage start signal to the voltage application unit 133 (Step S310, point Z3 in FIG. 11), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the operation value in the high voltage operation state (Step S311).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is not in the range (Step S312: No, point G in FIG. 11), it is determined that proper corona discharge does not occur in the atomization electrode 135. Hence, the control unit 146 outputs the high voltage stop signal to the voltage application unit 133 (Step S313, point Z4 in FIG. 11). Next, the timer 157 is reset (Step S314), the storage variable NewDPFLG is assigned to OldDPFLG (Step S315), and the process returns to Step S302.

After the timer 157 has reached the predetermined time (a timing of time X3 in FIG. 11), when the inside temperature detection unit 150 is equal to or lower than T0 (Step S302), the process goes to next Step S303. When the inside temperature detection unit 150 is not equal to or lower than T0, however, the process does not go to the next step until the inside temperature detection unit 150 is equal to or lower than T0 (Step S302).

When the inside temperature detection unit 150 is equal to or lower than T0 in Step S302, the process goes to next Step S303 to determine whether or not the inside temperature detection unit 150 is equal to or higher than T1. When the inside temperature detection unit 150 is not equal to or higher than T1 (Step S303: No, point H in FIG. 11), it is also determined whether or not the inside temperature detection unit 150 is equal to or lower than T2 (Step S317). When the inside temperature detection unit 150 is not equal to or lower than T2 (Step S317: No, point H in FIG. 11), it is determined that the close signal of the damper 145 continues (point I in FIG. 11), and the process goes to the next step.

Here, though not shown, when the outside air temperature is relatively low, the closed state of the damper 145 increases, and the atomization electrode 135 is more likely in the excessive dew condensation state. This being so, by energizing the dew condensation prevention heater 155 with a higher input than usual, it is possible to set such an environment that eases the dew condensation state and the drying state.

Next, the storage variable NewDPFLG is determined (Step S306). When the storage variable is not the open signal (1) (Step S306: No), the storage variable OldDPFLG is determined. When the storage variable is not the open signal (1) (Step S307 : No), it indicates that the close signal (0) of the damper 145 is continued.

It is then determined whether or not the timer 157 has reached the predetermined time (Step S316). When the timer 157 has reached the predetermined time (Step S316: Yes), the control unit 146 outputs the high voltage stop signal to the voltage application unit 133 to stop the high voltage application to the voltage application unit 133 (Step S308), and the high voltage is applied between the atomization electrode 135 and the counter electrode 136. The output detection unit 158 detects the current (discharge current) flowing between the electrodes or the voltage (discharge voltage) applied between the electrodes, and inputs the detected current or voltage to the control unit 146. This is set as the reference value in the high voltage stop state (Step S309).

Next, having determined that the high voltage is to be applied to the voltage application unit 133 in the electrostatic atomization apparatus 131 in order to determine the atomization state, the control unit 146 outputs the high voltage start signal to the voltage application unit 133 (Step S310, point Z5 in FIG. 11), and the high voltage is applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S311).

The control unit 146 determines whether or not the difference of the operation value in the high voltage operation state from the reference value in the high voltage stop state is in the range of the upper limit Y1 to the lower limit Y2 of the current or the applied voltage stored in advance. When the difference is in the range (Step S312: Yes, point J in FIG. 11), it is determined that proper corona discharge occurs in the atomization electrode 135 to create the atomization state. After this, the high voltage is again applied between the atomization electrode 135 and the counter electrode 136. The output detection unit 158 detects the flowing current (discharge current) or the applied voltage (discharge voltage), and inputs the detected current or voltage to the control unit 146. This is set as the operation value in the high voltage operation state (Step S311).

The control unit 146 does not go to the next step unless the difference of the operation value in the high voltage operation state from the reference value in the high voltage stop state is not in the range of the upper limit Y1 to the lower limit Y2 of the current or the applied voltage stored in advance (Step S312: Yes, point J in FIG. 11, a timing of time X4 in FIG. 11). In this state, when the inside temperature increases and the detected inside temperature is equal to or higher than T1 (point K in FIG. 11), the open signal (1) is stored in the storage variable NewDPFLG (Step S320). Here, the damper 145 switches from the closed state to the open state (point L in FIG. 11), as a result of which relatively dry air flows. This facilitates drying of the atomization electrode 135 while continuing atomization in the case where there is water. By creating such a state that eases dew condensation in this way, the dew condensation state can be stabilized.

Here, though not shown, since the refrigerator 100 is in a closed loop state, a protecting function based on an elapsed time may be provided so that the reference value in the high voltage stop state is inputted after the atomization state continues for a predetermined time. In so doing, even when a malfunction occurs due to external disturbances, the atomization state can be stopped. This makes it possible to suppress a temperature increase in the storage compartment caused by a malfunction of the atomization apparatus and reduce power consumption, contributing to energy efficiency.

Though not shown, when the control unit 146 detects the open state of the door of the storage compartment, the control unit 146 outputs the high voltage stop signal to the voltage application unit 133 to stop the output of the high voltage to the electrostatic atomization apparatus 131. By stopping atomization in the open state of the door of the storage compartment in this way, the wall surface in the storage compartment can be kept from dew condensation. Even when the user touches the electrostatic atomization apparatus 131, discomfort by an electric shock can be avoided.

When the difference is not in the range of the upper limit Y1 to the lower limit Y2 of the current or the applied voltage stored in advance (Step S312: No, point M in FIG. 11, a timing of time X5 in FIG. 11), it is determined that proper corona discharge does not occur in the atomization electrode 135. Hence, the control unit 146 outputs the high voltage stop signal to the voltage application unit 133 (Step S313, point Z6 in FIG. 11).

Following this, the timer 157 is reset (Step S314), the storage variable NewDPFLG is assigned to OldDPFLG (Step S315), and then the process returns to Step S302.

From time X5 to time X6, the following process is performed. When the inside temperature detection unit 150 is equal to or lower than T0 (Step S302), the process goes to next Step S303 to determine whether or not the inside temperature detection unit 150 is equal to or higher than T1. When the inside temperature detection unit 150 is not equal to or higher than T1 (Step S303: No), it is determined whether or not the inside temperature detection unit 150 is equal to or lower than T2 (Step S317). When the inside temperature detection unit 150 is not equal to or lower than T2 (Step S317: No), it is determined that the close signal of the damper 145 continues, and the process goes to the next step.

The storage variable NewDPFLG is determined (Step S306). When the storage variable is the open signal (1) (Step S306: Yes), the storage variable OldDPFLG is determined. When the storage variable is the open signal (1), the process advances (Step S321: No). When the storage variable is the close signal (0), the process advances (Step S321: Yes). Subsequently, the above-mentioned operation is repeated.

As described above, in the third embodiment, when determining that proper spray is performed, the atomization state of the atomization unit 139 is determined not at the timing when the timing setting unit operates. By constantly and linearly monitoring the value detected by the output detection unit 158, the atomization state determination unit 156 constantly determines whether or not the atomization state is in the proper range (the range of the atomization occurrence state (1) in FIG. 5B described in the first and second embodiments is used as the proper range). Upon determining that proper spray is not performed, the energization of the voltage application unit 133 is stopped. After this, the atomization state of the atomization unit 139 is determined at the timing when the timing setting unit operates. That is, the atomization state of the atomization unit 139 is determined at the timing when the timing setting unit operates, until the value detected by the output detection unit 158 becomes in the range where atomization is resumed. According to this structure, it is possible to determine whether atomization is to be started or stopped, with more accuracy.

In the state where the mist is sprayed, the spray amount is constantly monitored and controlled to be in the proper range. Hence, the dew condensation state and the spray state of the atomization unit 139 can be recognized at a more appropriate and accurate timing, so that the accuracy of determining the spray of the atomization unit 139 can be improved. Moreover, by performing such appropriate atomization, a reduction in power consumption can be achieved in the case of installing the atomization apparatus in the refrigerator, with it being possible to provide an energy-efficient refrigerator.

### (Fourth Embodiment)

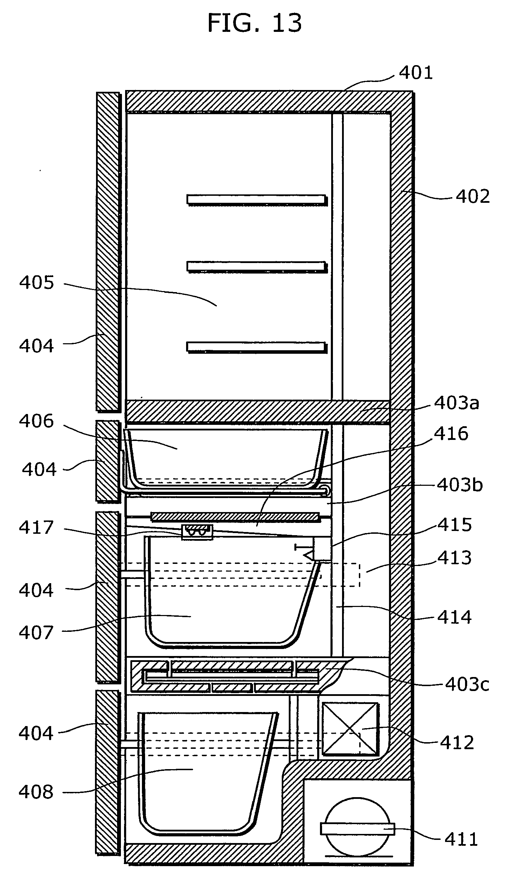

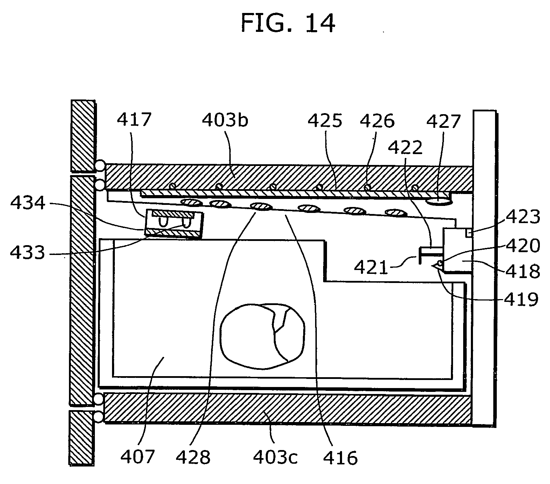

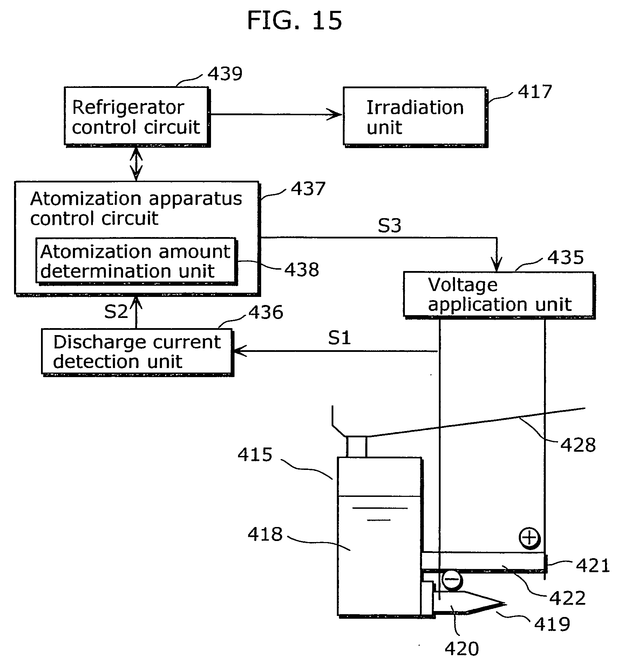

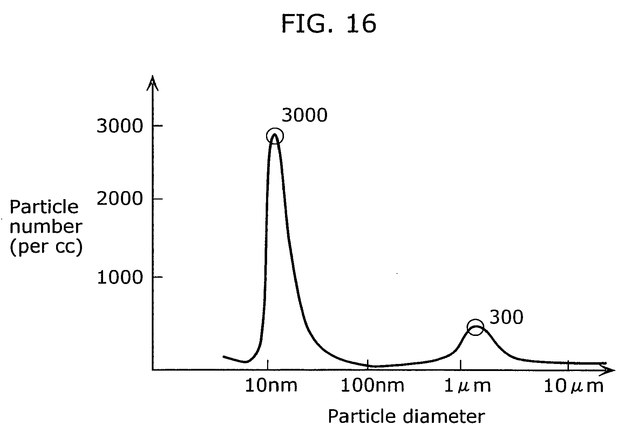

FIG. 13 is a longitudinal sectional view showing a left longitudinal section when a refrigerator in a fourth embodiment not forming part of the present invention is cut into left and right. FIG. 14 is a relevant part enlarged sectional view showing a left longitudinal section when a vegetable compartment in the refrigerator in the fourth embodiment is cut into left and right. FIG. 15 is a block diagram showing a control structure related to an electrostatic atomization apparatus in the refrigerator in the fourth embodiment. FIG. 16 is a characteristic chart showing a relation between a particle diameter and a particle number of a mist generated by the electrostatic atomization apparatus in the refrigerator in the fourth embodiment.

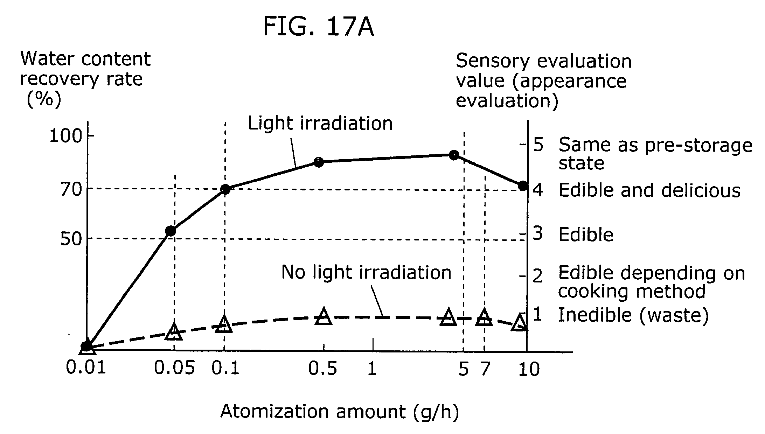

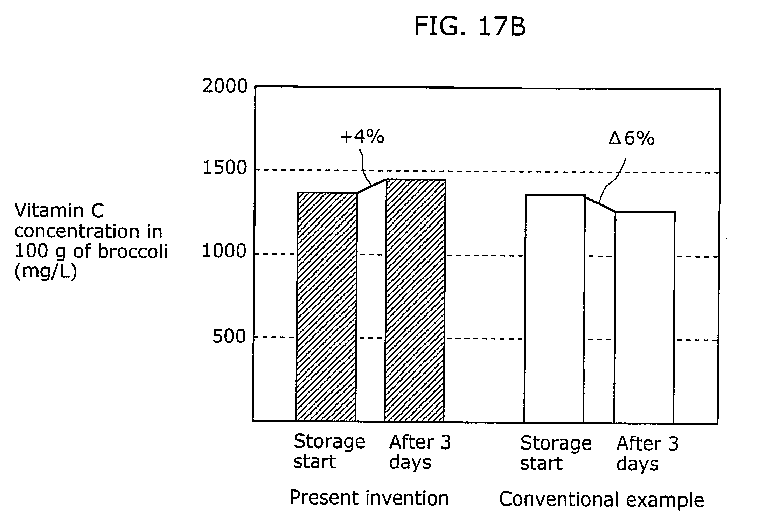

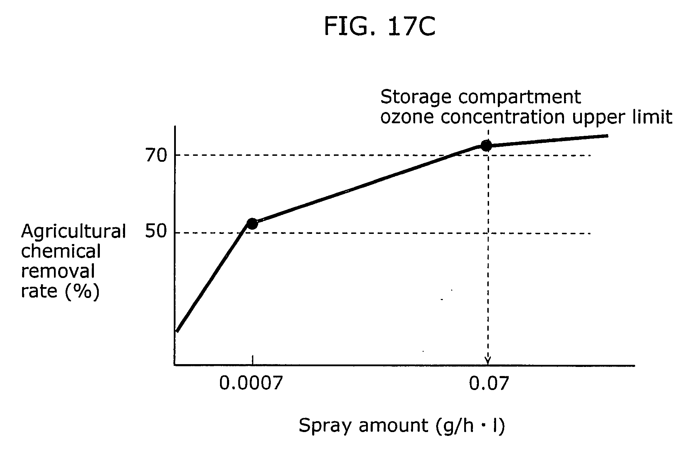

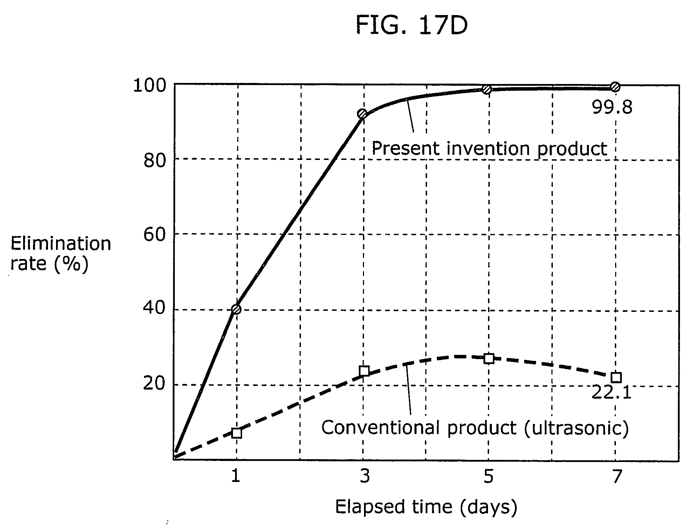

FIG. 17A is a characteristic chart showing a relation between a mist spray amount and a water content recovery effect for a wilting vegetable and a relation between a mist spray amount and a vegetable appearance sensory evaluation value in the refrigerator in the fourth embodiment. FIG. 17B is a characteristic chart showing a change in vitamin C amount in the refrigerator in the fourth embodiment, as compared with a conventional example. FIG. 17C is a characteristic chart showing agricultural chemical removal performance of the electrostatic atomization apparatus in the refrigerator in the fourth embodiment. FIG. 17D is a characteristic chart showing microbial elimination performance of the electrostatic atomization apparatus in the refrigerator in the fourth embodiment.

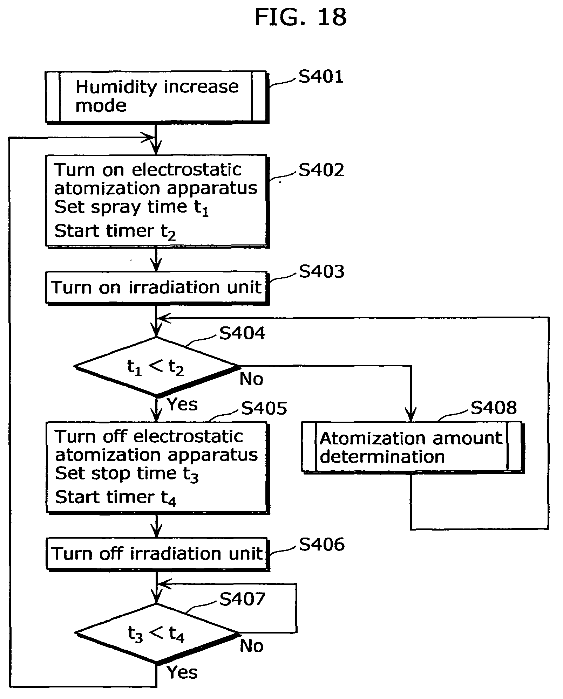

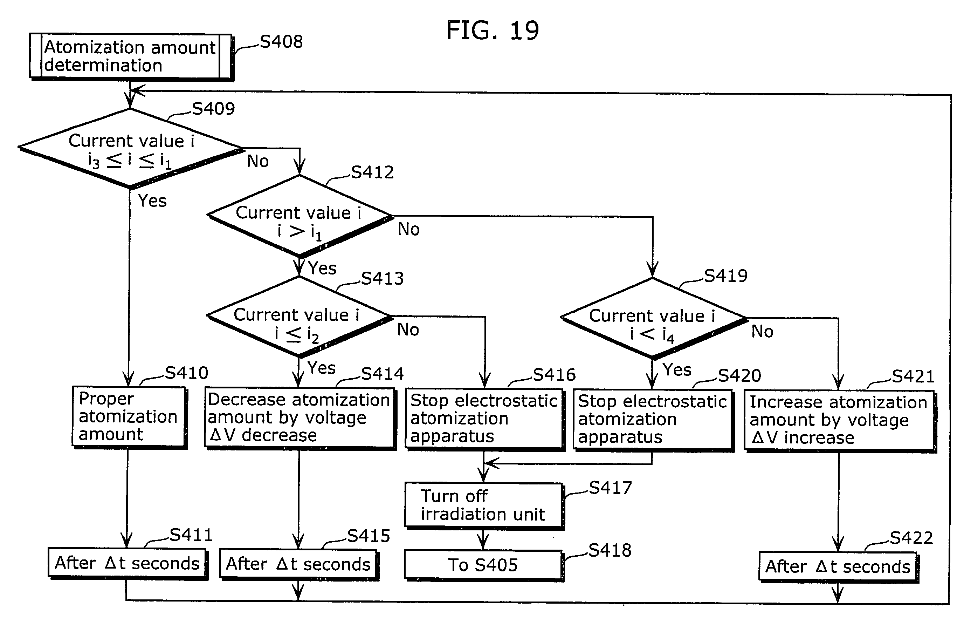

FIG. 18 is a flowchart showing control of the refrigerator in the fourth embodiment. FIG. 19 is a flowchart showing control in the case of going to an atomization amount determination step in the flowchart shown in FIG. 18.

In FIGS. 13, 14, and 15, a refrigerator 401 is thermally insulated by a main body (heat-insulating main body) 402, partitions 403a, 403b, and 403c for creating sections for storage compartments, and doors 404 for making these sections closed spaces. A refrigerator compartment 405, a switch compartment 406, a vegetable compartment 407, and a freezer compartment 408 are arranged from above, forming storage spaces of different temperatures. Of these storage compartments, the vegetable compartment 407 is cooled at 4°C to 6°C with a humidity of about 80%RH or more (when storing foods), when there is no opening/closing operation of the door 404.

A refrigeration cycle for cooling the refrigerator 401 is made by sequentially connecting, by piping, a compressor 411, a condenser, a pressure reduction device (not shown) such as an expansion valve and a capillary tube, and an evaporator 412 in a loop so that a refrigerant is circulated.

There is also an air path 413 for conveying low temperature air generated by the evaporator 412 to each storage compartment space or collecting the air heat-exchanged in the storage compartment space to the evaporator 412. The air path 413 is thermally insulated from each storage compartment by a partition 414.

Moreover, an electrostatic atomization apparatus 415 as a spray unit, a water collection unit 416 for supplying water to the spray unit (the electrostatic atomization apparatus 415), and an irradiation unit 417 for controlling stomata of vegetables are formed in the vegetable compartment 407.

The electrostatic atomization apparatus 415 includes an atomization tank 418 for holding water from the water collection unit 416, a nozzle tip 419 in a nozzle form for spraying to the vegetable compartment 407, and an atomization electrode 420 disposed at a position near the nozzle tip 419 that is in contact with water. A counter electrode 421 is disposed near an opening of the nozzle tip 419 for spray so as to maintain a constant distance, and a counter electrode holder 422 is attached to hold the counter electrode 421. A negative pole of a voltage application unit 435 generating a high voltage is electrically connected to the atomization electrode 420, and a positive pole of the voltage application unit 435 is electrically connected to the counter electrode 421. The electrostatic atomization apparatus 415 is attached to a water collection cover 428 or the partition 414 by an attachment member connection part 423.

Water droplets of a liquid (water) supplied and adhering to the nozzle tip 419 are finely divided by electrostatic energy of a high voltage applied between the application electrode 420 and the counter electrode 421. Since the liquid droplets are electrically charged, the liquid droplets are further atomized into particles of several nm to several µm by Rayleigh fission, and sprayed into the vegetable compartment 407.

The water collection unit 416 is installed at the bottom of the partition 403b and in an upper part of the vegetable compartment 407. A cooling plate 425 is made of a high heat conductive metal such as aluminum or stainless steel or a resin, and a heating unit 426 such as a PTC heater, a sheet heating element, or a heater formed of, for example, a nichrome wire is brought into contact with one surface of the cooling plate 425. For adjusting the temperature of the cooling plate 425, a duty factor of the heating unit 426 is determined by a temperature detected by a cooling plate temperature detection unit 427. Thus, temperature control of the cooling plate 425 is performed. The water collection cover 428 for receiving dew condensation water generated on the cooling plate 425 is installed underneath.

The irradiation unit 417 is, for example, a blue LED 433, and applies light including blue light with a center wavelength of 470 nm. The irradiation unit 417 also includes a diffusion plate 434 for light diffusivity enhancement and component protection.

In FIG. 15, in the electrostatic atomization apparatus 415, a high voltage is applied between the atomization electrode 420 and the counter electrode 421 by the voltage application unit 435. A discharge current detection unit 436 detects a current value at the time of application as a signal S1, and inputs the signal to an atomization apparatus control circuit 437 which is a control unit as a signal S2. An atomization amount determination unit 438 recognizes an atomization state, and the atomization apparatus control circuit 437 outputs a signal S3 to adjust the output voltage of the voltage application unit 435 and the like. The control unit also performs communication between the atomization apparatus control circuit 437 and a control circuit 439 of the main body of the refrigerator 401, and determines the operation of the irradiation unit 417.

An operation and effects of the refrigerator having the above-mentioned structure are described below.

Usually, some of vegetables and fruits stored in the vegetable compartment 407 are in a rather wilted state as a result of transpiration on the way home from shopping or transpiration during storage. Their storage environment varies according to an outside air temperature variation, a door opening/closing operation, and a refrigeration cycle operation state. As the storage environment becomes more severe, transpiration is accelerated and the vegetables and fruits are more likely to wilt.

In view of this, by converting a water vapor generated in the storage compartment (vegetable compartment 407) as a result of opening/closing of the door 404, vegetable respiration, and the like into a liquid by dew condensation and operating the electrostatic atomization apparatus 415, the fine mist is sprayed into the vegetable compartment 407 to quickly humidify the inside of the storage compartment.

An excess water vapor in the vegetable compartment 407 builds up dew condensation on the cooling plate 425. Water droplets adhering to the cooling plate 425 grow and drop on the water collection cover 428 under its own weight, flow on the water collection cover 428, and are retained in the atomization tank 418 of the electrostatic atomization apparatus 415. The dew condensation water is then atomized from the nozzle tip 419 of the electrostatic atomization apparatus 415, and sprayed into the vegetable compartment 407.

At this time, the voltage application unit 435 applies a high voltage (for example, 10 kV) between the atomization electrode 420 near the nozzle tip 419 of the electrostatic atomization apparatus 415 and the counter electrode 421, where the atomization electrode 420 is on a negative voltage side and the counter electrode 421 is on a positive voltage side. This causes corona discharge to occur between the electrodes that are apart from each other by, for example, 15 mm. As a result, atomization occurs from the nozzle tip 419 near the atomization electrode 420, and a charged invisible nano-level fine mist of about 1 µm or less, accompanied by ozone, OH radicals, and so on, is generated. The voltage applied between the electrodes is an extremely high voltage of 2 kV to 10 kV. However, a discharge current value at this time is at a µA level, and therefore an input is extremely low, about 1 W to 3 W. Nevertheless, the generated fine mist is about 1 g/h, so that the vegetable compartment 407 can be sufficiently atomized and humidified.

When the discharge current value is inputted to the discharge current detection unit 436 as the signal S1, the discharge current detection unit 436 converts the current value to the digital or analog voltage signal S2 that can be easily operated in a CPU and the like, and outputs the signal to the atomization amount determination unit 438. Following this, the atomization amount determination unit 438 converts the discharge current value to an atomization amount (it has been experimentally found that they are correlated with each other), and outputs the control signal S3 to the voltage application unit 435 so that the atomization amount is limited to no more than a predetermined atomization amount. Lastly, the voltage application unit 435 changes the voltage value to be applied, and generates the high voltage. Subsequently, feedback control is performed while monitoring the discharge current value.

As shown in FIG. 16, the mist sprayed from the nozzle tip 419 has two peaks at about several tens of nm and several µm. The nano-level fine mist adhering to the vegetable surfaces contains a large amount of OH radicals and the like. Such a nano-level fine mist is effective in sterilization, antimicrobial activity, microbial elimination, and so on, and also allows for agricultural chemical removal by oxidative decomposition and stimulates increases in nutrient of the vegetables such as vitamin C through antioxidation. Moreover, though not containing a large amount of radicals, a micro-level fine mist can adhere to the vegetable surfaces and moisturize around the vegetable surfaces.

During this time, though fine water droplets adhere to the vegetable surfaces, respiration is not obstructed because there are also surfaces in contact with the air, so that no water rot occurs. Accordingly, the vegetable compartment 407 becomes high in humidity, and at the same time the humidity of the vegetable surfaces and the humidity in the storage compartment (vegetable compartment 407) are brought into a condition of equilibrium. Hence, transpiration from the vegetable surfaces can be prevented. In addition, the adhering mist penetrates into tissues via intercellular spaces of the surfaces of the vegetables and fruits, as a result of which water is supplied into wilted cells to resolve the wilting by cell turgor pressure, and the vegetables and fruits return to a fresh state.

During the operation of the electrostatic atomization apparatus 415, the irradiation unit 417 is turned on and irradiates the vegetables and fruits stored in the vegetable compartment 407. The irradiation unit 417 is, for example, the blue LED 433 or a lamp covered with a material allowing only blue light to pass through, and applies light including blue light with a center wavelength of 470 nm. The blue light applied here is weak light with light photons of about 10 µmol/(m²·s).

Stomata on the epidermis surfaces of the vegetables and fruits irradiated with the weak blue light increase in stomatal aperture when compared with a normal state, due to light stimulation of the blue light. This being so, spaces in the stomata expand, apparent relative humidity in the spaces decreases, and the equilibrium condition is lost, creating a state where water can be easily absorbed. Therefore, the mist adhering to the surfaces of the vegetables and fruits penetrates into tissues from the surfaces of the vegetables and fruits in a stomata open state, as a result of which water is supplied into cells that have wilted due to moisture evaporation, and the vegetables return to a fresh state. Thus, freshness can be recovered.

FIG. 17A is a characteristic chart showing a relation between a water content recovery effect and an atomization amount for a wilting vegetable, and a relation between a vegetable appearance sensory evaluation value and a mist spray amount. This experiment has been conducted in a vegetable compartment of 70 liters, and so each spray amount mentioned below is a spray amount per 70 liters.

As shown in FIG. 17A, in the case of performing light irradiation, the vegetable water content recovery effect is 50% or more in a range of 0.05 g/h to 10 g/h (per liter = 0.0007 to 0.14 g/h·l).

When the mist atomization amount is excessively small, the amount of water released to outside from stomata of the vegetable cannot be exceeded, and therefore water cannot be supplied to the inside of the vegetable. In addition, a contact frequency of the mist and the stomata in an open state decreases, so that water cannot penetrate into the vegetable easily.

The experiment demonstrates that a lower limit of the spray amount is 0.05 g/h.

When the mist atomization amount is excessively large, on the other hand, a water content tolerance in the vegetable is exceeded, and water which cannot be taken in the vegetable will end up adhering to the outside of the vegetable. Such water causes water rot from a part of the vegetable surface, thereby damaging the vegetable.

A range of 10 g/h or more induces such a phenomenon where excess water adheres to the vegetable surface and causes quality deterioration of the vegetable such as water rot, which is unsuitable as the experiment. Accordingly, experimental results of 10 g/h (per liter = 0.15 g/h·l) or more are omitted because they cannot be adopted due to vegetable quality deterioration.

In the case of performing light irradiation, the vegetable water content recovery effect is 70% or more in a range of 0.1 g/h to 10 g/h (per liter = 0.0015 to 0.14 g/h·l). When the lower limit of the mist spray amount is increased to about 0.1 g/h or more in this way, the contact frequency with the stomata in an open state becomes sufficiently high, as a result of which the mist actively penetrates into the vegetable.

In the case of not performing light irradiation, there is no range where the vegetable water content recovery effect is 50% or more, and the water content recovery rate is below 10% in every spray amount. As shown in FIG. 17A, in the case of not performing light irradiation, the stomata are not sufficiently open, and therefore water cannot penetrate into the vegetable unless it has a sufficiently small particle diameter.

FIG. 17B is a characteristic chart showing a change in vitamin C amount when the fine mist according to the present invention is sprayed, where a vitamin C concentration upon storage start is set to 100. This experiment observes a change in vitamin C amount of broccoli when an average amount of vegetables (about 6 kg, 15 kinds of vegetables) are stored in a vegetable compartment of 70 liters for three days and a fine mist of about 0.5 g/h is sprayed, as compared with an existing refrigerator.

Typically, a decrease in vitamin C amount can be suppressed by high humidity and low temperature in an environment of a vegetable compartment of a refrigerator, but the vitamin C amount decreases in proportion to the number of days elapsed. To maintain or increase the vitamin C amount, antioxidation, a stimulus such as light, and the like need to be applied to vegetables.

In view of this, in the fourth embodiment of the present invention, vegetables are stimulated by OH radicals or low concentration ozone generated in electrostatic atomization, thereby increasing the vitamin C amount.

As shown in FIG. 17B, while the vitamin C amount decreases by about 6% after thee days from the storage start in a conventional product, the vitamin C concentration of broccoli increases by about 4% after three days in the refrigerator according to the present invention. From this, it can be understood that the stimulation of OH radicals or ozone enables the vegetable to increase in vitamin C amount.

FIG. 17C is a characteristic chart showing a relation between an agricultural chemical removal effect and a mist spray amount when the fine mist is sprayed. In this experiment, a removal process is carried out by spraying the fine mist according to the present invention over 10 grape tomatoes to which malathion of about 3 ppm is attached, with about 0.5 g/h for 12 hours. A remaining malathion concentration after the process is measured by gas chromatography (GC) to calculate a removal rate.

As is clear from FIG. 17C, a spray amount of 0.0007 g/h·L or more is needed to achieve a malathion removal rate of about 50%, and the agricultural chemical removal effect increases with the spray amount.

When the spray amount exceeds 0.07 g/h·L, though the agricultural chemical removal effect can be attained, the generated ozone concentration exceeds 0.03 ppm, making it difficult to apply to household refrigerators in terms of human safety. Note that the ozone concentration of 0.03 ppm does not have a significant ozone odor, and is an upper limit of the ozone concentration that achieves the agricultural chemical decomposition effect without causing any adverse effect such as tissue damage on vegetables. Hence, a proper spray amount range is 0.0007 g/h·L to 0.07 g/h·L.

FIG. 17D is a characteristic chart showing a microbial elimination effect when the fine mist is sprayed. In this experiment, Escherichia coil is placed in a container of 70 L in advance, the fine mist according to the present invention is sprayed with 1 g/h, and a change in reduction rate of the Escherichia coli number is measured over time. A result when the same amount of spray is performed by an ultrasonic atomization apparatus is shown as a comparison.

As is clear from FIG. 17D, a present invention product exhibits a higher microbial elimination rate than a conventional product, achieving 99.8% elimination after seven days. In this way, vegetables, containers, and the like can be kept clean.

A detailed operation is described below, with reference to the control flowchart of FIGS. 18 and 19.

Having entered a humidity increase mode in Step S401, the electrostatic atomization apparatus 415 is turned on, a spray time t1 is set, a timer t2 is started, and a mist is sprayed into the vegetable compartment 407 in Step S402. Following this, the irradiation unit 417 is turned on in Step S403. As a result, the blue LED 433 illuminates, causing an increase in stomatal aperture of vegetables. This makes it easier for the mist adhering to the vegetable surfaces to be taken into the vegetables from stomata and intercellular spaces.

When the timer t2 exceeds the set time t1 in Step S404, the electrostatic atomization apparatus 415 is turned off, the timer t2 is reset, a stop time t3 is set, and a timer t4 is started. Moreover, the irradiation unit 417 is turned off in Step S406. When the timer t4 exceeds the stop time t3 in Step S407, the timer t4 is reset, and the process returns to Step S402.

When the timer t2 does not exceed the spray time t1 in Step S404, the process goes to an atomization amount determination mode of Step S408 shown in FIG. 19.

Going to Step S408, first a detected current value i is read and determined in Step S409. When the detected current value i is equal to or lower than a preprogrammed first value i1 and equal to or higher than a preprogrammed third value i3, it is determined in Step S410 that the atomization amount of the fine mist sprayed from the nozzle tip 419 near the atomization electrode 420 is proper. In this case, after waiting for Δt seconds, the process returns to Step S409 and the determination is repeated.

When the detected current value i is not in the range of equal to or higher than the third value i3 and equal to or lower than the first value i1, the process goes to Step S412 to control the current value and the input by varying the voltage applied between the atomization electrode 420 and the counter electrode 421.

First, when the detected current value i is determined to be higher than the first value i1 in Step S412, the process goes to Step S413. When the detected current is equal to or lower than a second value i2 in Step S413, the current value and the input are reduced by decreasing the voltage applied between the atomization electrode 420 and the counter electrode 421 by a preset voltage ΔV, thereby suppressing air discharge and reducing the atomization amount.

When the detected current value i is higher than the second value i2 in Step S413, it is believed that a large current value induces air discharge, as a result of which the atomization amount exceeds an upper limit. This is estimated to be such a situation where there is a large amount of spray or there is no water at the nozzle tip 419 near the atomization electrode 420. To ensure safety of the electrostatic atomization apparatus 415 and the refrigerator 401, the voltage applied between the atomization electrode 420 and the counter electrode 421 is decreased to zero to stop the electrostatic atomization apparatus 415 in Step S416. Moreover, the irradiation unit 417 is stopped in Step S417, and then the process goes to Step S405.

When the detected current value i is lower than the third value i3 in Step S412, the process goes to Step S419. When the detected current value i is lower than a fourth value i4 in Step S419, it is believed that some kind of abnormality such as a break occurs in the control circuit. Accordingly, the electrostatic atomization apparatus 415 is stopped in Step S420, and the irradiation unit 417 is stopped. The process then goes to Step S405. In this case, an abnormality flag may be written in a storage device in the circuit so that, when the number of flag writes reaches a predetermined number or more, a notification unit (not shown) attached to the main body of the refrigerator is activated to notify the user.

When the detected current value i is equal to or higher than the fourth value i4 in Step S419, the input and electrostatic energy are increased by increasing the voltage applied between the atomization electrode 420 and the counter electrode 421, thereby increasing the atomization amount. This enhances antimicrobial activity and sterilization, and improves freshness preservation of vegetables.

As described above, in the fourth embodiment, the refrigerator includes: the electrostatic atomization apparatus 415 that includes the atomization electrode 420 for applying the voltage to water supplied to the nozzle tip 419 and the counter electrode 421, and sprays the fine mist into the storage compartment (vegetable compartment 407); the voltage application unit 435 that applies the high voltage between the atomization electrode 420 and the counter electrode 421; the water supply unit (the water collection unit 416 and the water collection cover 428) that supplies water to the electrostatic atomization apparatus 415; the atomization amount determination unit 438 that determines the atomization amount of the fine mist sprayed from the electrostatic atomization apparatus 415; and the control unit that adjusts the atomization amount of the electrostatic atomization apparatus 415 according to the signal from the atomization amount determination unit 438. The atomization amount determination unit 438 includes the discharge current detection unit 436 that detects the current when the voltage application unit 435 discharges, and the control unit includes the atomization apparatus control circuit 437 that controls the voltage of the voltage application unit 435 according to the signal detected by the discharge current detection unit 436. Accordingly, the atomization amount can be optimized by recognizing the atomization amount of the nozzle tip 419 as the atomization unit on the basis of the current value and controlling the current value. This makes it possible to achieve stabilization of the atomization amount sprayed in the storage compartment (vegetable compartment 407), improved vegetable freshness preservation, microbial elimination of the storage compartment (vegetable compartment 407) and vegetables, decomposition of agricultural chemicals on vegetable surfaces, and increases of nutrients such as vitamin C. Besides, no other detection unit is used, which contributes to a smaller size and a lower cost.

In addition, by performing an appropriate amount of mist spray while maintaining high humidity in the storage compartment (vegetable compartment 407) without causing abnormal dew condensation in the storage compartment (vegetable compartment 407), it is possible to provide a refrigerator with improved vegetable freshness preservation. Moreover, by recognizing the atomization amount, the atomization amount for the vegetable compartment 407 can be adjusted while spraying the fine mist. This prevents excessive spray, and improves vegetable freshness preservation and performance of antimicrobial activity and microbial elimination in the vegetable compartment 407. Besides, since only the control circuit is necessary to determine the atomization amount from the current value detected by the discharge current detection unit 436 and control the voltage of the voltage application unit 435, there is no need for an additional component, which contributes to a simpler structure and a lower cost.

In the fourth embodiment, when the current value i detected by the discharge current detection unit 436 is higher than the first value i1 which is the upper limit of the proper range, the voltage applied between the atomization electrode 420 and the counter electrode 421 by the voltage application unit 435 is forcibly decreased to reduce the atomization amount in the storage compartment (vegetable compartment 407), with it being possible to prevent spray of an excessive atomization amount in the storage compartment (vegetable compartment 407) and enhance safety. Moreover, when the current value i detected by the discharge current detection unit 436 is lower than the third value i3 which is the lower limit of the proper range, the voltage applied between the atomization electrode 420 and the counter electrode 421 by the voltage application unit 435 is forcibly increased to increase the atomization amount in the storage compartment (vegetable compartment 407), with it being possible to perform spray of a proper atomization amount in the vegetable compartment and improve antimicrobial activity and sterilization and also agricultural chemical decomposition performance. Thus, the atomization amount in the storage compartment (vegetable compartment 407) can be optimized.

In the fourth embodiment, when the current value i detected by the discharge current detection unit 436 is higher than the second value i2 that is higher by a predetermined value than the first value i1 which is the upper limit of the proper range, the voltage applied between the atomization electrode 420 and the counter electrode 421 is decreased to zero to stop the electrostatic atomization apparatus 415, thereby further enhancing safety.

In the fourth embodiment, when the current value i detected by the discharge current detection unit 436 is lower than the fourth value i4 that is lower by a predetermined value than the third value i3 which is the lower limit of the proper range, the voltage applied between the atomization electrode 420 and the counter electrode 421 is decreased to zero to stop the electrostatic atomization apparatus 415. This prevents the atomization operation in a waterless state, thereby enhancing safety. Besides, a reduction in power consumption can be achieved by suppressing unnecessary discharge.

In the fourth embodiment, dew condensation water is used. Since minerals present in tap water and the like are hardly contained in dew condensation water, there is no factor that can cause clogging of the nozzle tip 419, which contributes to improved lifetime reliability.

Note that, in the fourth embodiment, the electrostatic atomization apparatus 415 is powered off upon determining that the door 404 is open, by using a door open/close switch. This suppresses mist spray in an open space, so that the spray efficiency can be improved. In addition, the user can touch foods safely because there is no potential difference.

### (Fifth Embodiment)

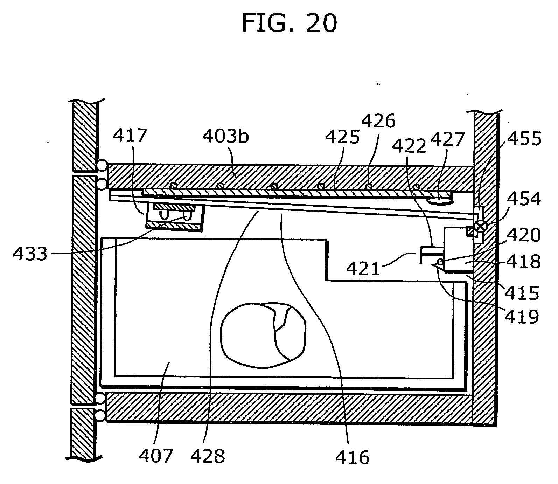

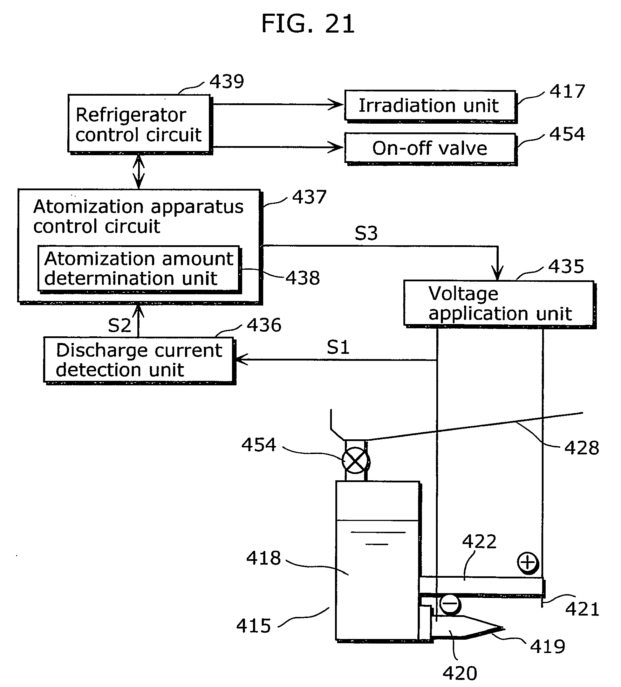

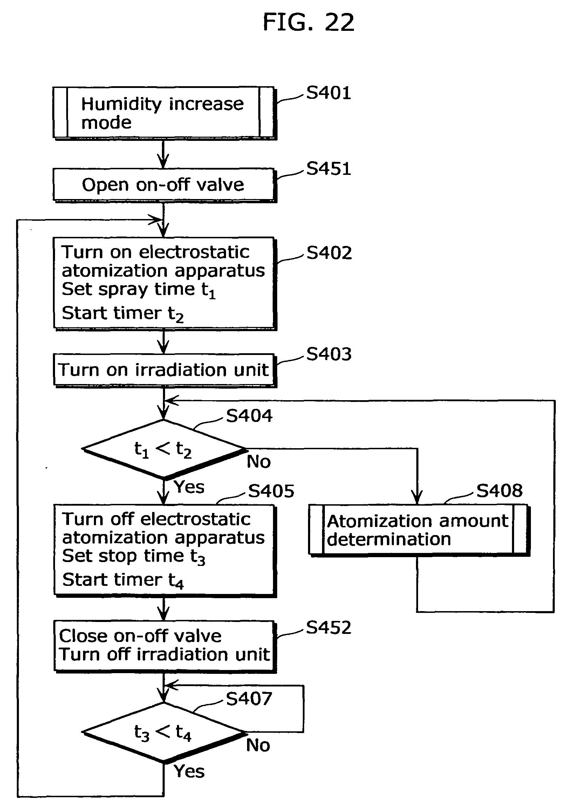

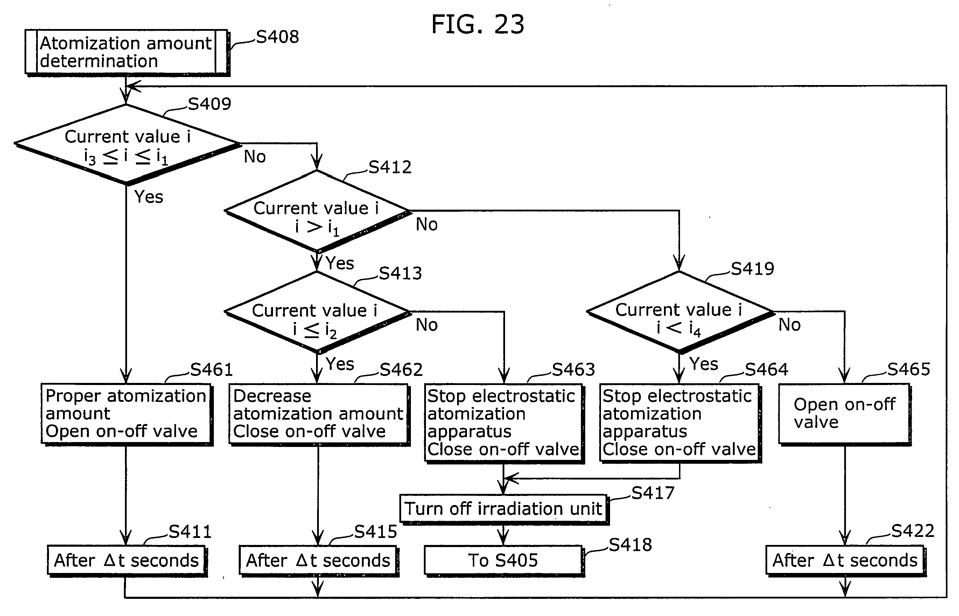

FIG. 20 is a relevant part enlarged sectional view showing a left longitudinal section when a vegetable compartment in a refrigerator in a fifth embodiment not forming part of the present invention is cut into left and right. FIG. 21 is a block diagram showing a control structure related to an electrostatic atomization apparatus in the refrigerator in the fifth embodiment. FIG. 22 is a flowchart showing control of the refrigerator in the fifth embodiment. FIG. 23 is a flowchart showing control in the case of going to an atomization amount determination step in the flowchart shown in FIG. 22.

In the fifth embodiment, detailed description is mainly given for parts that differ from the fourth embodiment, with detailed description being omitted for parts that are the same as the fourth embodiment.

In FIG. 20, the electrostatic atomization apparatus 415 includes the atomization tank 418. The atomization tank 418 and the water collection cover 428 which is a part of the water collection unit 416 are connected by a pipe-like flow path 455 made of a resin or the like, via an on-off valve 454 such as an electromagnetic valve for adjusting the amount of water conveyed to the atomization tank 418.

In FIG. 21, a high voltage is applied between the atomization electrode 420 and the counter electrode 421 by the voltage application unit 435. The discharge current detection unit 436 detects a current value at the time of application as the signal S1, and inputs the signal to the atomization apparatus control circuit 437 as the control unit as the signal S2. The atomization amount determination unit 438 recognizes an atomization amount, and the atomization apparatus control circuit 437 outputs the signal S3 to adjust the output voltage of the voltage application unit 435 and the like. The control unit also performs communication between the atomization apparatus control circuit 437 and the refrigerator control circuit 439 of the main body of the refrigerator 401, and determines the operations of the irradiation unit 417 and the on-off valve 454.

An operation and effects of the refrigerator having the above-mentioned structure are described below.

Water droplets collected by the water collection cover 428 grow gradually, and flow along an inner surface of the water collection cover 428 into the flow path 455. When the on-off valve 454 is open, the water retained in the water collection cover 428 flows into the atomization tank 418. By applying a high voltage between the atomization electrode 420 near the nozzle tip 419 as the atomization unit and the counter electrode 421, the water droplets are divided into fine particles. Since the water droplets are electrically charged, the water droplets are divided into finer particles by Rayleigh fission, and a fine mist having extremely small nano-level particles is sprayed into the vegetable compartment 407. Here, the amount of water can be adjusted by an opening/closing time interval of the on-off valve 454. Since the water supply amount can be adjusted in this manner, the atomization amount can be adjusted.

Green leafy vegetables, fruits, and the like stored in the vegetable compartment 407 tend to wilt more by transpiration. Usually, some of vegetables and fruits stored in the vegetable compartment 407 are in a rather wilted state as a result of transpiration on the way home from shopping or transpiration during storage. The vegetable surfaces are moistened by the atomized fine mist.

The sprayed fine mist increases the humidity of the vegetable compartment 407 again and simultaneously adheres to the surfaces of the vegetables and fruits in a stomata open state in the vegetable compartment 407. The fine mist penetrates into tissues via stomata, as a result of which water is supplied into cells that have wilted due to moisture evaporation to resolve the wilting by cell turgor pressure, and the vegetables and fruits return to a fresh state. In particular, the fine mist is negatively charged by electrostatic atomization whilst the vegetables are usually positively charged, so that the fine mist tends to adhere to the surfaces. Moreover, since the nano-level particles are also present, water can be absorbed even from intercellular spaces. Since the particles are 1 µm or less, they are extremely lightweight and exhibit enhanced diffusivity. Accordingly, the fine mist spreads throughout the vegetable compartment, thereby improving freshness preservation. In addition, quality can be maintained because the fine mist is inconspicuous even when adhering to containers.

The stomata of the vegetables irradiated with the weak blue light by the irradiation unit 417 increase in stomatal aperture when compared with a normal state, due to light stimulation of the blue light. Therefore, the fine mist adhering to the surfaces of the vegetables and fruits penetrates into tissues from the surfaces of the vegetables and fruits in a stomata open state, as a result of which water is supplied into cells that have wilted due to moisture evaporation, and the vegetables and fruits return to a fresh state. Thus, freshness can be recovered.

A detailed operation is described below, with reference to the control flowchart of FIGS. 22 and 23.

Having entered the humidity increase mode in Step S401, the on-off valve 454 in the flow path 455 is put in an open state, to flow water retained in the water collection cover 428 to the electrostatic atomization apparatus 415 in Step S451. Next, after Δt seconds, the electrostatic atomization apparatus 415 is turned on, the spray time t1 is set, the timer t2 is started, and the fine mist is sprayed into the vegetable compartment 407 in Step S402. Following this, the irradiation unit 417 is turned on in Step S403. As a result, the blue LED 433 illuminates, causing an increase in stomatal aperture of vegetables. This makes it easier for the fine mist adhering to the vegetable surfaces to be taken into the vegetables from stomata and intercellular spaces.

When the timer t2 exceeds the set time t1 in Step S404, the electrostatic atomization apparatus 415 is turned off, the timer t2 is reset, the stop time t3 is set, and the timer t4 is started in Step S405. Moreover, the on-off valve 454 is put in a closed state and the irradiation unit 417 is turned off in Step S452. When the timer t4 exceeds the stop time t3 in Step S407, the timer t4 is reset, and the process returns to Step S402.

When the timer t2 does not exceed the spray time t1 in Step S404, the process goes to the atomization determination mode of Step S408 shown in FIG. 23.

Going to Step S408, first the detected current value i is read and determined in Step S409. When the detected current value i is equal to or lower than the preprogrammed first value i1 and equal to or higher than the preprogrammed third value i3, it is determined that the atomization amount of the fine mist sprayed from the nozzle tip 419 is proper, and the open state of the on-off valve 454 is continued in Step S461.

After waiting for Δt seconds, the process returns to Step S409 and the determination is repeated. When the detected current value i is not in the range of equal to or higher than the third value i3 and equal to or lower than the first value i1, the process goes to Step S412 to control the amount of water conveyed to the atomization tank 418 in order to adjust the atomization amount.

First, when the detected current value i is determined to be higher than the first value i1 in Step S412, the process goes to Step S413. When the detected current is equal to or lower than the second value i2 in Step S413, the operation of the electrostatic atomization apparatus 415 is continued but the on-off valve 454 is switched to the closed state in Step S462. As a result, the atomization amount sprayed from the nozzle tip 419 is reduced.

When the detected current value i is higher than the second value i2 in Step S413, it is believed that the atomization amount from the nozzle tip 419 is extremely large. In this case, to ensure safety of the electrostatic atomization apparatus 415 and the refrigerator 401, the voltage applied between the atomization electrode 420 and the counter electrode 421 is decreased to zero to stop the electrostatic atomization apparatus 415, and also the on-off valve 454 is switched to the closed state in Step S463. Moreover, the irradiation unit 417 is stopped in Step S417, and then the process goes to Step S405.

When the detected current value i is lower than i1 in Step S412, the process goes to Step S419. When the detected current value i is lower than the fourth value i4 in Step S419, it is believed that some kind of abnormality such as a break occurs in the control circuit. Accordingly, the electrostatic atomization apparatus 415 is stopped and the on-off valve 454 is closed in Step S464, and the irradiation unit 417 is stopped. The process then goes to Step S405. In this case, an abnormality flag may be written in a storage device in the circuit so that, when the number of flag writes reaches a predetermined number or more, a notification unit (not shown) attached to the main body of the refrigerator is activated to notify the user.

When the detected current value i is equal to or higher than the fourth value i4 in Step S419, the open state of the on-off valve 454 is maintained to thereby maintain the environment of the vegetable compartment.

As described above, in the fifth embodiment, the refrigerator includes: the electrostatic atomization apparatus 415 that includes the atomization electrode 420 for applying the voltage to water supplied to the nozzle tip 419 and the counter electrode 421, and sprays the fine mist into the storage compartment (vegetable compartment 407); the voltage application unit 435 that applies the high voltage between the atomization electrode 420 and the counter electrode 421; the water supply unit (on-off valve 454) that supplies water to the electrostatic atomization apparatus 415; the atomization amount determination unit 438 that determines the atomization amount of the fine mist sprayed from the electrostatic atomization apparatus 415; and the control unit that adjusts the atomization amount of the electrostatic atomization apparatus 415 according to the signal from the atomization amount determination unit 438. The atomization amount determination unit 438 includes the discharge current detection unit 436 that detects the current when the voltage application unit 435 discharges, and the control unit includes the atomization apparatus control circuit 437 and the refrigerator control circuit 439 that control the opening/closing of the on-off valve 454 according to the signal detected by the discharge current detection unit 436. Accordingly, the atomization amount can be optimized by recognizing the atomization amount of the nozzle tip 419 as the atomization unit on the basis of the current value and optimizing the water supply amount through the on-off valve 454. This makes it possible to achieve stabilization of the atomization amount sprayed in the storage compartment (vegetable compartment 407), improved vegetable freshness preservation and antimicrobial effect, microbial elimination of the storage compartment (vegetable compartment 407) and vegetables, decomposition of agricultural chemicals on vegetable surfaces, increases of nutrients such as vitamin C, and prevention of water rot caused by dew condensation in the vegetable compartment 407. Besides, no other detection unit is used, which contributes to a smaller size and a lower cost.

In addition, by performing an appropriate amount of mist spray while maintaining high humidity in the storage compartment (vegetable compartment 407) without causing abnormal dew condensation in the storage compartment (vegetable compartment 407), it is possible to provide a refrigerator with improved vegetable freshness preservation. Moreover, by recognizing the atomization amount, the atomization amount for the vegetable compartment 407 can be adjusted while spraying the fine mist. This prevents excessive spray, and improves vegetable freshness preservation and performance of antimicrobial activity and microbial elimination in the vegetable compartment 407. Besides, since only the control circuit is necessary to determine the atomization amount from the current value detected by the discharge current detection unit 436 and control the opening/closing of the on-off valve 454, the water amount can be adjusted easily through the on-off valve 454 for opening/closing the water path, which contributes to a simpler structure and a lower cost.

In the fifth embodiment, when the current value i detected by the discharge current detection unit 436 is higher than the first value i1 which is the upper limit of the proper range, the on-off valve 454 is switched to the closed state to reduce the amount of water supplied to the atomization unit to thereby reduce the atomization amount in the storage compartment (vegetable compartment 407), with it being possible to prevent spray of an excessive atomization amount in the storage compartment (vegetable compartment 407) and enhance safety.

In the fifth embodiment, when the current value i detected by the discharge current detection unit 436 is higher than the second value i2 that is higher by a predetermined value than the first value i1 which is the upper limit of the proper range, the voltage applied between the atomization electrode 420 and the counter electrode 421 is decreased to zero to stop the electrostatic atomization apparatus 415 and also the on-off valve 454 is closed, thereby enhancing safety.

In the fifth embodiment, when the current value i detected by the discharge current detection unit 436 is lower than the fourth value i4 that is lower by a predetermined value than the third value i3 which is the lower limit of the proper range, the voltage applied between the atomization electrode 420 and the counter electrode 421 is decreased to zero to stop the electrostatic atomization apparatus 415 and also the on-off valve 454 is closed. This prevents the atomization operation in a waterless state, thereby enhancing safety. Besides, a reduction in power consumption can be achieved by suppressing unnecessary discharge.

In the fifth embodiment, the mist is extremely fine with a particle diameter of 1 µm or less, exhibiting enhanced diffusivity. This reduces dew condensation in the vegetable compartment 407, and also leads to a cost reduction by reducing the number of members.

Though the fifth embodiment describes the case where a spray direction of the electrostatic atomization apparatus 415 is a horizontal direction, the electrostatic atomization apparatus 415 may be directed downward. In such a case, the fine mist is sprayed from above, enabling the fine mist to be diffused uniformly. Since the fine mist can be sprayed throughout the storage space, the storage space can be cooled by latent heat of the mist (water). Accordingly, a cooler capacity for a refrigeration temperature zone can be reduced, with it being possible to achieve a smaller size and a lower cost.

### (Sixth Embodiment)

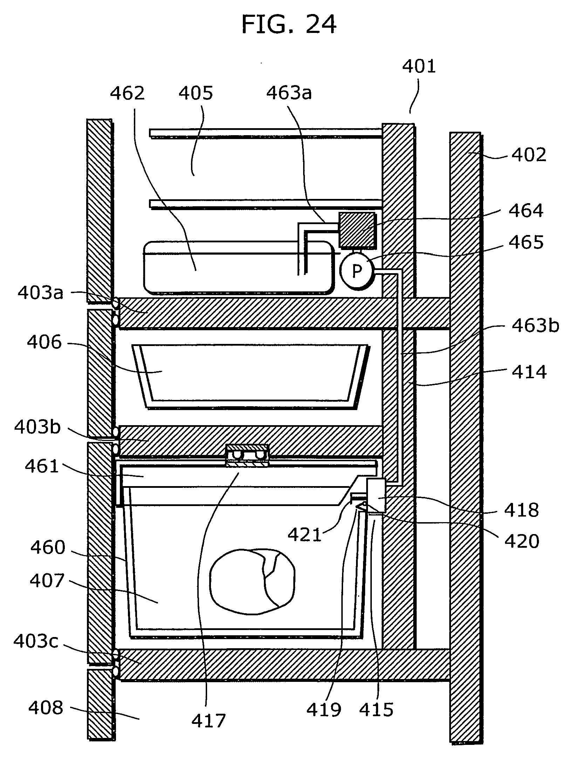

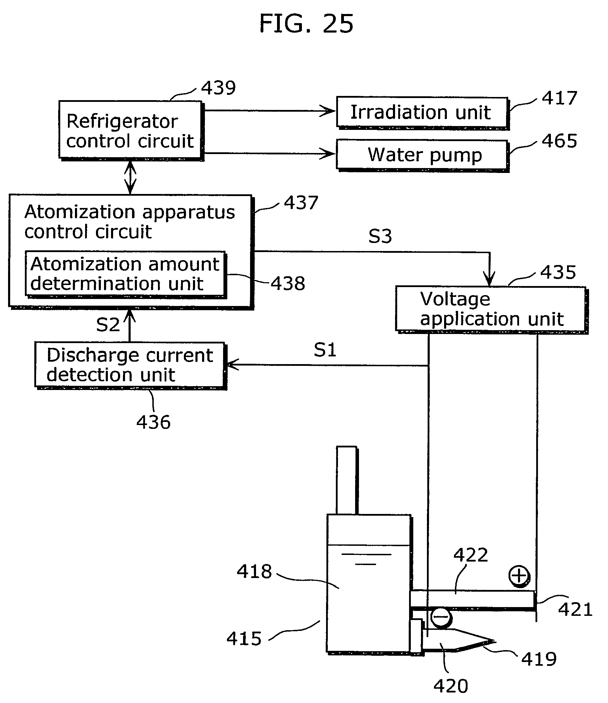

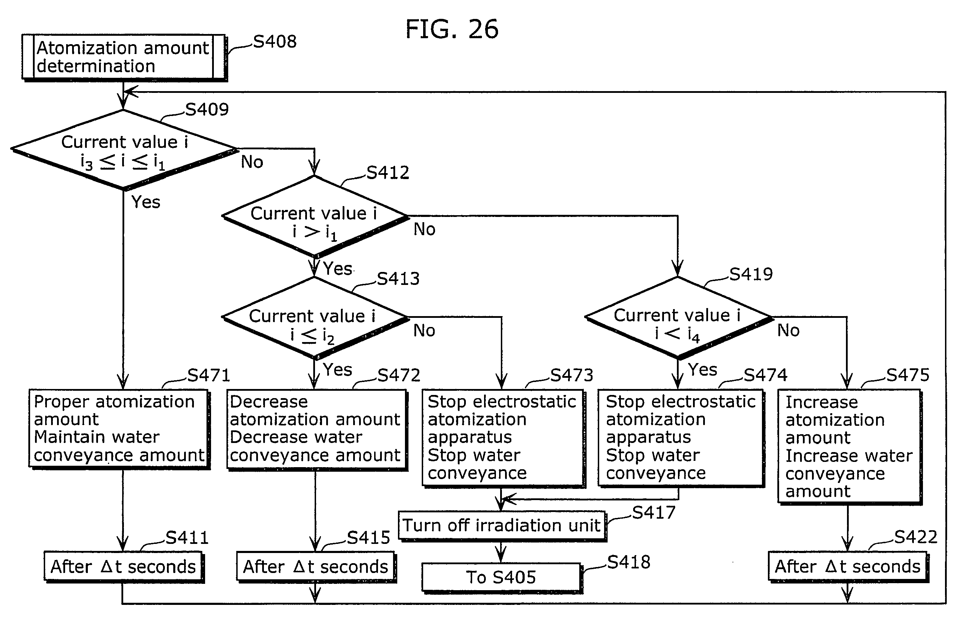

FIG. 24 is a relevant part enlarged sectional view showing a left longitudinal section when a portion from a periphery of a water supply tank in a refrigerator compartment to a vegetable compartment in a refrigerator in a sixth embodiment not forming part of the present invention is cut into left and right. FIG. 25 is a block diagram showing a control structure related to an electrostatic atomization apparatus in the refrigerator in the sixth embodiment. FIG. 26 is a flowchart showing control in the case of going to an atomization amount determination step in control of the refrigerator in the sixth embodiment.

In the sixth embodiment, detailed description is mainly given for parts that differ from the fourth and fifth embodiments, with detailed description being omitted for parts that are the same as the fourth and fifth embodiments.

In FIGS. 24 and 25, in the vegetable compartment 407, foods such as vegetables and fruits are stored in a vegetable case 460, and a lid 461 for maintaining a storage compartment humidity to suppress transpiration from the foods stored in the vegetable case 460 is provided above the vegetable case 460. The nozzle tip 419 as the atomization unit of the electrostatic atomization apparatus 415 as the spray unit is disposed in a gap between the vegetable case 460 and the lid 461 so as to be directed into the storage compartment.

The irradiation unit 417 is attached to the partition 403b. A part of the lid 461 is cut away or made of a transparent material so that the foods in the case can be irradiated.

A water supply tank 462 is formed in the refrigerator compartment 405 to supply water to the electrostatic atomization apparatus 415. The water supply tank 462 and the atomization tank 418 included in the electrostatic atomization apparatus 415 are connected via a filter 464 and a water pump 465 that uses any of a stepping motor, a gear, a tube, a piezoelectric element, and the like, by a flow path 463a and a narrow flow path 463b with the water pump 465 therebetween. Water is supplied to the nozzle tip 419 through the narrow flow path 463b and the atomization tank 418, with a part of the narrow flow path 463b being buried in the partitions 403a, 403b, and 414 or the refrigerator main body 402.

The electrostatic atomization apparatus 415 detects a discharge current value at the atomization electrode 420 by the discharge current detection unit 436, and transmits an output of the atomization amount determination unit 438 in the atomization apparatus control circuit 437 to the refrigerator control circuit 439 of the refrigerator main body, thereby determining the operations of the water pump 465 and the irradiation unit 417. Note that the atomization apparatus control circuit 437 and the refrigerator control circuit 439 may be implemented on the same board.

An operation and effects of the refrigerator having the above-mentioned structure are described below.

The operation of the water pump 465 determines whether or not water stored in the water supply tank 462 is supplied to the electrostatic atomization apparatus 415 from the flow path 463. When the water pump 465 is on, water supplied by the user beforehand flows toward the electrostatic atomization apparatus 415. Here, impurities such as dirt and foreign substances are removed from the water flowing through the flow paths 463a and 463b, by the filter 464 installed in advance. Moreover, since the narrow flow path 463b is sealed, dust and bacteria invasion can be prevented while suppressing clogging of the nozzle tip 419 of the electrostatic atomization apparatus 415. Thus, hygiene can be ensured.

The narrow flow path 463b is buried in a heat insulator such as the partition 414, and prevents freezing of water flowing therein. Though not shown, a temperature compensation heater may be placed around the flow path in close contact with the narrow flow path 463b. Water is supplied from the flow path 463b to the atomization tank 418 in the electrostatic atomization apparatus 415. By applying a high voltage between the atomization electrode 420 near the nozzle tip 419 as the atomization unit and the counter electrode 421, the water droplets are divided into fine particles. Since the water droplets are electrically charged, the water droplets are divided into finer particles by Rayleigh fission, and a fine mist having extremely small nano-level particles is sprayed into the vegetable compartment 407.

Here, by making the narrow flow path 463b narrower than the flow path 463a, it is possible to easily control a small amount of water and thereby improve spray amount accuracy in the vegetable compartment 407. Moreover, by using the water pump 465, the number of steps, the number of motor revolutions, and the like can be adjusted easily. For example, the amount of water to be conveyed can be controlled using a voltage applied to the water pump 465. This contributes to improved spray amount accuracy in the vegetable compartment 407, with it being possible to control the atomization amount.

A detailed operation is described below, with reference to the control flowchart of FIG. 26.

Regarding mist spray, the operation of the electrostatic atomization apparatus 415 and the operations of the irradiation unit 417 and the water pump 465 are determined.

Upon atomization determination in Step S408, first the detected current value i is read and determined in Step S409. When the detected current value i is equal to or lower than the preprogrammed first value i1 and equal to or higher than the preprogrammed third value i3, it is determined that the atomization amount of the fine mist sprayed from the nozzle tip 419 is proper and that the amount of water supplied to the electrostatic atomization apparatus 415 by the water pump 465 is proper, and the water supply amount is continued.

After waiting for Δt seconds, the process returns to Step S409 and the determination is repeated. When the detected current value i is not in the range of equal to or higher than the third value i3 and equal to or lower than the first value i1, the process goes to Step S412 to control the water supply amount by the water pump 465 in order to adjust the atomization amount of the electrostatic atomization apparatus 415.

First, when the detected current value i is determined to be higher than the first value i1 in Step S412, the process goes to Step S413. When the detected current is equal to or lower than the second value i2 in Step S413, the operation of the electrostatic atomization apparatus 415 is continued but the amount of water flowing from the water pump 465 is decreased in Step S472. As a result, the atomization tank 418 decreases in water level, and the pressure applied to the nozzle tip 419 decreases due to a smaller pressure head difference, so that the atomization amount is reduced.

When the detected current value i is higher than the second value i2 in Step S413, it is believed that an increase in current value is caused by a large atomization amount. In this case, to ensure safety of the electrostatic atomization apparatus 415 and the refrigerator 401, the voltage applied between the atomization electrode 420 and the counter electrode 421 is decreased to zero to stop the electrostatic atomization apparatus 415, and also the water conveyance of the water pump 465 is stopped in Step S473. Moreover, the irradiation unit 417 is stopped in Step S417, and then the process goes to Step S405.

When the detected current value i is lower than i1 in Step S412, the process goes to Step S419. When the detected current value i is lower than the fourth value i4 in Step S419, it is believed that some kind of abnormality such as a break occurs in the control circuit. Accordingly, the electrostatic atomization apparatus 415 is stopped and the water pump 465 is stopped in Step S474, and the irradiation unit 417 is stopped. The process then goes to Step S405. In this case, an abnormality flag may be written in a storage device in the circuit so that, when the number of flag writes reaches a predetermined number or more, a notification unit (not shown) attached to the main body of the refrigerator is activated to notify the user.

When the detected current value i is equal to or higher than the fourth value i4 in Step S419, the water supply amount of the water pump 465 is increased by a preset amount to thereby increase the atomization amount, for improving antimicrobial activity and accelerating agricultural chemical decomposition.

As described above, in the sixth embodiment, the refrigerator includes: the electrostatic atomization apparatus 415 that includes the atomization electrode 420 for applying the voltage to water supplied to the nozzle tip 419 and the counter electrode 421, and sprays the fine mist into the storage compartment (vegetable compartment 407); the voltage application unit 435 that applies the high voltage between the atomization electrode 420 and the counter electrode 421; the water supply unit (water pump 465) that supplies water to the electrostatic atomization apparatus 415; the atomization amount determination unit 438 that determines the atomization amount of the fine mist sprayed from the electrostatic atomization apparatus 415; and the control unit that adjusts the atomization amount of the electrostatic atomization apparatus 415 according to the signal from the atomization amount determination unit 438. The atomization amount determination unit 438 includes the discharge current detection unit 436 that detects the current when the voltage application unit 435 discharges, and the control unit includes the atomization apparatus control circuit 437 and the refrigerator control circuit 439 that control the water conveyance amount of the water pump 465 according to the signal detected by the discharge current detection unit 436. Accordingly, the atomization amount can be optimized by recognizing the atomization amount of the nozzle tip 419 as the atomization unit on the basis of the current value and optimizing the water supply amount through the water conveyance amount of the water pump 465. This makes it possible to achieve stabilization of the atomization amount sprayed in the storage compartment (vegetable compartment 407), improved vegetable freshness preservation and antimicrobial effect, microbial elimination of the storage compartment (vegetable compartment 407) and vegetables, decomposition of agricultural chemicals on vegetable surfaces, increases of nutrients such as vitamin C, and prevention of water rot caused by dew condensation in the vegetable compartment 407. Besides, no other detection unit is used, which contributes to a smaller size and a lower cost.

In addition, by performing an appropriate amount of mist spray while maintaining high humidity in the storage compartment (vegetable compartment 407) without causing abnormal dew condensation in the storage compartment (vegetable compartment 407), it is possible to provide a refrigerator with improved vegetable freshness preservation. Moreover, by recognizing the atomization amount, the atomization amount for the vegetable compartment 407 can be adjusted while spraying the fine mist. This prevents excessive spray, and improves vegetable freshness preservation and performance of antimicrobial activity and microbial elimination in the vegetable compartment 407. Besides, since only the control circuit is necessary to determine the atomization amount from the current value detected by the discharge current detection unit 436 and control the water conveyance amount of the water pump 465, the water amount can be adjusted easily through the water conveyance amount of the water pump 465, which contributes to a simpler structure and a lower cost.

Moreover, by using the water pump 465 as the water supply unit, the water amount can be adjusted easily. In addition, since water can be pumped up, the water source such as the water supply tank 462 can be disposed at a lower position than the electrostatic atomization apparatus 415. This increases design flexibility.

In the sixth embodiment, when the current value i detected by the discharge current detection unit 436 is higher than the first value i1 which is the upper limit of the proper range, the amount of water flowing from the water pump 465 is decreased to reduce the amount of water supplied to the atomization unit to thereby reduce the atomization amount in the storage compartment (vegetable compartment 407), with it being possible to prevent spray of an excessive atomization amount in the storage compartment (vegetable compartment 407) and enhance safety. Moreover, when the current value i detected by the discharge current detection unit 436 is lower than the third value i3 which is the lower limit of the proper range, the water supply amount of the water pump 465 is increased by the preset amount to increase the atomization amount, with it being possible to perform spray of a proper atomization amount in the vegetable compartment 407 and improve antimicrobial activity and sterilization and also agricultural chemical decomposition performance. Thus, the atomization amount in the storage compartment (vegetable compartment 407) can be optimized.

In the sixth embodiment, when the current value i detected by the discharge current detection unit 436 is higher than the second value i2 that is higher by a predetermined value than the first value i1 which is the upper limit of the proper range, the voltage applied between the atomization electrode 420 and the counter electrode 421 is decreased to zero to stop the electrostatic atomization apparatus 415 and also the water conveyance of the water pump 465 is stopped, thereby enhancing safety.

In the sixth embodiment, when the current value i detected by the discharge current detection unit 436 is lower than the fourth value i4 that is lower by a predetermined value than the third value i3 which is the lower limit of the proper range, the voltage applied between the atomization electrode 420 and the counter electrode 421 is decreased to zero to stop the electrostatic atomization apparatus 415 and also the water conveyance of the water pump 465 is stopped. This prevents the atomization operation in a waterless state, thereby enhancing safety. Besides, a reduction in power consumption can be achieved by suppressing unnecessary discharge.

In the sixth embodiment, a flow path cross-sectional area from the water pump 465 to the atomization tank 418 is smaller than a flow path cross-sectional area from the water supply tank 462 to the water pump 465. Hence, it is possible to easily control a small amount of water and thereby improve spray amount accuracy in the vegetable compartment 407. Moreover, by using the water pump 465, the number of steps, the number of motor revolutions, and the like can be adjusted easily. For example, the amount of water to be conveyed can be controlled using a voltage applied to the water pump 465. This contributes to improved spray amount accuracy in the vegetable compartment.

In the sixth embodiment, the use of the water pump 465 allows for adjustment in very small amount, by linearly varying the water conveyance amount by the number of revolutions and the like. Hence, accurate spray amount adjustment can be achieved.

In the sixth embodiment, the water supply tank 462 can be placed outside the vegetable compartment 407. This ensures the capacity of the vegetable compartment 407, allowing for sufficient food storage.

In the sixth embodiment, the water supply tank 462 is disposed in the refrigerator compartment 405, with there being no risk of freezing and no need for a temperature compensation heater. Since the water supply tank 462 can also be used as an ice freezing tank, there is no decrease in storage capacity of the refrigerator.

In the sixth embodiment, by providing the counter electrode 421 in a higher position than the nozzle tip 419, the mist is attracted upward and so the spray distance is extended. Moreover, the mist can be sprayed while avoiding foods near the nozzle tip 419.

Though the counter electrode 421 accompanies the electrostatic atomization apparatus 415 in the sixth embodiment, the counter electrode 421 may be provided in a part of the lid at the top or a part of the container. In such a case, an unwanted protrusion can be eliminated, resulting in an increase in storage capacity.

### (Seventh Embodiment)

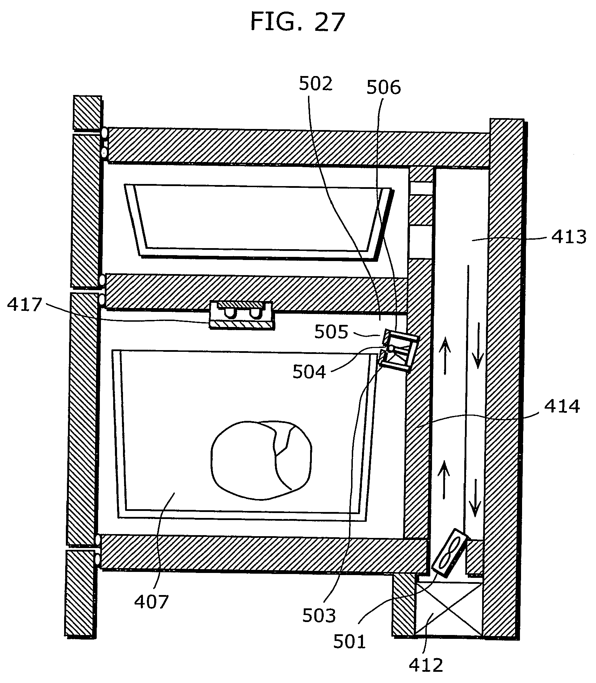

FIG. 27 is a relevant part enlarged sectional view showing a left longitudinal section when a vegetable compartment and its periphery in a refrigerator in a seventh embodiment not forming part of the present invention is cut into left and right.

In the seventh embodiment, detailed description is mainly given for parts that differ from the fourth to sixth embodiments, with detailed description being omitted for parts that are the same as the fourth to sixth embodiments.

In FIG. 27, the air path 413 for conveying low temperature air generated by the evaporator 412 to each storage compartment space by a cool air circulation fan 501 or collecting the air heat-exchanged in the storage compartment space to the evaporator 412 is situated in a back part of the refrigerator. The air path 413 is separated by the partition 414.

An electrostatic atomization apparatus 502 includes an atomization electrode 503, a counter electrode 505 provided near a tip 504 of the atomization electrode 503 so as to maintain a constant distance, and a counter electrode holder 506 for holding the counter electrode 505. Electrical connection is made so that the atomization electrode 503 is on a positive pole side and the counter electrode 505 is on a negative pole side. Liquid droplets supplied and adhering to the tip 504 are finely divided by electrostatic energy of a high voltage applied between the atomization electrode 503 and the counter electrode 505, and sprayed into the vegetable compartment 407.

Moreover, the electrostatic atomization apparatus 502 is buried in the partition 414 so that the tip 504 spraying the fine mist is directed toward the inside of the vegetable compartment 407.

An operation and effects of the refrigerator having the above-mentioned structure are described below.

The atomization electrode 503 in the electrostatic atomization apparatus 502 is cooled by heat conduction of low temperature air in the air path 413 generated by the evaporator 412, via the partition 414. This causes the temperature of the atomization electrode 503 to be lower than the atmospheric temperature in the vegetable compartment 407, and accordingly water is supplied to the tip 504 by dew condensation of ambient air. Hence, the fine mist can be sprayed to the vegetable compartment 407.

As described above, in the seventh embodiment, the water supply unit is realized by cooling the atomization electrode 503 so as to cause ambient air in the storage compartment (vegetable compartment 407) to form dew condensation. This makes it unnecessary to retain water in a tank or the like in the refrigerator, and also maintenance and the like can be omitted.

### (Eighth Embodiment)

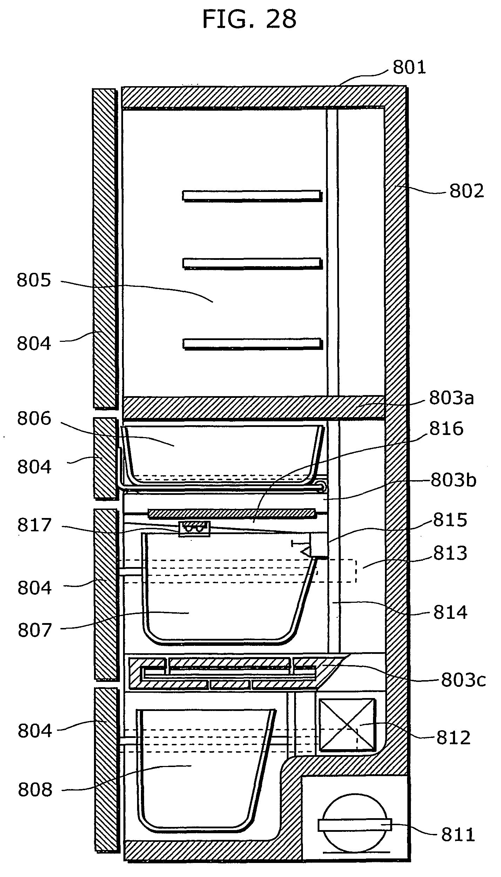

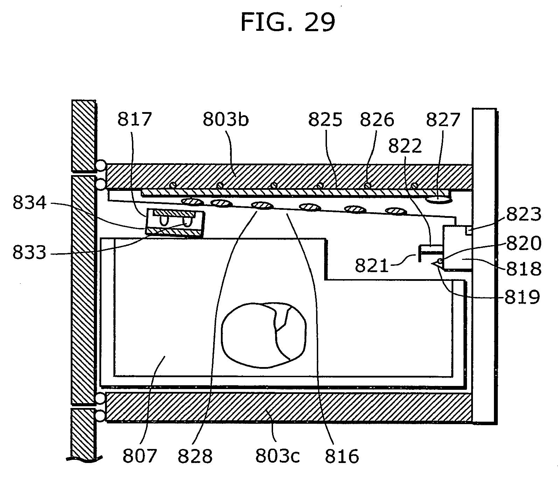

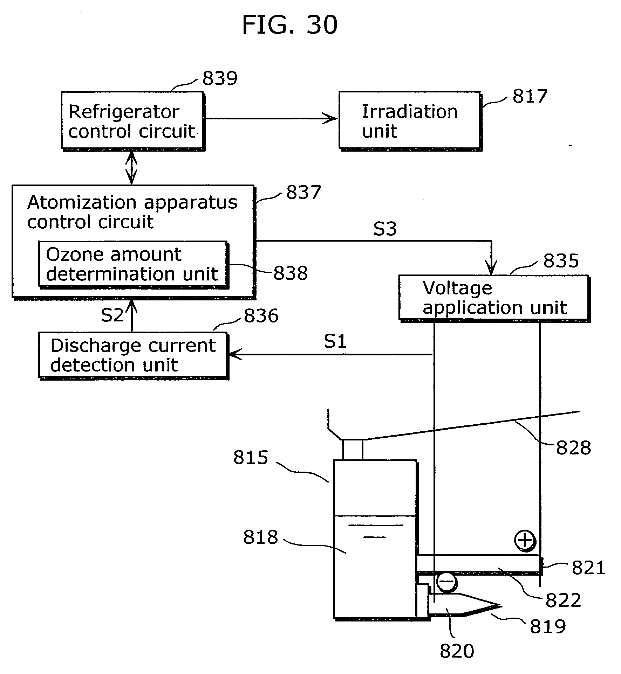

FIG. 28 is a longitudinal sectional view showing a left longitudinal section when a refrigerator in an eighth embodiment not forming part of the present invention is cut into left and right. FIG. 29 is a relevant part enlarged sectional view showing a left longitudinal section when a vegetable compartment in the refrigerator in the eighth embodiment of the present invention is cut into left and right. FIG. 30 is a block diagram showing a control structure related to an electrostatic atomization apparatus in the refrigerator in the eighth embodiment.

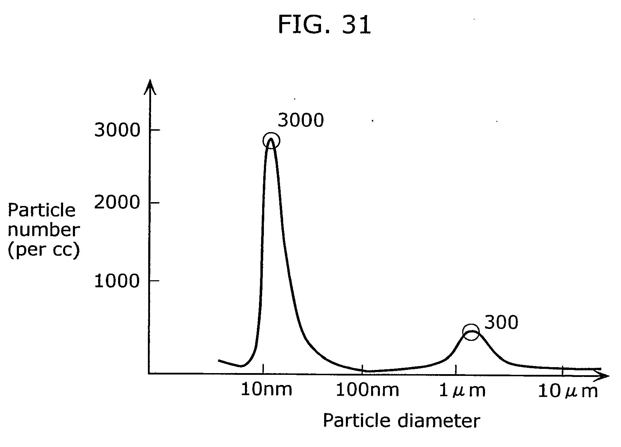

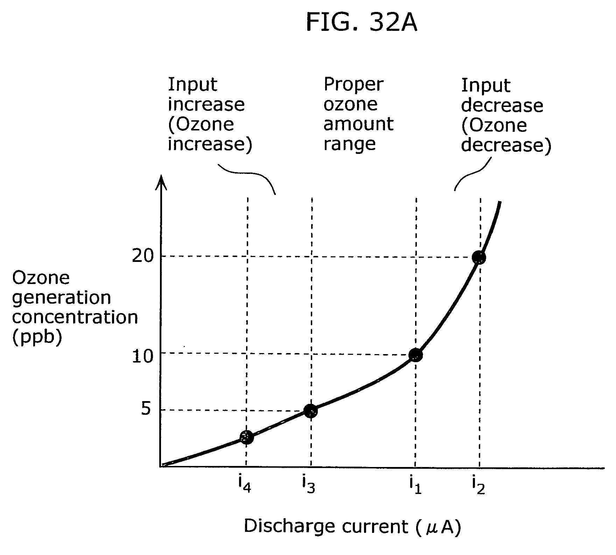

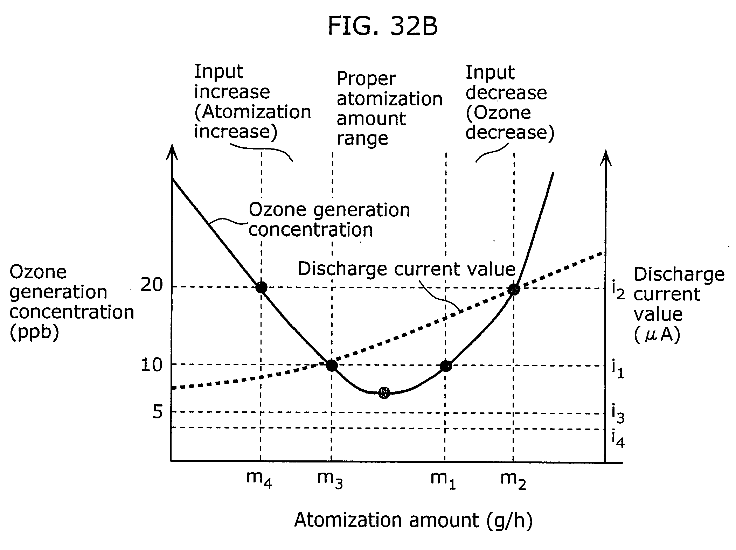

FIG. 31 is a characteristic chart showing a relation between a particle diameter and a particle number of a mist generated by the electrostatic atomization apparatus in the refrigerator in the eighth embodiment. FIG. 32A is a characteristic chart showing a relation between a discharge current and an ozone generation concentration in an ozone amount determination unit in the refrigerator in the eighth embodiment. FIG. 32B is a characteristic chart showing a relation between an atomization amount of the electrostatic atomization apparatus and each of an ozone concentration and a discharge current value in the refrigerator in the eighth embodiment.

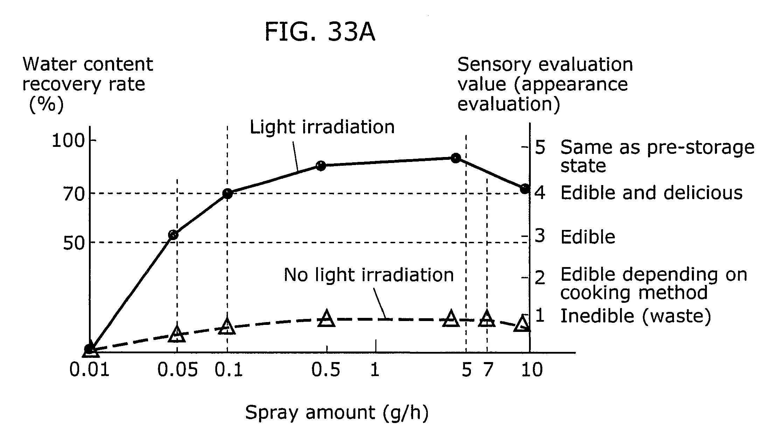

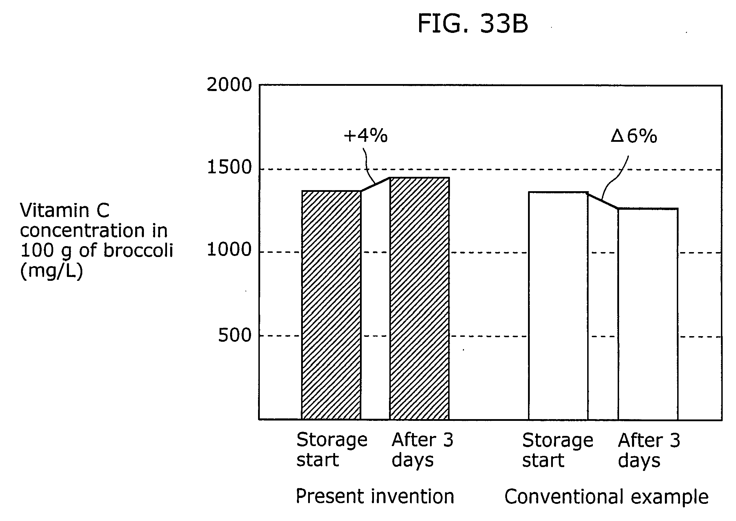

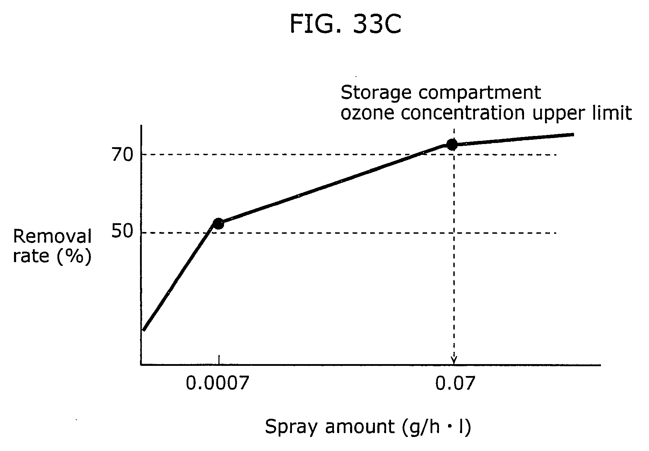

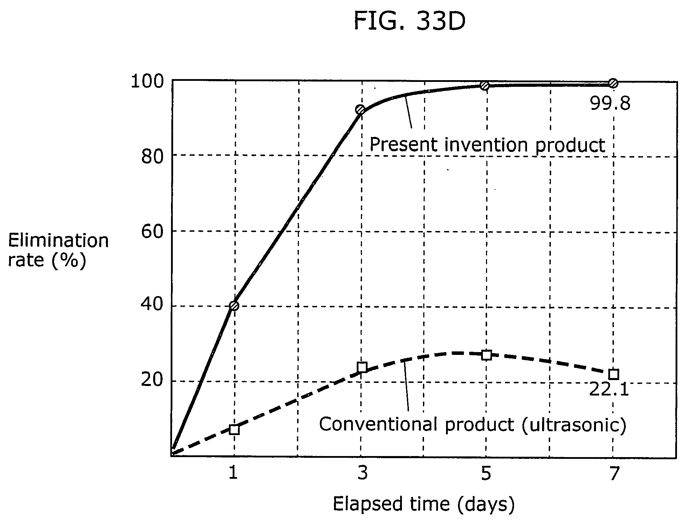

FIG. 33A is a characteristic chart showing a relation between a mist spray amount and a water content recovery effect for a wilting vegetable and a relation between a mist spray amount and a vegetable appearance sensory evaluation value in the refrigerator in the eighth embodiment. FIG. 33B is a characteristic chart showing a change in vitamin C amount in the refrigerator in the eighth embodiment, as compared with a conventional example. FIG. 33C is a characteristic chart showing agricultural chemical removal performance of the electrostatic atomization apparatus in the refrigerator in the eighth embodiment. FIG. 33D is a characteristic chart showing microbial elimination performance of the electrostatic atomization apparatus in the refrigerator in the eighth embodiment.

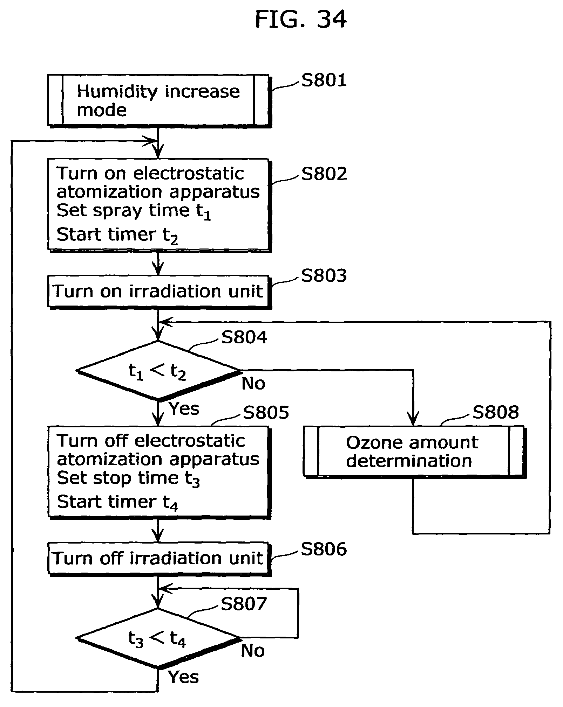

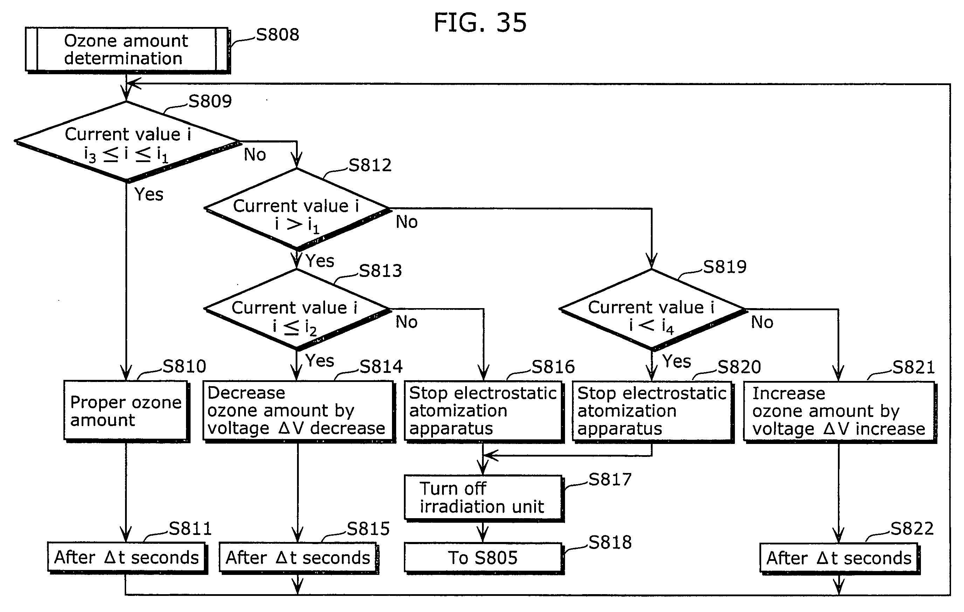

FIG. 34 is a flowchart showing control of the refrigerator in the eighth embodiment. FIG. 35 is a flowchart showing control in the case of going to an ozone amount determination step in the flowchart shown in FIG. 34.

In FIGS. 28, 29, and 30, a refrigerator 801 is thermally insulated by a main body (heat-insulating main body) 802, partitions 803a, 803b, and 803c for creating sections for storage compartments, and doors 804 for making these sections closed spaces. A refrigerator compartment 805, a switch compartment 806, a vegetable compartment 807, and a freezer compartment 808 are arranged from above, forming storage spaces of different temperatures. Of these storage compartments, the vegetable compartment 807 is cooled at 4°C to 6°C with a humidity of about 80%RH or more (when storing foods), when there is no opening/closing operation of the door 804.

A refrigeration cycle for cooling the refrigerator 801 is made by sequentially connecting, by piping, a compressor 811, a condenser, a pressure reduction device (not shown) such as an expansion valve and a capillary tube, and an evaporator 812 in a loop so that a refrigerant is circulated.

There is also an air path 813 for conveying low temperature air generated by the evaporator 812 to each storage compartment space or collecting the air heat-exchanged in the storage compartment space to the evaporator 812. The air path 813 is thermally insulated from each storage compartment by a partition 814.

Moreover, an electrostatic atomization apparatus 815 as a spray unit, a water collection unit 816 for supplying water to the spray unit (electrostatic atomization apparatus 815), and an irradiation unit 817 for controlling stomata of vegetables are formed in the vegetable compartment 807.

The electrostatic atomization apparatus 815 includes an atomization tank 818 for holding water from the water collection unit 816, a nozzle tip 819 in a nozzle form for spraying to the vegetable compartment 807, and an application electrode 820 disposed at a position near the nozzle tip 819 that is in contact with water. A counter electrode 821 is disposed near an opening of the nozzle tip 819 so as to maintain a constant distance, and a holding member 822 is attached to hold the counter electrode 821. A negative pole of a voltage application unit 835 generating a high voltage is electrically connected to the application electrode 820, and a positive pole of the voltage application unit 835 is electrically connected to the counter electrode 821. The electrostatic atomization apparatus 815 is attached to a water collection cover 828 or the partition 814 by an attachment member connection part 823.

Water droplets of a liquid supplied and adhering to the nozzle tip 819 are finely divided by electrostatic energy of a high voltage applied between the application electrode 820 and the counter electrode 821. Since the liquid droplets are electrically charged, the liquid droplets are further atomized into particles of several nm to several µm by Rayleigh fission, and sprayed into the vegetable compartment 807.

The water collection unit 816 is installed at the bottom of the partition 803b and in an upper part of the vegetable compartment 807. A cooling plate 825 is made of a high heat conductive metal such as aluminum or stainless steel or a resin, and a heating unit 826 such as a PTC heater, a sheet heating element, or a heater formed of, for example, a nichrome wire is brought into contact with one surface of the cooling plate 825. For adjusting the temperature of the cooling plate 825, a duty factor of the heating unit 826 is determined by a temperature detected by a cooling plate temperature detection unit 827. Thus, temperature control of the cooling plate 825 is performed. The water collection cover 828 for receiving dew condensation water generated on the cooling plate 825 is installed underneath.

The irradiation unit 817 is, for example, a blue LED 833, and applies light including blue light with a center wavelength of 470 nm. The irradiation unit 817 also includes a diffusion plate 834 for light diffusivity enhancement and component protection.

In FIG. 30, in the electrostatic atomization apparatus 815, a high voltage is applied between the application electrode 820 and the counter electrode 821 by the voltage application unit 835. A discharge current detection unit 836 detects a current value at the time of application as a signal S1, and inputs the signal to an atomization apparatus control circuit 837 which is a control unit as a signal S2. An ozone amount determination unit 838 recognizes an atomization state, and the atomization apparatus control circuit 837 outputs a signal S3 to adjust the output voltage of the voltage application unit 835 and the like. The control unit also performs communication between the atomization apparatus control circuit 837 and a control circuit 839 of the main body of the refrigerator 801, and determines the operation of the irradiation unit 817.

An operation and effects of the refrigerator having the above-mentioned structure are described below.

Usually, some of vegetables and fruits stored in the vegetable compartment 807 are in a rather wilted state as a result of transpiration on the way home from shopping or transpiration during storage. Their storage environment varies according to an outside air temperature variation, a door opening/closing operation, and a refrigeration cycle operation state. As the storage environment becomes more severe, transpiration is accelerated and the vegetables and fruits are more likely to wilt.

In view of this, by operating the electrostatic atomization apparatus 815, the fine mist is sprayed into the vegetable compartment 807 to quickly humidify the inside of the storage compartment.

An excess water vapor in the vegetable compartment 807 builds up dew condensation on the cooling plate 825. Water droplets adhering to the cooling plate 825 grow and drop on the water collection cover 828 under its own weight, flow on the water collection cover 828, and are retained in the atomization tank 818 of the electrostatic atomization apparatus 815. The dew condensation water is then atomized from the nozzle tip 819 of the electrostatic atomization apparatus 815, and sprayed into the vegetable compartment 807.

At this time, the voltage application unit 835 applies a high voltage (for example, 10 kV) between the application electrode 820 near the nozzle tip 819 of the electrostatic atomization apparatus 815 and the counter electrode 821, where the application electrode 820 is on a negative voltage side and the counter electrode 821 is on a positive voltage side. This causes corona discharge to occur between the electrodes that are apart from each other by, for example, 15 mm. As a result, atomization occurs from the tip of the nozzle tip 819 near the application electrode 820, and a charged invisible nano-level fine mist of about 1 µm or less, accompanied by ozone, OH radicals, and so on, is generated. The voltage applied between the electrodes is an extremely high voltage of 10 kV. However, a discharge current value at this time is at a µA level, and therefore an input is extremely low, about 1 W to 3 W. Nevertheless, the generated fine mist is about 1 g/h, so that the vegetable compartment 807 can be sufficiently atomized and humidified.

When the discharge current value is inputted to the discharge current detection unit 836 as the signal S1, the discharge current detection unit 836 converts the current value to the digital or analog voltage signal S2 that can be easily operated in a CPU and the like, and outputs the signal to the ozone amount determination unit 838. Following this, the ozone amount determination unit 838 converts the discharge current value to an ozone concentration (it has been experimentally found that a discharge current and ozone generation are directly proportional), and outputs the control signal S3 to the voltage application unit 835 so that the ozone concentration is limited to no more than a predetermined ozone generation concentration. Lastly, the voltage application unit 835 changes the voltage value to be applied, and generates the high voltage. Subsequently, feedback control is performed while monitoring the discharge current value.

As shown in FIG. 31, the mist sprayed from the nozzle tip 819 has two peaks at about several tens of nm and several µm. The nano-level fine mist adhering to the vegetable surfaces contains a large amount of OH radicals and the like. Such a nano-level fine mist is effective in sterilization, antimicrobial activity, microbial elimination, and so on, and also allows for agricultural chemical removal by oxidative decomposition and stimulates increases in nutrient of the vegetables such as vitamin C through antioxidation. Moreover, though not containing a large amount of radicals, a micro-level fine mist can adhere to the vegetable surfaces and moisturize around the vegetable surfaces.

During this time, though fine water droplets adhere to the vegetable surfaces, respiration is not obstructed because there are also surfaces in contact with the air, so that no water rot occurs. Accordingly, the vegetable compartment 807 becomes high in humidity, and at the same time the humidity of the vegetable surfaces and the humidity in the storage compartment (vegetable compartment 807) are brought into a condition of equilibrium. Hence, transpiration from the vegetable surfaces can be prevented. In addition, the adhering mist penetrates into tissues via intercellular spaces of the surfaces of the vegetables and fruits, as a result of which water is supplied into wilted cells to resolve the wilting by cell turgor pressure, and the vegetables and fruits return to a fresh state.

During the operation of the electrostatic atomization apparatus 815, the irradiation unit 817 is turned on and irradiates the vegetables and fruits stored in the vegetable compartment 807. The irradiation unit 817 is, for example, the blue LED 833 or a lamp covered with a material allowing only blue light to pass through, and applies light including blue light with a center wavelength of 470 nm. The blue light applied here is weak light with light photons of about 1 µmol/(m².s).

Stomata on the epidermis surfaces of the vegetables and fruits irradiated with the weak blue light increase in stomatal aperture when compared with a normal state, due to light stimulation of the blue light. This being so, spaces in the stomata expand, apparent relative humidity in the spaces decreases, and the equilibrium condition is lost, creating a state where water can be easily absorbed. Therefore, the mist adhering to the surfaces of the vegetables and fruits penetrates into tissues from the surfaces of the vegetables and fruits in a stomata open state, as a result of which water is supplied into cells that have wilted due to moisture evaporation, and the vegetables return to a fresh state. Thus, freshness can be recovered.

As shown in FIG. 32A, when the discharge current value is high, the ozone generation amount is high. In the case of low concentration, ozone has the effects of microbial elimination and sterilization, and also agricultural chemical removal by oxidative decomposition and increases in nutrient such as vitamin C through antioxidation can be expected. In the case where the concentration exceeds 30 ppb, however, an ozone odor produces discomfort to human beings, and also ozone acts to accelerate deterioration of resin components included in the storage compartment. Therefore, the ozone concentration adjustment is important. Hence, the concentration is controlled by the discharge current value.

As shown in FIG. 32B, when the atomization amount increases, the current value increases. This causes an increase in air discharge magnitude, so that the ozone generation amount increases, too. Likewise, when there is no water near the application electrode 820, the ozone concentration increases due to an increase in air discharge magnitude. Accordingly, it is important to adjust the water amount of the atomization tank 818 and the atomization amount, as well as the ozone concentration.

FIG. 33A is a characteristic chart showing a relation between a water content recovery effect and a mist spray amount for a wilting vegetable, and a relation between a vegetable appearance sensory evaluation value and a mist spray amount. This experiment has been conducted in a vegetable compartment of 70 liters, and so each spray amount mentioned below is a spray amount per 70 liters.

As shown in FIG. 33A, in the case of performing light irradiation, the vegetable water content recovery effect is 50% or more in a range of 0.05 g/h to 10 g/h (per liter = 0.0007 to 0.14 g/h·l).

When the mist spray amount is excessively small, the amount of water released to outside from stomata of the vegetable cannot be exceeded, and therefore water cannot be supplied to the inside of the vegetable. In addition, a contact frequency of the mist and the stomata in an open state decreases, so that water cannot penetrate into the vegetable easily.

The experiment demonstrates that a lower limit of the spray amount is 0.05 g/h.

When the mist spray amount is excessively large, on the other hand, a water content tolerance in the vegetable is exceeded, and water which cannot be taken in the vegetable will end up adhering to the outside of the vegetable. Such water causes water rot from a part of the vegetable surface, thereby damaging the vegetable.

A range of 10 g/h or more induces such a phenomenon where excess water adheres to the vegetable surface and causes quality deterioration of the vegetable such as water rot, which is unsuitable as the experiment. Accordingly, experimental results of 10 g/h (per liter = 0.15 g/h·l) or more are omitted because they cannot be adopted due to vegetable quality deterioration.

In the case of performing light irradiation, the vegetable water content recovery effect is 70% or more in a range of 0.1 g/h to 10 g/h (per liter = 0.0015 to 0.14 g/h·l). When the lower limit of the mist spray amount is increased to about 0.1 g/h or more in this way, the contact frequency with the stomata in an open state becomes sufficiently high, as a result of which the mist actively penetrates into the vegetable.

In the case of not performing light irradiation, there is no range where the vegetable water content recovery effect is 50% or more, and the water content recovery rate is below 10% in every spray amount. As shown in FIG. 33A, in the case of not performing light irradiation, the stomata are not sufficiently open, and therefore water cannot penetrate into the vegetable unless it has a sufficiently small particle diameter.

FIG. 33B is a characteristic chart showing a change in vitamin C amount when the fine mist according to the present invention is sprayed, where a vitamin C concentration upon storage start is set to 100. This experiment observes a change in vitamin C amount of broccoli when an average amount of vegetables (about 6 kg, 15 kinds of vegetables) are stored in a vegetable compartment of 70 liters for three days and a fine mist of about 0.5 g/h is sprayed, as compared with an existing refrigerator.

Typically, a decrease in vitamin C amount can be suppressed by high humidity and low temperature in an environment of a vegetable compartment of a refrigerator, but the vitamin C amount decreases in proportion to the number of days elapsed. To maintain or increase the vitamin C amount, antioxidation, a stimulus such as light, and the like need to be applied to vegetables.

In view of this, in the refrigerator according to the present invention, vegetables are stimulated by OH radicals or low concentration ozone generated in electrostatic atomization, thereby increasing the vitamin C amount.

As shown in FIG. 33B, while the vitamin C amount decreases by about 6% after thee days from the storage start in a conventional product, the vitamin C concentration of broccoli increases by about 4% after three days in the refrigerator according to the present invention. From this, it can be understood that the stimulation of OH radicals or ozone enables the vegetable to increase in vitamin C amount.

FIG. 33C is a characteristic chart showing a relation between an agricultural chemical removal effect and a mist spray amount when the fine mist is sprayed. In this experiment, a removal process is carried out by spraying the fine mist according to the present invention over 10 grape tomatoes to which malathion of about 3 ppm is attached, with about 0.5 g/h for 12 hours. A remaining malathion concentration after the process is measured by gas chromatography (GC) to calculate a removal rate.

As is clear from FIG. 33C, a spray amount of 0.0007 g/h·L or more is needed to achieve a malathion removal rate of about 50%, and the agricultural chemical removal effect increases with the spray amount.

When the spray amount exceeds 0.07 g/h·L, though the agricultural chemical removal effect can be attained, the generated ozone concentration exceeds 0.03 ppm, making it difficult to apply to household refrigerators in terms of human safety. Note that the ozone concentration of 0.03 ppm does not have a significant ozone odor, and is an upper limit of the ozone concentration that achieves the agricultural chemical decomposition effect without causing any adverse effect such as tissue damage on vegetables. Hence, a proper spray amount range is 0.0007 g/h·L to 0.07 g/h·L.

FIG. 33D is a characteristic chart showing a microbial elimination effect when the fine mist is sprayed. In this experiment, a Petri dish where Escherichia coil of a predetermined initial organism number has been cultured is placed in a container of 70 L at 5°C in advance, the fine mist according to the present invention is sprayed with 1 g/h, and a change in reduction rate of the Escherichia coli number is measured over time. A result when the same amount of spray is performed by an ultrasonic atomization apparatus is shown as a comparison.

As is clear from FIG. 33D, a present invention product exhibits a higher microbial elimination rate than a conventional product, achieving 99.8% elimination after seven days. This can be attributed to the microbial elimination effect by ozone contained in the mist. In this way, vegetables, containers, and the like can be kept clean.

A detailed operation is described below, with reference to the control flowchart of FIGS. 34 and 35.

Having entered a humidity increase mode in Step S801, the electrostatic atomization apparatus 815 is turned on, the spray time t1 is set, the timer t2 is started, and the mist is sprayed into the vegetable compartment 807 in Step S802. Following this, the irradiation unit 817 is turned on in Step S803. As a result, the blue LED 833 illuminates, causing an increase in stomatal aperture of vegetables. This makes it easier for the mist adhering to the vegetable surfaces to be taken into the vegetables from stomata and intercellular spaces.

When the timer t2 exceeds the set time t1 in Step S804, the electrostatic atomization apparatus 815 is turned off, the timer t2 is reset, the stop time t3 is set, and the timer t4 is started. Moreover, the irradiation unit 817 is turned off in Step S806. When the timer t4 exceeds the stop time t3 in Step S807, the timer t4 is reset, and the process returns to Step S802.

When the timer t2 does not exceed the spray time t1 in Step S804, the process goes to an ozone amount determination mode of Step S808 shown in FIG. 35.

Going to Step S808, first the detected current value i is read and determined in Step S809. When the detected current value i is equal to or lower than the preprogrammed first value i1 and equal to or higher than the preprogrammed third value i3, it is determined in Step S810 that the amount of ozone generated by the fine mist sprayed from the nozzle tip 819 near the application electrode 820 is proper. In this case, after waiting for Δt seconds, the process returns to Step S809 and the determination is repeated.

When the detected current value i is not in the range of equal to or higher than the third value i3 and equal to or lower than the first value i1, the process goes to Step S812 to control the current value and the input by varying the voltage applied between the application electrode 820 and the counter electrode 821.

First, when the detected current value i is determined to be higher than the first value i1 in Step S812, the process goes to Step S813. When the detected current is equal to or lower than the second value i2 in Step S813, the current value and the input are reduced by decreasing the voltage applied between the application electrode 820 and the counter electrode 821 by the preset voltage ΔV, thereby suppressing air discharge and reducing the ozone generation amount.

When the detected current value i is higher than the second value i2 in Step S813, it is believed that a large current value induces air discharge, as a result of which the ozone generation amount exceeds an upper limit. This is estimated to be such a situation where there is a large amount of spray or there is no water at the nozzle tip 819 near the application electrode 820. When energization is continued in such a condition, the ozone concentration in the storage compartment rapidly increases, causing a decrease in safety and deterioration of the foods in the vegetable compartment 807. Accordingly, to ensure safety of the electrostatic atomization apparatus 815 and the refrigerator 801, the voltage applied between the application electrode 820 and the counter electrode 821 is decreased to zero to stop the electrostatic atomization apparatus 815 in Step S816. Moreover, the irradiation unit 817 is stopped in Step S817, and then the process goes to Step S805.

When the detected current value i is lower than the third value i3 in Step S812, the process goes to Step S819. When the detected current value i is lower than the fourth value i4 in Step S819, it is believed that some kind of abnormality such as a break occurs in the control circuit. Accordingly, the electrostatic atomization apparatus 815 is stopped in Step S820, and the irradiation unit 817 is stopped. The process then goes to Step S805. In this case, an abnormality flag may be written in a storage device in the circuit so that, when the number of flag writes reaches a predetermined number or more, a notification unit (not shown) attached to the main body of the refrigerator is activated to notify the user.

When the detected current value i is equal to or higher than the fourth value i4 in Step S819, the input and electrostatic energy are increased by increasing the voltage applied between the application electrode 820 and the counter electrode 821, thereby increasing the ozone concentration and the atomization amount. This enhances antimicrobial activity and sterilization, and improves freshness preservation of vegetables.

As described above, in the eighth embodiment, the refrigerator includes: the electrostatic atomization apparatus 815 that includes the application electrode 820 for applying the voltage to the liquid, the counter electrode 821 disposed facing the application electrode 820, and the voltage application unit 835 that applies the high voltage between the application electrode 820 and the counter electrode 821, and generates the fine mist into the storage compartment (vegetable compartment 807); the water supply unit (water collection unit 816) that supplies the liquid to the electrostatic atomization apparatus 815; the ozone amount determination unit 838 that determines the ozone generation amount of the atomization unit (nozzle tip 819) in the electrostatic atomization apparatus 815, the atomization unit spraying the fine mist; and the control unit that controls the electrostatic atomization apparatus 815 according to the signal from the ozone amount determination unit 838. The ozone amount determination unit 838 includes the discharge current detection unit 836 that detects the current when the voltage application unit 835 discharges, and the control unit includes the atomization apparatus control circuit that controls the voltage application unit 835 according to the signal detected by the discharge current detection unit 836. Accordingly, the ozone generation amount can be optimized by recognizing the ozone generation amount of the nozzle tip 819 as the atomization unit on the basis of the current value and controlling the current value. This makes it possible to achieve stabilization of the atomization amount sprayed in the storage compartment (vegetable compartment 807), improved vegetable freshness preservation, microbial elimination of the storage compartment (vegetable compartment 807) and vegetables, decomposition of agricultural chemicals on vegetable surfaces, and increases of nutrients such as vitamin C. Besides, no other detection unit is used, which contributes to a smaller size and a lower cost.

In the eighth embodiment, when the current value i detected by the discharge current detection unit 836 is higher than the first value i1 which is the upper limit of the proper range, the voltage applied between the application electrode 820 and the counter electrode 821 by the voltage application unit 835 is forcibly decreased to prevent an increase in ozone generation amount and ozone concentration in the storage compartment (vegetable compartment 807), with it being possible to reduce the ozone generation amount and enhance safety. Moreover, when the current value i detected by the discharge current detection unit 836 is lower than the third value i3 which is the lower limit of the proper range, the voltage applied between the application electrode 820 and the counter electrode 821 by the voltage application unit 835 is forcibly increased to increase the ozone concentration and the atomization amount, with it being possible to perform spray of a proper atomization amount in the vegetable compartment 807 and improve antimicrobial activity and sterilization and also agricultural chemical decomposition performance. Thus, the ozone generation amount and the ozone concentration in the storage compartment (vegetable compartment 807) can be optimized.

In the eighth embodiment, when the current value i detected by the discharge current detection unit 836 is higher than the second value i2 that is higher by a predetermined value than the first value i1 which is the upper limit of the proper range, the voltage applied between the application electrode 820 and the counter electrode 821 is decreased to zero to stop the electrostatic atomization apparatus 815, thereby further enhancing safety.

In the eighth embodiment, when the current value i detected by the discharge current detection unit 836 is lower than the fourth value i4 that is lower by a predetermined value than the third value i3 which is the lower limit of the proper range, the voltage applied between the application electrode 820 and the counter electrode 821 is decreased to zero to stop the electrostatic atomization apparatus 815. This prevents a large amount of ozone generation by air discharge in a waterless state, thereby enhancing safety. Besides, a reduction in power consumption can be achieved by suppressing unnecessary discharge.

In the eighth embodiment, dew condensation water is used. Since minerals present in tap water and the like are hardly contained in dew condensation water, there is no factor that can cause clogging of the nozzle tip 819, which contributes to improved lifetime reliability.

Note that, in the eighth embodiment, the electrostatic atomization apparatus 815 is powered off upon determining that the door 804 is open, by using a door open/close switch. This suppresses mist spray in an open space, so that the spray efficiency can be improved. In addition, the user can touch foods safely because there is no potential difference.

### (Ninth Embodiment)

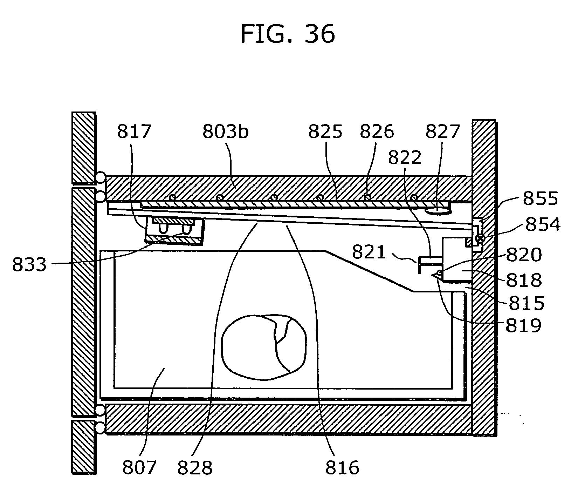

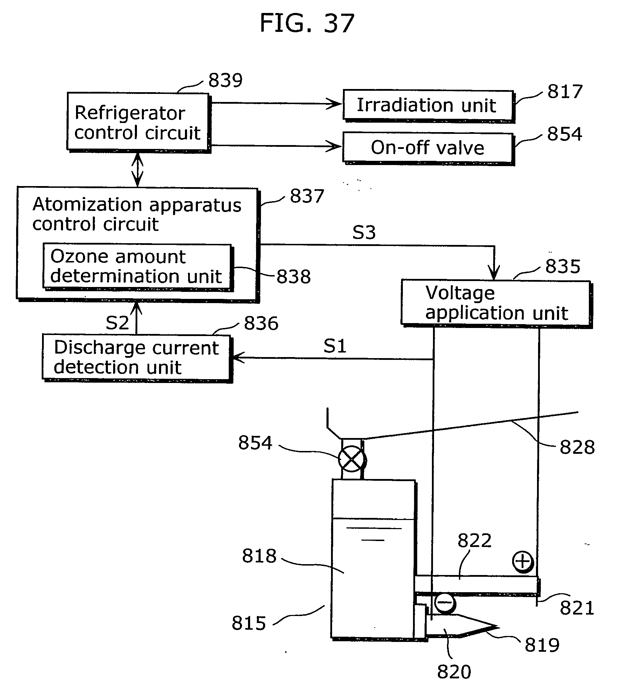

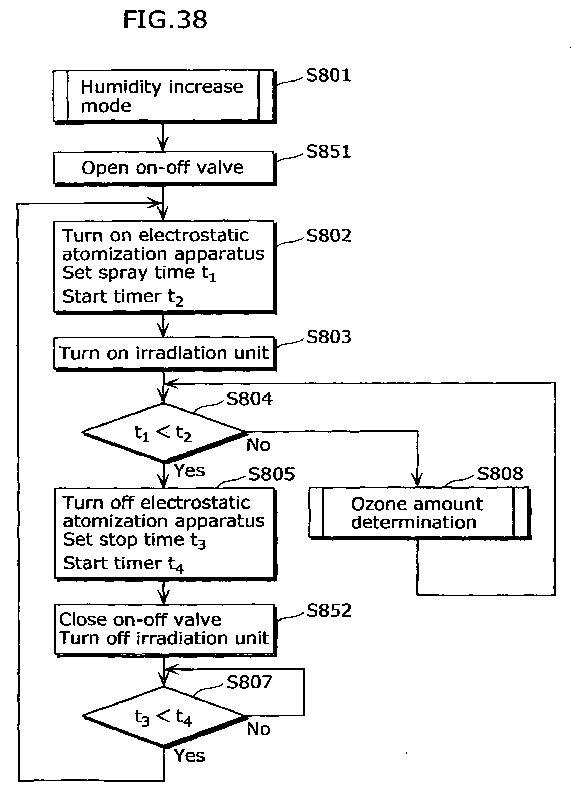

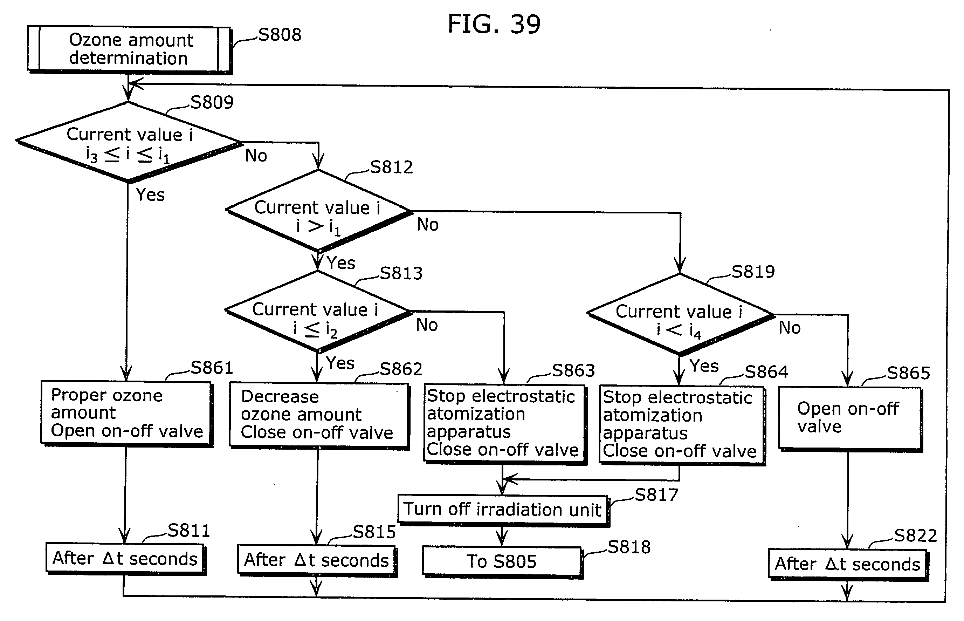

FIG. 36 is a relevant part enlarged sectional view showing a left longitudinal section when a vegetable compartment in a refrigerator in a ninth embodiment not forming part of the present invention is cut into left and right. FIG. 37 is a block diagram showing a control structure related to an electrostatic atomization apparatus in the refrigerator in the ninth embodiment. FIG. 38 is a flowchart showing control of the refrigerator in the ninth embodiment. FIG. 39 is a flowchart showing control in the case of going to an ozone amount determination step in the flowchart shown in FIG. 38.

Note that the same structures as the eighth embodiment are given the same numerals and their detailed description is omitted.

In FIG. 36, the electrostatic atomization apparatus 815 includes the atomization tank 818. The atomization tank 818 and the water collection cover 828 which is a part of the water collection unit 816 are connected by a pipe-like flow path 855 made of a resin or the like, via an on-off valve 854 such as an electromagnetic valve for adjusting the amount of water conveyed to the atomization tank 818.

In FIG. 37, a high voltage is applied between the application electrode 820 and the counter electrode 821 by the voltage application unit 835. The discharge current detection unit 836 detects a current value at the time of application as the signal S1, and inputs the signal to the atomization apparatus control circuit 837 as the control unit as the signal S2. The ozone amount determination unit 838 recognizes an ozone generation amount, and the atomization apparatus control circuit 837 outputs the signal S3 to adjust the output voltage of the voltage application unit 835 and the like. The control unit also performs communication between the atomization apparatus control circuit 837 and the control circuit 839 of the main body of the refrigerator 801, and determines the operations of the irradiation unit 817 and the on-off valve 854.

An operation and effects of the refrigerator having the above-mentioned structure are described below.

Water droplets collected by the water collection cover 828 grow gradually, and flow along an inner surface of the water collection cover 828 into the flow path 855. When the on-off valve 854 is open, the water retained in the water collection cover 828 flows into the atomization tank 818. By applying a high voltage between the application electrode 820 near the nozzle tip 819 as the atomization unit and the counter electrode 821, the water droplets are divided into fine particles. Since the water droplets are electrically charged, the water droplets are divided into finer particles by Rayleigh fission, and a fine mist having extremely small nano-level particles is sprayed into the vegetable compartment 807. Here, the amount of water can be adjusted by an opening/closing time interval of the on-off valve 854. Since the water supply amount can be adjusted in this manner, the ozone generation amount can be adjusted.

Green leafy vegetables, fruits, and the like stored in the vegetable compartment 807 tend to wilt more by transpiration. Usually, some of vegetables and fruits stored in the vegetable compartment 807 are in a rather wilted state as a result of transpiration on the way home from shopping or transpiration during storage. The vegetable surfaces are moistened by the atomized fine mist.

The sprayed fine mist increases the humidity of the vegetable compartment 807 again and simultaneously adheres to the surfaces of the vegetables and fruits in a stomata open state in the vegetable compartment 807. The fine mist penetrates into tissues via stomata, as a result of which water is supplied into cells that have wilted due to moisture evaporation to resolve the wilting by cell turgor pressure, and the vegetables and fruits return to a fresh state. In particular, the fine mist is negatively charged by electrostatic atomization whilst the vegetables are usually positively charged, so that the fine mist tends to adhere to the surfaces. Moreover, since the nano-level particles are also present, water can be absorbed even from intercellular spaces. Since the particles are 1 µm or less, they are extremely lightweight and exhibit enhanced diffusivity. Accordingly, the fine mist spreads throughout the vegetable compartment, thereby improving freshness preservation. In addition, quality can be maintained because the fine mist is inconspicuous even when adhering to containers.

The stomata of the vegetables irradiated with the weak blue light by the irradiation unit 817 increase in stomatal aperture when compared with a normal state, due to light stimulation of the blue light. Therefore, the fine mist adhering to the surfaces of the vegetables and fruits penetrates into tissues from the surfaces of the vegetables and fruits in a stomata open state, as a result of which water is supplied into cells that have wilted due to moisture evaporation, and the vegetables and fruits return to a fresh state. Thus, freshness can be recovered.

A detailed operation is described below, with reference to the control flowchart of FIGS. 38 and 39.

Having entered the humidity increase mode in Step S801, the on-off valve 854 in the flow path 855 is put in an open state, to flow water retained in the water collection cover 828 to the electrostatic atomization apparatus 815 in Step S851. Next, after Δt seconds, the electrostatic atomization apparatus 815 is turned on, the spray time t1 is set, the timer t2 is started, and the fine mist is sprayed into the vegetable compartment 807 in Step S802. Following this, the irradiation unit 817 is turned on in Step S803. As a result, the blue LED 833 illuminates, causing an increase in stomatal aperture of vegetables. This makes it easier for the fine mist adhering to the vegetable surfaces to be taken into the vegetables from stomata and intercellular spaces.

When the timer t2 exceeds the set time t1 in Step S804, the electrostatic atomization apparatus 815 is turned off, the timer t2 is reset, the stop time t3 is set, and the timer t4 is started in Step S805. Moreover, the on-off valve 854 is put in a closed state and the irradiation unit 817 is turned off in Step S852. When the timer t4 exceeds the stop time t3 in Step S807, the timer t4 is reset, and the process returns to Step S802.

When the timer t2 does not exceed the spray time t1 in Step S804, the process goes to the ozone amount determination mode of Step S808 shown in FIG. 39.

Going to Step S808, first the detected current value i is read and determined in Step S809. When the detected current value i is equal to or lower than the preprogrammed first value i1 and equal to or higher than the preprogrammed third value i3, it is determined that the amount of fine mist sprayed from the nozzle tip 819 is proper and therefore the amount of ozone generated from the nozzle tip 819 is proper, and the open state of the on-off valve 854 is continued in Step 861.

After waiting for Δt seconds, the process returns to Step S809 and the determination is repeated. When the detected current value i is not in the range of equal to or higher than the third value i3 and equal to or lower than the first value i1, the process goes to Step S812 to control the amount of water conveyed to the atomization tank 818 in order to adjust the ozone generation amount.

First, when the detected current value i is determined to be higher than the first value i1 in Step S812, the process goes to Step S813. When the detected current is equal to or lower than the second value i2 in Step S813, the operation of the electrostatic atomization apparatus 815 is continued but the on-off valve 854 is switched to the closed state in Step S862. As a result, the atomization amount sprayed from the nozzle tip 819 is reduced, enabling the ozone generation amount to be reduced.

When the detected current value i is higher than the second value i2 in Step S813, it is believed that the atomization amount from the nozzle tip 819 is extremely large. When energization is continued in such a condition, the ozone concentration significantly increases, causing deterioration of the foods in the vegetable compartment 807 and also accelerated deterioration of the components in the storage compartment. Besides, ozone leaks into the room space upon opening/closing of the door, causing discomfort to human beings. Accordingly, to ensure safety of the electrostatic atomization apparatus 815 and the refrigerator 801, the voltage applied between the application electrode 820 and the counter electrode 821 is decreased to zero to stop the electrostatic atomization apparatus 815, and also the on-off valve 854 is switched to the closed state in Step S863. Moreover, the irradiation unit 817 is stopped in Step S817, and then the process goes to Step S805.

When the detected current value i is lower than i 1 in Step S812, the process goes to Step S819. When the detected current value i is lower than the fourth value i4 in Step S819, it is believed that some kind of abnormality such as a break occurs in the control circuit. Accordingly, the electrostatic atomization apparatus 815 is stopped and the on-off valve 854 is closed in Step S864, and the irradiation unit 817 is stopped. The process then goes to Step S805. In this case, an abnormality flag may be written in a storage device in the circuit so that, when the number of flag writes reaches a predetermined number or more, a notification unit (not shown) attached to the main body of the refrigerator is activated to notify the user.

When the detected current value i is equal to or higher than the fourth value i4 in Step S819, the open state of the on-off valve 854 is maintained to thereby maintain the environment of the vegetable compartment.

As described above, in the ninth embodiment, the refrigerator includes: the electrostatic atomization apparatus 815 that includes the application electrode 820 for applying the voltage to the liquid, the counter electrode 821 disposed facing the application electrode 820, and the voltage application unit 835 that applies the high voltage between the application electrode 820 and the counter electrode 821, and generates the fine mist into the storage compartment (vegetable compartment 807); the water supply unit (on-off valve 854) that supplies the liquid to the electrostatic atomization apparatus 815; the ozone amount determination unit 838 that determines the ozone generation amount of the atomization unit (nozzle tip 819) in the electrostatic atomization apparatus 815, the atomization unit spraying the fine mist; and the control unit that controls the electrostatic atomization apparatus 815 according to the signal from the ozone amount determination unit 838. The ozone amount determination unit 838 includes the discharge current detection unit 836 that detects the current when the voltage application unit 835 discharges, and the control unit includes the atomization apparatus control circuit 837 and the refrigerator control circuit 839 that control the on-off valve 854 according to the signal detected by the discharge current detection unit 836. Accordingly, the ozone generation amount can be optimized by recognizing the ozone generation amount of the nozzle tip 819 as the atomization unit on the basis of the current value and optimizing the water supply amount through the on-off valve 854. This makes it possible to achieve improved vegetable freshness preservation and antimicrobial effect, increases of nutrients such as vitamin C, and prevention of water rot caused by dew condensation in the vegetable compartment.

In addition, the water amount can be adjusted easily through the on-off valve 854 for opening/closing the water path, which contributes to a simpler structure and a lower cost.

In the ninth embodiment, when the current value i detected by the discharge current detection unit 836 is higher than the first value i1 which is the upper limit of the proper range, the on-off valve 854 is switched to the closed state to reduce the amount of water supplied to the atomization unit to thereby prevent an increase in ozone generation amount and ozone concentration in the storage compartment (vegetable compartment 807), with it being possible to reduce the ozone generation amount and enhance safety.

In the ninth embodiment, when the current value i detected by the discharge current detection unit 836 is higher than the second value i2 that is higher by a predetermined value than the first value i1 which is the upper limit of the proper range, the voltage applied between the application electrode 820 and the counter electrode 821 is decreased to zero to stop the electrostatic atomization apparatus 815 and also the on-off valve 854 is closed, thereby further enhancing safety.

In the ninth embodiment, when the current value i detected by the discharge current detection unit 836 is lower than the fourth value i4 that is lower by a predetermined value than the third value i3 which is the lower limit of the proper range, the voltage applied between the application electrode 820 and the counter electrode 821 is decreased to zero to stop the electrostatic atomization apparatus 815 and also the on-off valve 854 is closed. This prevents a large amount of ozone generation by air discharge in a waterless state, thereby enhancing safety. Besides, a reduction in power consumption can be achieved by suppressing unnecessary discharge.

In the ninth embodiment, the mist is extremely fine with a particle diameter of 1 µm or less, exhibiting enhanced diffusivity. This reduces dew condensation in the vegetable compartment 807, and also leads to a cost reduction by reducing the number of members.

Though the ninth embodiment describes the case where a spray direction of the electrostatic atomization apparatus 815 is a horizontal direction, the electrostatic atomization apparatus 815 may be directed downward. In such a case, the fine mist is sprayed from above, enabling the fine mist to be diffused uniformly. Since the fine mist can be sprayed throughout the storage space, the storage space can be cooled by latent heat of the mist (water). Accordingly, a cooler capacity for a refrigeration temperature zone can be reduced, with it being possible to achieve a smaller size and a lower cost.

### (Tenth Embodiment)

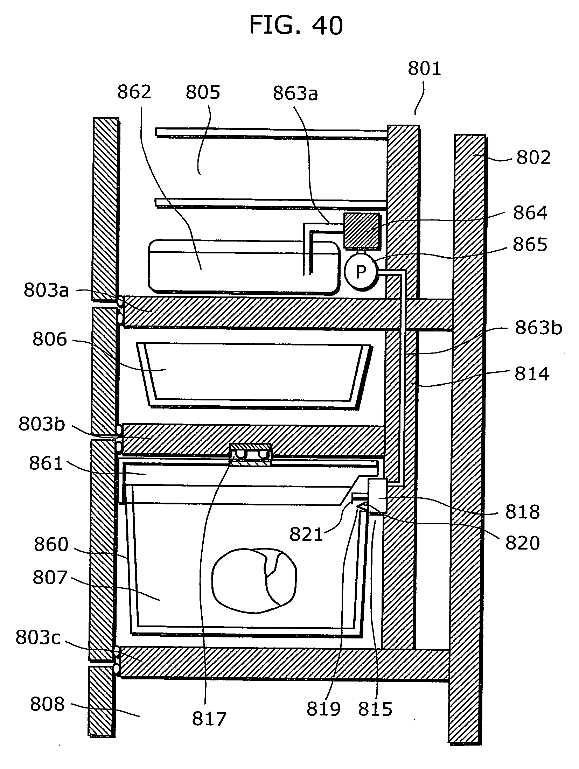

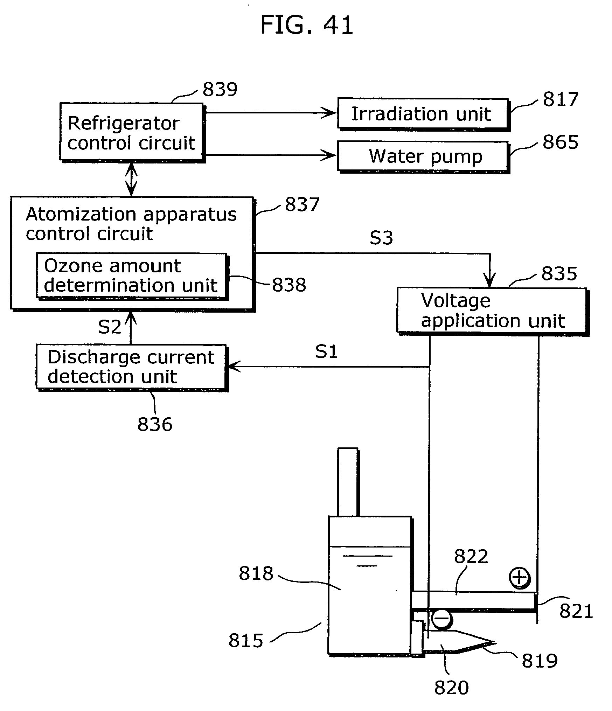

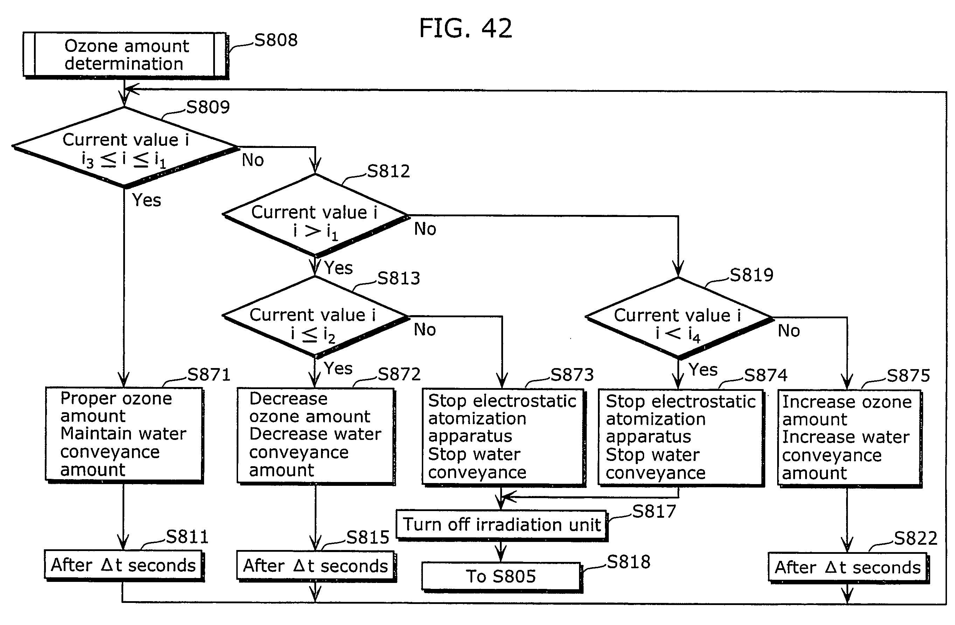

FIG. 40 is a relevant part enlarged sectional view showing a left longitudinal section when a portion from a periphery of a water supply tank in a refrigerator compartment to a vegetable compartment in a refrigerator in a tenth embodiment not forming part of the present invention is cut into left and right. FIG. 41 is a block diagram showing a control structure related to an electrostatic atomization apparatus in the refrigerator in the tenth embodiment. FIG. 42 is a flowchart showing control in the case of going to an ozone amount determination step in control of the refrigerator in the tenth embodiment.

Note that detailed description is given only for parts that differ from the eighth and ninth embodiments, with detailed description being omitted for parts that are the same as the eighth and ninth embodiments.

In FIGS. 40 and 41, in the vegetable compartment 807, foods such as vegetables and fruits are stored in a vegetable case 860, and a lid 861 for maintaining a storage compartment humidity to suppress transpiration from the foods stored in the vegetable case 860 is provided above the vegetable case 860. The nozzle tip 819 as the atomization unit of the electrostatic atomization apparatus 815 as the spray unit is disposed in a gap between the vegetable case 860 and the lid 861 so as to be directed into the storage compartment.

The irradiation unit 817 is attached to the partition 803b. A part of the lid 861 is cut away or made of a transparent material so that the foods in the case can be irradiated.

A water supply tank 862 is formed in the refrigerator compartment 805 to supply water to the electrostatic atomization apparatus 815. The water supply tank 862 and the atomization tank 818 included in the electrostatic atomization apparatus 815 are connected via a filter 864 and a water pump 865 that uses any of a stepping motor, a gear, a tube, a piezoelectric element, and the like, by a flow path 863a and a narrow flow path 863b with the water pump 865 therebetween. Water is supplied to the nozzle tip 819 through the narrow flow path 863b and the atomization tank, with a part of the narrow flow path 863b being buried in the partitions 803a, 803b, and 814 or the refrigerator main body 802.

The electrostatic atomization apparatus 815 detects a discharge current value at the application electrode 820 by the discharge current detection unit 836, and transmits an output of the ozone amount determination unit 838 in the atomization apparatus control circuit 837 to the refrigerator control circuit 839 of the refrigerator main body, thereby determining the operations of the water pump 865 and the irradiation unit 817. Note that the atomization apparatus control circuit 837 and the refrigerator control circuit 839 may be implemented on the same board.

An operation and effects of the refrigerator having the above-mentioned structure are described below.

The operation of the water pump 865 determines whether or not water stored in the water supply tank 862 is supplied to the electrostatic atomization apparatus 815 from the flow path 863. When the water pump 865 is on, water supplied by the user beforehand flows toward the electrostatic atomization apparatus 815. Here, impurities such as dirt and foreign substances are removed from the water flowing through the flow path, by the filter 864 installed in advance. Moreover, since the narrow flow path 863b is sealed, dust and bacteria invasion can be prevented while suppressing clogging of the nozzle tip 819 of the electrostatic atomization apparatus 815. Thus, hygiene can be ensured.

The narrow flow path 863b is buried in a heat insulator such as the partition 814, and prevents freezing of water flowing therein. Though not shown, a temperature compensation heater may be placed around the flow path in close contact with the flow path. Water is supplied from the flow path 863b to the atomization tank 818 in the electrostatic atomization apparatus 815. By applying a high voltage between the application electrode 820 near the nozzle tip 819 as the atomization unit and the counter electrode 821, the water droplets are divided into fine particles. Since the water droplets are electrically charged, the water droplets are divided into finer particles by Rayleigh fission, and a fine mist having extremely small nano-level particles is sprayed into the vegetable compartment 807.

Here, by making the narrow flow path 863b narrower than the flow path 863a, it is possible to easily control a small amount of water and thereby improve spray amount accuracy in the vegetable compartment 807. Moreover, by using the water pump 865, the number of steps, the number of motor revolutions, and the like can be adjusted easily. For example, the amount of water to be conveyed can be controlled using a voltage applied to the water pump 865. This contributes to improved spray amount accuracy in the vegetable compartment 807, with it being possible to control the ozone generation amount.

A detailed operation is described below, with reference to the control flowchart of FIG. 42.

Regarding mist spray, the operation of the electrostatic atomization apparatus 815 and the operations of the irradiation unit 817 and the water pump 865 are determined.

Upon atomization determination in Step S808, first the detected current value i is read and determined in Step S809. When the detected current value i is equal to or lower than the preprogrammed first value i1 and equal to or higher than the preprogrammed third value i3, it is determined that the amount of ozone generated by the fine mist sprayed from the nozzle tip 819 is proper and that the amount of water supplied to the electrostatic atomization apparatus 815 by the water pump 865 is proper, and the water supply amount is continued in Step S871.

After waiting for Δt seconds, the process returns to Step S809 and the determination is repeated. When the detected current value i is not in the range of equal to or higher than the third value i3 and equal to or lower than the first value i1, the process goes to Step S812 to control the water supply amount by the water pump 865 in order to adjust the ozone generation amount of the electrostatic atomization apparatus 815.

First, when the detected current value i is determined to be higher than the first value i1 in Step S812, the process goes to Step S813. When the detected current is equal to or lower than the second value i2 in Step S813, the operation of the electrostatic atomization apparatus 815 is continued but the amount of water flowing from the water pump 865 is decreased in Step S872. As a result, the atomization tank 818 decreases in water level, and the pressure applied to the nozzle tip 819 decreases due to a smaller pressure head difference, so that the atomization amount is reduced and thus the ozone generation amount is reduced.

When the detected current value i is higher than the second value i2 in Step S813, it is believed that an increase in current value is caused by a large atomization amount, and a resulting increase in air discharge leads to a large ozone generation amount. When energization is continued in such a condition, the ozone concentration significantly increases, causing deterioration of the foods in the vegetable compartment 807 and also accelerated deterioration of the components in the storage compartment. Besides, ozone leaks into the room space upon opening/closing of the door, causing discomfort to human beings.

Accordingly, to ensure safety of the electrostatic atomization apparatus 815 and the refrigerator 801, the voltage applied between the application electrode 820 and the counter electrode 821 is decreased to zero to stop the electrostatic atomization apparatus 815 and also the water conveyance of the water pump 865 is stopped in Step S873. Moreover, the irradiation unit 817 is stopped in Step S817, and then the process goes to Step S805.

When the detected current value i is lower than i1 in Step S812, the process goes to Step S819. When the detected current value i is lower than the fourth value i4 in Step S819, it is believed that some kind of abnormality such as a break occurs in the control circuit. Accordingly, the electrostatic atomization apparatus 815 is stopped and the water pump 865 is stopped in Step S874, and the irradiation unit 817 is stopped. The process then goes to Step S805. In this case, an abnormality flag may be written in a storage device in the circuit so that, when the number of flag writes reaches a predetermined number or more, a notification unit (not shown) attached to the main body of the refrigerator is activated to notify the user.

When the detected current value i is equal to or higher than the fourth value i4 in Step S819, the water supply amount of the water pump 865 is increased by a preset amount to thereby increase the atomization amount and also increase the ozone generation amount, for improving antimicrobial activity and accelerating agricultural chemical decomposition.

As described above, in the tenth embodiment, the refrigerator includes: the electrostatic atomization apparatus 815 that includes the application electrode 820 for applying the voltage to the liquid, the counter electrode 821 disposed facing the application electrode 820, and the voltage application unit 835 that applies the high voltage between the application electrode 820 and the counter electrode 821, and generates the fine mist into the storage compartment (vegetable compartment 807); the water supply unit (water pump 865) that supplies the liquid to the electrostatic atomization apparatus 815; the ozone amount determination unit 838 that determines the ozone generation amount of the atomization unit (nozzle tip 819) in the electrostatic atomization apparatus 815, the atomization unit spraying the fine mist; and the control unit that controls the electrostatic atomization apparatus 815 according to the signal from the ozone amount determination unit 838. The ozone amount determination unit 838 includes the discharge current detection unit 836 that detects the current when the voltage application unit 835 discharges, and the control unit includes the atomization apparatus control circuit 837 and the refrigerator control circuit 839 that control the water conveyance amount of the water pump 865 according to the signal detected by the discharge current detection unit 836. Accordingly, the ozone generation amount can be optimized by recognizing the ozone generation amount of the nozzle tip 819 as the atomization unit on the basis of the current value and optimizing the water supply amount through the water conveyance amount of the water pump 865. This makes it possible to achieve improved vegetable freshness preservation and antimicrobial effect, increases of nutrients such as vitamin C, and prevention of water rot caused by dew condensation in the vegetable compartment 807.

Moreover, by using the water pump 865 as the water supply unit, the water amount can be adjusted easily. In addition, since water can be pumped up, the water source such as the water supply tank 862 can be disposed at a lower position than the electrostatic atomization apparatus 815. This increases design flexibility.

In the tenth embodiment, when the current value i detected by the discharge current detection unit 836 is higher than the first value i1 which is the upper limit of the proper range, the amount of water flowing from the water pump 865 is decreased to prevent an increase in ozone generation amount and ozone concentration in the storage compartment (vegetable compartment 807), with it being possible to reduce the ozone generation amount and enhance safety. Moreover, when the current value i detected by the discharge current detection unit 836 is lower than the third value i3 which is the lower limit of the proper range, the water supply amount of the water pump 865 is increased by the preset amount to increase the atomization amount to thereby attain a larger ozone concentration and atomization amount, with it being possible to perform spray of a proper atomization amount in the vegetable compartment 807 and improve antimicrobial activity and sterilization and also agricultural chemical decomposition performance. Thus, the ozone generation amount and the ozone concentration in the storage compartment (vegetable compartment 807) can be optimized.

In the tenth embodiment, when the current value i detected by the discharge current detection unit 836 is higher than the second value i2 that is higher by a predetermined value than the first value i1 which is the upper limit of the proper range, the voltage applied between the application electrode 820 and the counter electrode 821 is decreased to zero to stop the electrostatic atomization apparatus 815 and also the water conveyance of the water pump 865 is stopped, thereby further enhancing safety.

In the tenth embodiment, when the current value i detected by the discharge current detection unit 836 is lower than the fourth value i4 that is lower by a predetermined value than the third value i3 which is the lower limit of the proper range, the voltage applied between the application electrode 820 and the counter electrode 821 is decreased to zero to stop the electrostatic atomization apparatus 815 and also the water conveyance of the water pump 865 is stopped. This prevents a large amount of ozone generation by air discharge in a waterless state, thereby enhancing safety. Besides, a reduction in power consumption can be achieved by suppressing unnecessary discharge.

In the tenth embodiment, a flow path cross-sectional area from the water pump 865 to the atomization tank 818 is smaller than a flow path cross-sectional area from the water supply tank 862 to the water pump 865. Hence, it is possible to easily control a small amount of water and thereby improve spray amount accuracy in the vegetable compartment 807. Moreover, by using the water pump 865, the number of steps, the number of motor revolutions, and the like can be adjusted easily. For example, the amount of water to be conveyed can be controlled using a voltage applied to the water pump 865. This contributes to improved spray amount accuracy in the vegetable compartment 807.

In the tenth embodiment, the use of the water pump 865 allows for adjustment in very small amount, by linearly varying the water conveyance amount by the number of revolutions and the like. Hence, accurate spray amount adjustment can be achieved.

In the tenth embodiment, the water supply tank 862 can be placed outside the vegetable compartment 807. This ensures the capacity of the vegetable compartment 807, allowing for sufficient food storage.

In the tenth embodiment, the water supply tank 862 is disposed in the refrigerator compartment 805, with there being no risk of freezing and no need for a temperature compensation heater. Since the water supply tank 862 can also be used as an ice freezing tank, there is no decrease in storage capacity of the refrigerator.

In the tenth embodiment, by providing the counter electrode in a higher position than the nozzle tip 819, the mist is attracted upward and so the spray distance is extended. Moreover, the mist can be sprayed while avoiding foods near the nozzle tip 819.

Though the counter electrode 821 accompanies the electrostatic atomization apparatus 815 in the tenth embodiment, the counter electrode 821 may be provided in a part of the lid at the top or a part of the container. In such a case, an unwanted protrusion can be eliminated, resulting in an increase in storage capacity.

### (Eleventh Embodiment)

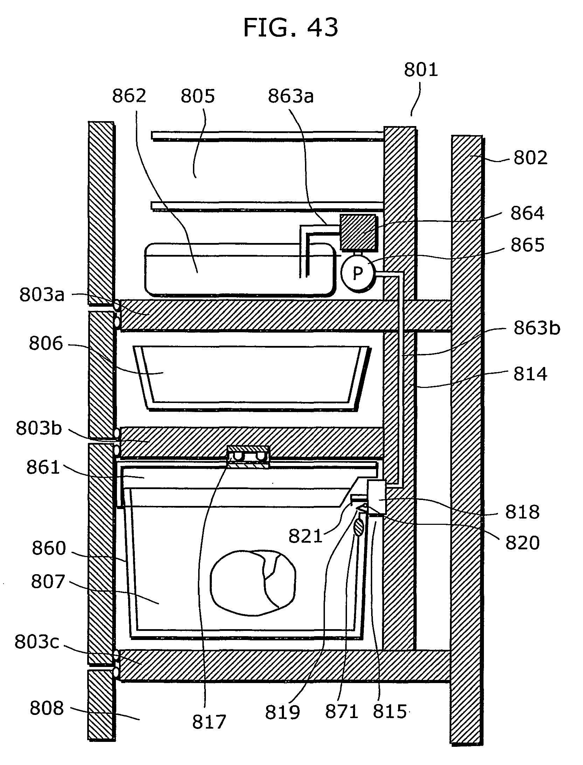

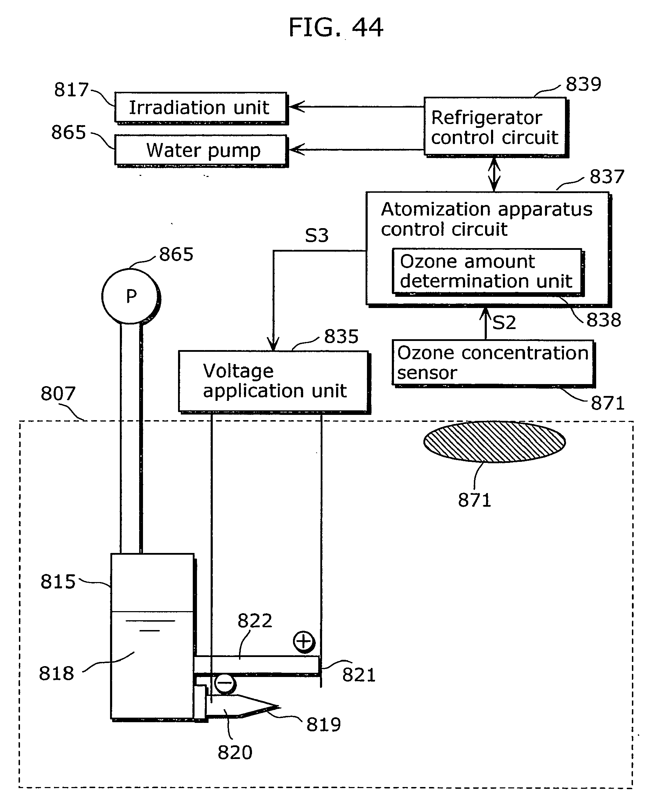

FIG. 43 is a relevant part enlarged sectional view showing a left longitudinal section when a portion from a periphery of a water supply tank in a refrigerator compartment to a vegetable compartment in a refrigerator in an eleventh embodiment not forming part of the present invention is cut into left and right. FIG. 44 is a block diagram showing a control structure related to an electrostatic atomization apparatus in the refrigerator in the eleventh embodiment.

Note that detailed description is given only for parts that differ from the eighth to tenth embodiments, with detailed description being omitted for parts that are the same as the eighth to tenth embodiments.

In FIG. 43, in the vegetable compartment 807, foods such as vegetables and fruits are stored in the vegetable case 860, and the lid 861 for maintaining a storage compartment humidity to suppress transpiration from the foods stored in the vegetable case 860 is provided above the vegetable case 860. The nozzle tip 819 as the atomization unit of the electrostatic atomization apparatus 815 as the spray unit is disposed in a gap between the vegetable case 860 and the lid 861 so as to be directed into the storage compartment.

An ozone concentration sensor 871 capable of detecting an ozone concentration is installed in a space where the vegetables are stored, and detects the ozone concentration state in the storage compartment.

In FIG. 44, the ozone concentration sensor 871 detects the ozone concentration and inputs the signal S2 to the ozone amount determination unit 838 in the atomization apparatus control circuit 837, and the ozone amount determination unit 838 recognizes the ozone concentration state and outputs the signal S3 to adjust the output voltage of the voltage application unit 835 and the like. The control unit also performs communication between the atomization apparatus control circuit 837 and the control circuit 839 of the main body of the refrigerator 801, and determines the operations of the irradiation unit 817 and the water pump 865.

An operation and effects of the refrigerator having the above-mentioned structure are described below.

To generate the fine mist by the electrostatic atomization apparatus 815, the high voltage is applied between the application electrode 820 and the counter electrode 821. This induces some air discharge, as a result of which oxygen or the like in the air changes to ozone. Hence, by installing an ozone concentration detection unit in a part of the space in the vegetable compartment 807 and especially in a space for storing foods or a location communicated with such a space, it is possible to measure the ozone concentration.

Here, the value detected by the ozone concentration sensor 871 is inputted to the ozone amount determination unit 838 in the atomization apparatus control circuit 837 as the signal S2. For example, when detecting that the ozone concentration exceeds 20 ppb, the signal S3 is inputted to the refrigerator control circuit 839 in order to instruct to reduce the water conveyance amount of the water pump 865. As a result, by decreasing the water level of the atomization tank 818, the pressure applied to the nozzle tip 819 is decreased to reduce the spray amount. Hence, the ozone generation amount is reduced.

On the other hand, when the ozone concentration sensor 981 detects that the ozone concentration is equal to or less than 5 ppb, the signal S3 is inputted to the refrigerator control circuit 839 in order to instruct to increase the water conveyance amount of the water pump 865. As a result, by increasing the water level of the atomization tank 818, the pressure applied to the nozzle tip 819 is increased to increase the spray amount. Hence, the ozone generation amount is increased, and the antimicrobial effect in the storage compartment is enhanced.

As described above, in the eleventh embodiment, the refrigerator includes: the electrostatic atomization apparatus 815 that includes the application electrode 820 for applying the voltage to the liquid, the counter electrode 821 disposed facing the application electrode 820, and the voltage application unit 835 that applies the high voltage between the application electrode 820 and the counter electrode 821, and generates the fine mist into the storage compartment (vegetable compartment 807); the water supply unit (water pump 865) that supplies the liquid to the electrostatic atomization apparatus 815; the ozone amount determination unit 838 that determines the ozone generation amount of the atomization unit (nozzle tip 819) in the electrostatic atomization apparatus 815, the atomization unit spraying the fine mist; and the control unit that controls the electrostatic atomization apparatus 815 according to the signal from the ozone amount determination unit 838. The ozone amount determination unit 838 performs the determination according to the output value of the ozone concentration sensor (ozone concentration detection unit) 871 that detects the ozone concentration around the electrostatic atomization apparatus 815, and the control unit includes the atomization apparatus control circuit 837 and the refrigerator control circuit 839 that control the water conveyance amount of the water pump 865 according to the output value of the ozone concentration sensor 871. Since the ozone concentration in the storage compartment (vegetable compartment 807) can be measured directly, it is possible to promptly respond to a change in ozone concentration caused by door opening/closing and the like. Accordingly, the ozone generation amount can be optimized by optimizing the water supply amount through the water conveyance amount of the water pump 865. This makes it possible to achieve improved vegetable freshness preservation and antimicrobial effect, increases of nutrients such as vitamin C, and prevention of water rot caused by dew condensation in the vegetable compartment 807.

In the eleventh embodiment, when the ozone concentration detected by the ozone concentration sensor 871 exceeds the upper limit of the proper range, the water conveyance amount of the water pump 865 is decreased to decrease the water level of the atomization tank 818, thereby reducing the pressure applied to the nozzle tip 819 to reduce the spray amount. This prevents an increase in ozone generation amount and ozone concentration in the storage compartment (vegetable compartment 807), with it being possible to reduce the ozone generation amount and enhance safety. When the ozone concentration detected by the ozone concentration sensor 871 is below the lower limit of the proper range, on the other hand, the water conveyance amount of the water pump 865 is increased to increase the water level of the atomization tank 818, thereby increasing the pressure applied to the nozzle tip 819 to increase the spray amount. This increases the atomization amount to attain a larger ozone concentration and atomization amount, with it being possible to perform spray of a proper atomization amount in the vegetable compartment 807 and improve antimicrobial activity and sterilization and also agricultural chemical decomposition performance. Thus, the ozone generation amount and the ozone concentration in the storage compartment (vegetable compartment 807) can be optimized.

### (Twelfth Embodiment)

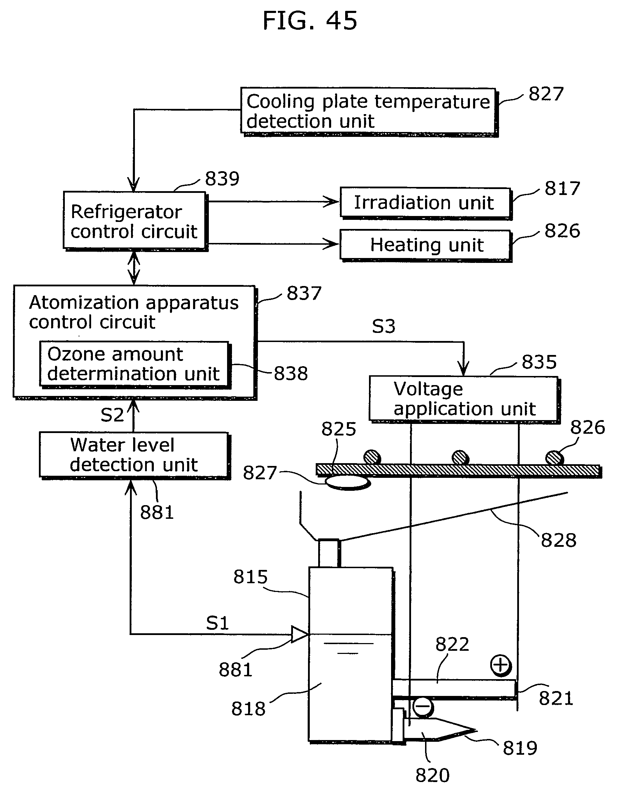

FIG. 45 is a block diagram showing a control structure related to an electrostatic atomization apparatus in a refrigerator in a twelfth embodiment not forming part of the present invention.

Note that detailed description is given only for parts that differ from the eighth to eleventh embodiments, with detailed description being omitted for parts that are the same as the eighth to eleventh embodiments.

In FIG. 45, the electrostatic atomization apparatus 815 includes the atomization tank 818 for holding water from the water collection unit 816, the nozzle tip 819 for spraying to the vegetable compartment 807, and the application electrode 820 disposed at a position near the nozzle tip 819 that is in contact with water. The counter electrode 821 is disposed near the opening of the nozzle tip 819 so as to maintain a constant distance, and the holding member 822 is attached to hold the counter electrode 821. The negative pole of the voltage application unit 835 generating a high voltage is electrically connected to the application electrode 820, and the positive pole of the voltage application unit 835 is electrically connected to the counter electrode 821. The electrostatic atomization apparatus 815 is attached to the water collection cover 828 or the partition 814 by the attachment member connection part 823.

Water droplets of a liquid supplied and adhering to the nozzle tip 819 are finely divided by electrostatic energy of a high voltage applied between the application electrode 820 and the counter electrode 821. Since the liquid droplets are electrically charged, the liquid droplets are further divided into fine particles of several nm to several µm by Rayleigh fission, and an extremely fine mist is sprayed into the vegetable compartment 807.

The atomization tank 818 is provided with a water level detection unit 881 such as a float switch, an infrared sensor, or a position detector using water conductivity, for detecting the water level of the atomization tank 818.

An operation and effects of the refrigerator having the above-mentioned structure are described below.

To generate the fine mist by the electrostatic atomization apparatus 815, the high voltage is applied between the application electrode 820 and the counter electrode 821. This induces some air discharge, as a result of which oxygen or the like in the air changes to ozone. Here, the amount of water present between the application electrode 820 and the counter electrode 821, that is, the spray amount, influences the ozone concentration. In such a case, the spray amount is significantly affected by the water level of the atomization tank 818. In detail, the pressure head difference by the height of the water surface and the nozzle tip 819 determines the amount of water pushed from the tip. Note that, when the nozzle tip 819 has an excessively large pore diameter, the resistance is low, and water runs out soon. Meanwhile, when the nozzle tip 819 has a small pore diameter, clogging tends to occur. Accordingly, a pore diameter with an appropriate resistance, such as a diameter of about 0.2 mm to 0.5 mm, is desirable.

In view of this, the water level detection unit 881 such as a float switch is used to enable the distance between the water surface and the nozzle tip 819 to be measured, thereby adjusting the water level. For example, when the water level is lower than a preset level, the dew condensation amount is increased and the amount of water supplied to the atomization tank 818 is increased.

To do so, the temperature of the cooling plate 825 is decreased, and the amount of heat generation of the heating unit 826 is decreased so as to increase the dew condensation amount. As a result, the dew condensation amount increases, and the water level of the atomization tank 818 returns to the specified level.

When the water level is higher than the preset level, on the other hand, the dew condensation amount is decreased and the amount of water supplied to the atomization tank 818 is decreased. To do so, the temperature of the cooling plate 825 is increased, and the amount of heat generation of the heating unit 826 is increased so as to decrease the dew condensation amount. As a result, the dew condensation amount decreases, and the water level of the atomization tank 818 returns to the specified level.

As described above, in the twelfth embodiment, by using the water level detection unit that detects the water level of the atomization tank in the electrostatic atomization apparatus, the amount of spray from the nozzle tip 819 can be kept constant, and so the ozone concentration can be kept constant. Moreover, the ozone concentration can be varied by adjusting the water level.

### Industrial Applicability

As described above, the refrigerator according to the present invention can achieve appropriate atomization in the storage compartment. Therefore, the present invention is applicable not only to a household or industrial refrigerator and a vegetable case, but also to a food cold chain, a storehouse, and so on for vegetables and like.

## Claims

1. A refrigerator comprising:
a heat-insulated storage compartment (107);
an atomization unit (139) configured to spray a mist into said storage compartment (107);
an atomization state determination unit (156) configured to determine an atomization state of said atomization unit (139), by determining that said atomization unit performs proper spray when a signal detected by said atomization state determination unit is in a specified range determined in advance, and determining that said atomization unit does not perform proper spray when the detected signal is not in the specified range;
a determination timing setting unit (145) configured to set a timing at which said atomization state determination unit (156) operates; and
a control unit (146),
wherein said atomization unit (139) is configured to finely divide water adhering to said atomization unit (139) and spray the finely divided water into said storage compartment (107) as the mist,
said atomization state determination unit (156) is configured to determine the atomization state of said atomization unit (139) according to a signal from said determination timing setting unit (145), and
said control unit (146) is configured to control an operation of said atomization unit (139) according to a result of the determination by said atomization state determination unit (156).

2. The refrigerator according to Claim 1,
wherein said atomization unit (139) includes:
a voltage application unit (133) configured to generate a potential difference; and
an output detection unit (158), and
said atomization state determination unit (156) is configured to determine the atomization state of said atomization unit (139) according to a signal of an applied current that is applied to said voltage application unit (133), the applied current being detected by said output detection unit (158).

3. The refrigerator according to Claim 1,
wherein said atomization unit includes:
a voltage application unit (133) configured to generate a potential difference; and
an output detection unit (158), and
said atomization state determination unit (156) is configured to determine the atomization state of said atomization unit (139) according to a signal of an applied voltage that is applied to said voltage application unit (133), the applied voltage being detected by said output detection unit (158).

4. The refrigerator according to Claim 2,
wherein energization of said voltage application unit (133) is stopped when said atomization state determination unit (156) determines that said atomization unit (139) does not perform proper spray.

5. The refrigerator according to Claim 4,.
wherein said atomization state determination unit (156) is configured to determine the atomization state again, when at least a predetermined time has elapsed after said atomization state determination unit (156) determines that said atomization unit (139) does not perform proper spray.

6. The refrigerator according to Claim 1,
wherein said determination timing setting unit (145) is a damper that adjusts an amount of air to said heat-insulated storage compartment (107), and
said atomization state determination unit (156) is configured to determine the atomization state of said atomization unit (139) when said damper switches from open to closed or from closed to open.

7. The refrigerator according to Claim 1,
wherein said determination timing setting unit is a compressor (109) that cools said storage compartment, and
said atomization state determination unit (156) is configured to determine the atomization state of said atomization unit when said compressor (109) switches from on to off or from off to on.

8. The refrigerator according to Claim 1, further comprising
an outside air temperature detection unit (148) configured to detect an outside air temperature of a main body of said refrigerator,
wherein said determination timing setting unit (145) is changed according to the outside air temperature detected by said outside air temperature detection unit (148).

9. The refrigerator according to Claim 1,
wherein said atomization unit is an electrostatic atomization apparatus (415) that includes: an atomization electrode (420) for applying a voltage to water supplied to a nozzle tip; and a counter electrode (421), and sprays a fine mist into said storage compartment (407),
said atomization state determination unit (156) further includes an atomization amount determination unit (438) configured to determine an atomization amount of the fine mist sprayed from said electrostatic atomization apparatus (415),
said refrigerator further comprises:
a voltage application unit (435) configured to apply a high voltage between said atomization electrode (420) and said counter electrode (421); and a water supply unit (454) configured to supply water to said electrostatic atomization apparatus (415), and
said control unit (439) is configured to adjust the atomization amount of said electrostatic atomization apparatus according to a signal from said atomization amount determination unit (438).

10. The refrigerator according to Claim 9,
wherein said atomization amount determination unit (438) includes a discharge current detection unit (436) configured to detect a current when said voltage application unit (435) discharges, and
said control unit (439) includes a control circuit that controls the voltage of said voltage application unit (435) according to a signal detected by said discharge current detection unit (436).

11. The refrigerator according to Claim 10,
wherein the voltage applied between said atomization electrode (420) and said counter electrode (421) by said voltage application unit (435) is forcibly decreased when the current detected by said discharge current detection unit (436) is higher than a first value that is an upper limit of a proper range.

12. The refrigerator according to Claim 10,
wherein the voltage applied between said atomization electrode (420) and said counter electrode (421) by said voltage application unit (435) is forcibly increased when the current detected by said discharge current detection unit (436) is lower than a third value that is a lower limit of a proper range.

13. The refrigerator according to Claim 9,
wherein said atomization amount determination unit (438) includes a discharge current detection unit (436) configured to detect a current when said voltage application unit discharges, and
said control unit (146) includes a control circuit that controls an amount of water supplied by said water supply unit (454) according to a signal detected by said discharge current detection unit (436).

14. The refrigerator according to Claim 13,
wherein said water supply unit (454) includes a water pump (465), and said control circuit (1439) controls an amount of water conveyed by said water pump (465).

15. The refrigerator according to Claim 13,
wherein said water supply unit (454) includes an on-off valve (454) that opens and closes a water flow path, and
said control circuit (439) controls the opening and closing of said on-off valve.

16. The refrigerator according to Claim 13,
wherein the amount of water supplied to said electrostatic atomization apparatus (415) by said water supply unit (454) is decreased when the current detected by said discharge current detection unit (436) is higher than a first value that is an upper limit of a proper range.

17. The refrigerator according to Claim 13,
wherein the amount of water supplied to said electrostatic atomization apparatus (415) by said water supply unit (454) is increased when the current detected by said discharge current detection unit (436) is lower than a third value that is a lower limit of a proper range.

18. The refrigerator according to Claim 10,
wherein said electrostatic atomization apparatus (415) is stopped when the current detected by said discharge current detection unit (436) is higher than a second value that is higher by a predetermined value than an upper limit of a proper range.

19. The refrigerator according to Claim 10,
wherein said electrostatic atomization apparatus (415) is stopped when the current detected by said discharge current detection unit (436) is lower than a fourth value that is lower by a predetermined value than a lower limit of a proper range.

20. The refrigerator according to Claim 9,
wherein said atomization electrode (420) is cooled to cause ambient air to form dew condensation to thereby generate water.

21. The refrigerator according to Claim 1,
wherein said atomization unit is an electrostatic atomization apparatus (815) that includes: an application electrode (820) for applying a voltage to a liquid; a counter electrode (821) disposed facing said application electrode; and a voltage application unit (835) configured to apply a high voltage between said application electrode and said counter electrode, and generates a fine mist into said storage compartment (807),
said atomization state determination unit (156) further includes an ozone amount determination unit (838) configured to determine an ozone generation amount when said electrostatic atomization apparatus (815) sprays the fine mist,
said refrigerator further comprises
a water supply unit (816) configured to supply a liquid to said electrostatic atomization apparatus (815), and
said control unit (839) is configured to control said electrostatic atomization apparatus (815) according to a signal from said ozone amount determination unit (838).

22. The refrigerator according to Claim 21,
wherein said ozone amount determination unit includes a discharge current detection unit (836) configured to detect a current when said voltage application unit discharges, and
said control unit includes a control circuit (837) that controls said voltage application unit (835) according to a signal detected by said discharge current detection unit (836).

23. The refrigerator according to Claim 22,
wherein the voltage applied between said application electrode (820) and said counter electrode (821) by said voltage application unit is forcibly decreased when the current detected by said discharge current detection unit (836) is higher than a first value that is an upper limit of a proper range, and
the voltage applied between said application electrode (820) and said counter electrode (821) by said voltage application unit is forcibly increased when the current detected by said discharge current detection unit (836) is lower than a third value that is a lower limit of the proper range.

24. The refrigerator according to Claim 21,
wherein said ozone amount determination unit (838) includes a discharge current detection unit configured to detect a current when said voltage application unit (835) discharges, and
said control unit (839) includes a control circuit that controls said water supply unit according to a signal detected by said discharge current detection unit.

25. The refrigerator according to Claim 24,
wherein said water supply unit (816) includes a water pump, and
said control unit (839) is configured to control an amount of water conveyed by said water pump.

26. The refrigerator according to Claim 24,
wherein said water supply unit (816) includes an on-off valve that opens and closes a water path, and
said control unit (839) is configured to control the opening and closing of said on-off valve.

27. The refrigerator according to Claim 24,
wherein an amount of liquid supplied to said electrostatic atomization apparatus (815) by said water supply unit (816) is decreased when the current detected by said discharge current detection unit (836) is higher than a first value that is an upper limit of a proper range, and
the amount of liquid supplied to said electrostatic atomization apparatus (815) by said water supply unit (816) is increased when the current detected by said discharge current detection unit (836) is lower than a third value that is a lower limit of the proper range.

28. The refrigerator according to Claim 22,
wherein said electrostatic atomization apparatus (815) is stopped when the current detected by said discharge current detection unit (836) is higher than a second value that is higher by a predetermined value than an upper limit of a proper range.

29. The refrigerator according to Claim 22,
wherein said electrostatic atomization apparatus (815) is stopped when the current detected by said discharge current detection unit is lower than a fourth value that is lower by a predetermined value than a lower limit of a proper range.

30. The refrigerator according to Claim 21,
wherein said ozone amount determination unit (838) includes an ozone concentration detection unit configured to detect an ambient ozone concentration of said electrostatic atomization apparatus (815).

31. The refrigerator according to Claim 30,
wherein said control unit includes a control circuit that controls said voltage application unit (835) or said water supply unit (816) so that the ozone concentration is in a predetermined range, according to a signal detected by said ozone concentration detection unit (838).

## Patentansprüche

1. Kühlschrank umfassend:
ein wärmeisoliertes Speicherabteil (107);
eine Atomisierungseinheit (139), die konfiguriert ist, ein Aerosol in das Speicherabteil (107) zu sprühen;
eine Atomisierungszustandsbestimmungseinheit (156) die konfiguriert ist, einen Atomisierungszustand der Atomisierungseinheit (139) zu bestimmen, durch Bestimmen, dass die Atomisierungseinheit ein geeignetes Sprühen durchführt, wenn ein Signal, das durch die Atomisierungszustandsbestimmungseinheit erfasst wird, in einem vorher bestimmten, spezifischen Bereich ist, und durch Bestimmen, dass die Atomisierungseinheit kein geeignetes Sprühen durchführt, wenn das erfasste Signal nicht in dem bestimmten Bereich ist;
eine Bestimmungszeiteinstelleinheit (145), die konfiguriert ist, eine Zeit, in der die Atomisierungszustandsbestimmungseinheit (156) tätig ist, zu setzen; und
eine Steuerungseinheit (146),
wobei die Atomisierungseinheit (139) konfiguriert ist, Wasser, das in der Atomisierungseinheit (139) beinhaltet ist, fein zu zerteilen und das fein zerteilte Wasser als Aerosol in das Speicherabteil (107) zu sprühen,
wobei die Atomisierungszustandsbestimmungseinheit(156) konfiguriert ist, den Atomisierungszustand der Atomisierungseinheit (139) gemäß einem Signal von der Bestimmungszeiteinstelleinheit (145) zu bestimmen, und
wobei die Steuereinheit (146) konfiguriert ist, einen Betrieb der Atomisierungseinheit (139) gemäß einem Ergebnis der Bestimmung durch die Atomisierungszustandsbestimmungseinheit (156) zu steuern.

2. Kühlschrank nach Anspruch 1,
wobei die Atomisierungseinheit (139) umfasst:
eine Spannungsapplikationseinheit (133), die konfiguriert ist, ein Differenzpotenzial zu generieren; und
eine Ausgabedetektionseinheit (158), und
die Atomisierungszustandsbestimmungseinheit (156) konfiguriert ist, den Atomisierungszustand der Atomisierungseinheit (139) gemäß einem Signal über einen angewendeten Strom, der von der Spannungsapplikationseinheit (133) bereitgestellt wird, zu bestimmen, wobei der bereitgestellte Strom von der Ausgabedetektionseinheit (158) erfasst wird.

3. Kühlschrank nach Anspruch 1,
wobei die Atomisierungseinheit umfasst:
eine Spannungsapplikationseinheit (133) die konfiguriert ist, eine Potenzialdifferenz zu generieren; und
eine Ausgabedetektionseinheit (158), und
die Atomisierungszustandsbestimmungseinheit (156) konfiguriert ist, den Atomisierungszustand der Atomisierungseinheit (139) gemäß einem Signal über eine applizierte Spannung, die der Spannungsapplikationseinheit (133) zugefügt wird, zu bestimmen, wobei die zugefügte Spannung von der Ausgabedetektionseinheit (158) erfasst wird.

4. Kühlschrank nach Anspruch 2,
wobei eine Energieversorgung der Spannungapplikationseinheit (133) gestoppt wird, wenn die Atomisierungszustandsbestimmungseinheit (156) bestimmt, dass die Atomisierungseinheit (139) kein geeignetes Sprühen durchführt.

5. Kühlschrank nach Anspruch 4,
wobei die Atomisierungszustandsbestimmungseinheit (156) konfiguriert ist, erneut einen Atomisierungszustand zu bestimmen, wenn mindestens eine vorbestimmte Zeit verstrichen ist, nachdem die Atomisierungszustandsbestimmungseinheit (156) bestimmt hat, dass die Atomisierungseinheit (139) kein geeignetes Sprühen durchführt.

6. Kühlschrank nach Anspruch 1,
wobei die Bestimmungszeiteinstelleinheit (145) eine Klappe ist, die eine Luftmenge zu dem wärmeisolierten Speicherabteil (107) reguliert, und
die Atomisierungszustandsbestimmungseinheit (156) konfiguriert ist, einen Atomisierungszustand der Atomisierungseinheit (139) zu bestimmen, wenn die Klappe von offenen auf geschlossen oder von geschlossenen auf offen wechselt.

7. Kühlschrank nach Anspruch 1,
wobei die Bestimmungszeiteinstelleinheit ein Kompressor (109) ist, der das Speicherabteil kühlt, und
die Atomisierungszustandsbestimmungseinheit (156) konfiguriert ist, einen Atomisierungszustand der Atomisierungseinheit zu bestimmen, wenn der Kompressor (109) von an auf aus oder von aus auf an schaltet.

8. Kühlschrank nach Anspruch 1, ferner umfassend
eine Außentemperaturbestimmungseinheit (148), die konfiguriert ist, eine Außentemperatur eines Hauptteils des Kühlschrankes zu bestimmen,
wobei die Bestimmungszeiteinstelleinheit (145) in Abhängigkeit der Außentemperatur, die von der Außentemperaturbestimmungseinheit (148)erfasst wird, geändert wird.

9. Kühlschrank nach Anspruch 1,
wobei die Atomisierungseinheit eine elektrostatische Atomisierungsvorrichtung (415) ist, die umfasst: eine Atomisierungselektrode (420) zum Applizieren einer Spannung an Wasser, das an einer Düsenspitze bereitgestellt wird; und einer Gegenelektrode (421), und die ein feines Aerosol in das Speicherabteil (407) sprüht,
die Atomisierungszustandsbestimmungseinheit (156) ferner eine Atomisierungsmengenbestimmungseinheit (438) umfasst, die konfiguriert ist, eine Atomisierungsmenge des feinen Aerosols, das von der elektrostatischen Atomisierungsvorrichtung (415) versprüht wird, zu bestimmen,
der Kühlschrank ferner umfasst:
eine Spannungsversorgungseinheit (435), die konfiguriert ist, eine Hochspannung zwischen der Atomisierungselektrode (420) und der Gegenelektrode (421) anzulegen; und
eine Wasserversorgungseinheit (454), die konfiguriert ist, Wasser für die elektrostatische Atomisierungsvorrichtung (415) bereitzustellen, und
eine Steuereinheit (439), die konfiguriert ist, eine Atomisierungsmenge der elektrostatischen Atomisierungsvorrichtung gemäß einem Signal von der Atomisierungsmengenbestimmungseinheit (438) anzupassen.

10. Kühlschrank nach Anspruch 9,
wobei die Atomisierungsmengenbestimmungseinheit (438) eine Entladungsstrombestimmungseinheit (436) umfasst, die konfiguriert ist, einen Strom zu bestimmen, wenn die Spannungsversorgungseinheit (435) sich entlädt, und
die Steuereinheit (439) eine Steuerschaltung umfasst, welche die Spannung der Spannungsversorgungseinheit (435) gemäß einem Signal, welches durch die Entladungsstrombestimmungseinheit (436) bestimmt wird, steuert.

11. Kühlschrank nach Anspruch 10,
wobei die Spannung, die zwischen der Atomisierungselektrode (420) und der Gegenelektrode (421) durch die Spannungsversorgungseinheit (435) angelegt ist, zwangsweise verringert wird, wenn der Strom, der durch die Entladungsstrombestimmungseinheit (436) bestimmt wird, höher ist als ein erster Wert, der eine Obergrenze eines zulässigen Bereichs ist.

12. Kühlschrank nach Anspruch 10, wobei die Spannung, die zwischen der Atomisierungselektrode (420) und der Gegenelektrode (421) durch die Spannungsversorgungseinheit (435) angelegt ist, zwangsweise erhöht wird, wenn der Strom, der durch die Entladungsstrombestimmungseinheit (436) bestimmt wird, geringer ist als ein dritter Wert, der eine Untergrenze eines zulässigen Bereichs ist.

13. Kühlschrank nach Anspruch 9,
wobei die Atomisierungsmengenbestimmungseinheit (438) eine Entladungsstrombestimmungseinheit (436) umfasst, die konfiguriert ist, einen Strom zu bestimmen, wenn die Spannungsversorgungseinheit sich entlädt, und
die Steuereinheit (146) eine Steuerschaltung umfasst, die eine Menge an Wasser, das von der Wasserversorgungseinheit (454) bereitgestellt wird, gemäß einem Signal, das mittels der Entladungsstrombestimmungseinheit (436) bestimmt wird, steuert.

14. Kühlschrank nach Anspruch 13, wobei die Wasserversorgungseinheit (454) eine Wasserpumpe (465) umfasst, und
die Steuereinheit (1439) eine Menge an Wasser, das durch die Wasserpumpe (465) befördert wird, steuert.

15. Kühlschrank nach Anspruch 13,
wobei die Wasserversorgungseinheit (454) ein Auf-Zu-Ventil (454) umfasst, das einen Wasserflusspfad öffnet und schließt, und
die Steuereinheit (439) das Öffnen und Schließen des Auf-Zu-Ventils steuert.

16. Kühlschrank nach Anspruch 13,
wobei die Menge an Wasser, die an die elektrostatische Atomisierungsvorrichtung (415) durch die Wasserversorgungseinheit (454) bereitgestellt wird, verringert wird, wenn der Strom, der mittels der Entladungsstrombestimmungseinheit (436) bestimmt wird, höher ist als ein erster. Wert, der eine Obergrenze eines zulässigen Bereiches ist.

17. Kühlschrank nach Anspruch 13,
wobei die Menge an Wasser, die an die elektrostatische Atomisierungsvorrichtung (415) durch die Wasserversorgungseinheit (454) bereitgestellt wird, erhöht wird, wenn der Strom, der mittels der Entladungsstrombestimmungseinheit (436) bestimmt wird, geringer ist als ein dritter Wert, der eine Untergrenze eines zulässigen Bereiches ist.

18. Kühlschrank nach Anspruch 10,
wobei die elektrostatische Atomisierungsvorrichtung (415) gestoppt wird, wenn der Strom, der von der Entladungsstrombestimmungseinheit (436) bestimmt wird, höher ist als ein zweiter Wert, der um einen vorbestimmten Wert höher ist als eine Obergrenze eines zulässigen Bereiches.

19. Kühlschrank nach Anspruch 10,
wobei die elektrostatische Atomisierungsvorrichtung (415) gestoppt wird, wenn der Strom, der von der Entladungsstrombestimmungseinheit (436) bestimmt wird, kleiner ist als einen vierter Wert, der um einen vorbestimmten Wert kleiner ist als eine Untergrenze eines zulässigen Bereich ist.

20. Kühlschrank nach Anspruch 9,
wobei die Atomisierungselektrode (420) gekühlt wird, damit Umgebungsluft Taukondensation bildet und so Wasser generiert.

21. Kühlschrank nach Anspruch 1,
wobei die Atomisierungseinheit eine elektrostatische Atomisierungsvorrichtung (815) ist, die umfasst: eine Applikationselektrode (820) zum Applizieren einer Spannung an eine Flüssigkeit; eine Gegenelektrode (821), die so angeordnet ist, dass sie der Applikationselektrode gegenüberliegt; und eine Spannungsversorgungsvorrichtung (835), die konfiguriert ist, eine Hochspannung zwischen der Applikationselektrode und der Gegenelektrode zu applizieren, und ein feines Aerosol in dem Speicherabteil (807) erzeugt;
die Atomisierungszustandsbestimmungseinheit (156) umfasst ferner eine Ozonmengenbestimmungseinheit (838), die konfiguriert ist, eine erzeugte Ozonmenge zu bestimmen, wenn die elektrostatische Atomisierungsvorrichtung (815) das feine Aerosol sprüht,
wobei der Kühlschrank ferner umfasst
eine Wasserversorgungseinheit (816), die konfiguriert ist, die elektrostatische Atomisierungsvorrichtung (815) mit einer Flüssigkeit zu versorgen, und
die Steuereinheit (839) konfiguriert ist, die elektrostatische Atomisierungsvorrichtung (815) gemäß einem Signal von der Ozonmengenbestimmungseinheit (838) zu steuern.

22. Kühlschrank nach Anspruch 21,
wobei die Ozonmengenbestimmungseinheit eine Entladungsstrombestimmungseinheit (836) umfasst, die konfiguriert ist, einen Strom zu bestimmen, wenn die Spannungsversorgungeinheit sich entlädt, und
die Steuereinheit eine Steuerungsschaltung (837) umfasst, die die Spannungsversorgungseinheit (835) gemäß einem Signal, dass von der Entladungsstrombestimmungseinheit (836) bestimmt wird, steuert.

23. Kühlschrank nach Anspruch 22,
wobei die Spannung, die zwischen der Applikationselektrode (820) und der Gegenelektrode (821) durch die Spannungsversorgungseinheit angelegt ist, zwangsweise verringert wird, wenn der Strom, der durch die Entladungsstrombestimmungseinheit (836) bestimmt wird, größer ist als ein erster Wert, der eine Obergrenze eines zulässigen Bereiches ist, und
die Spannung, die zwischen der Applikationselektrode (820) und der Gegenelektrode (821) durch die Spannungsversorgungseinheit angelegt ist, zwangsweise verringert wird, wenn der Strom, der von der Entladungsstrombestimmungseinheit (836) bestimmt wird, kleiner ist als ein dritter Wert, der eine Untergrenze des zulässigen Bereiches ist.

24. Kühlschrank nach Anspruch 21, wobei die Ozonmengenbestimmungseinheit (838) eine Entladungsstrombestimmungseinheit umfasst, die konfiguriert ist, einen Strom zu bestimmen, wenn die Spannungsversorgungseinheit (835) sich entlädt, und
die Steuereinheit (839) eine Steuerschaltung umfasst, die die Wasserversorgungseinheit gemäß einem Signal, das durch die Entladungsstrombestimmungseinheit bestimmt wird, steuert.

25. Kühlschrank nach Anspruch 24,
wobei die Wasserversorgungseinheit (816) eine Wasserpumpe umfasst, und
die Steuereinheit (839) konfiguriert ist, eine Menge an Wasser, dass der Wasserpumpe zugeführt wird, zu steuern.

26. Kühlschrank nach Anspruch 24,
wobei die Wasserversorgungseinheit (816) ein Auf-Zu-Ventil umfasst, das einen Wasserflusspfad öffnet und schließt, und
die Steuereinheit (839) das Öffnen und Schließen des Auf-Zu-Ventils steuert.

27. Kühlschrank nach Anspruch 24,
wobei die Menge an Flüssigkeit, die an die elektrostatische Atomisierungsvorrichtung (815) durch die Wasserversorgungseinheit (816) bereitgestellt wird, verringert wird, wenn der Strom, der mittels der Entladungsstrombestimmungseinheit (836) bestimmt wird, höher ist als ein erster. Wert, der eine Obergrenze eines zulässigen Bereiches ist.
wobei die Menge an Flüssigkeit, die an die elektrostatische Atomisierungsvorrichtung (815) durch die Wasserversorgungseinheit (816) bereitgestellt wird, erhöht wird, wenn der Strom, der mittels der Entladungsstrombestimmungseinheit (836) bestimmt wird, geringer ist als ein dritter Wert, der eine Untergrenze eines zulässigen Bereiches ist.

28. Kühlschrank nach Anspruch 22,
wobei die elektrostatische Atomisierungsvorrichtung (815) gestoppt wird, wenn der Strom, der von der Entladungsstrombestimmungseinheit (836) bestimmt wird, höher ist als ein zweiter Wert, der um einen vorbestimmten Wert höher ist als eine Obergrenze eines zulässigen Bereiches.

29. Kühlschrank nach Anspruch 22,
wobei die elektrostatische Atomisierungsvorrichtung (815) gestoppt wird, wenn der Strom, der von der Entladungsstrombestimmungseinheit (836) kleiner ist als einen vierter Wert, der um einen vorbestimmten Wert kleiner ist als eine Untergrenze eines zulässigen Bereich ist.

30. Kühlschrank nach Anspruch 21,
wobei die Ozonmengenbestimmungseinheit (838) eine Ozonkonzentrationsbestimmungseinheit umfasst, die konfiguriert ist, eine die elektrostatische Atomisierungsvorrichtung (815) umgebende Ozonkonzentration zu bestimmen.

31. Kühlschrank nach Anspruch 30,
wobei die Steuereinheit eine Steuerschaltung umfasst, die die Spannungsversorgungseinheit (835) oder die Wasserversorgungseinheit (816) steuert, so dass die Ozonkonzentration in einem vorher bestimmten Bereich ist, gemäß einem Signal, das von der Ozonkonzentrationsbestimmungseinheit (838) bestimmt wird.

## Revendications

1. Réfrigérateur comprenant :
un compartiment de stockage (107) calorifugé ;
une unité d'atomisation (139) configurée pour pulvériser une brume dans ledit compartiment de stockage (107) ;
une unité de détermination d'état d'atomisation (156) configurée pour déterminer un état d'atomisation de ladite unité d'atomisation (139) en déterminant que ladite unité d'atomisation effectue une pulvérisation correcte lorsqu'un signal détecté par ladite unité de détermination d'état d'atomisation se trouve dans une plage spécifiée déterminée à l'avance, et en déterminant que ladite unité d'atomisation n'effectue pas une pulvérisation correcte lorsque le signal détecté ne se trouve pas dans la plage spécifiée ;
une unité de réglage de cadence de détermination (145) configurée pour régler une cadence à laquelle fonctionne l'unité de détermination d'état d'atomisation (156) ; et
une unité de commande (146),
ladite unité d'atomisation (139) étant configurée pour diviser finement l'eau adhérant à ladite unité d'atomisation (139) et pulvériser l'eau finement divisée dans ledit compartiment de stockage (107) sous forme de brume,
ladite unité de détermination d'état d'atomisation (156) étant configurée pour déterminer l'état d'atomisation de ladite unité d'atomisation (139) conformément à un signal de ladite unité de réglage de cadence de détermination (145), et
ladite unité de commande (146) étant configurée pour commander le fonctionnement de ladite unité d'atomisation (139) conformément à un résultat de la détermination par ladite unité de détermination d'état d'atomisation (156).

2. Réfrigérateur selon la revendication 1,
avec lequel ladite unité d'atomisation (139) comprend :
une unité d'application de tension (133) configurée pour générer une différence de potentiel ; et
une unité de détection de sortie (158), et
ladite unité de détermination d'état d'atomisation (156) est configurée pour déterminer l'état d'atomisation de ladite unité d'atomisation (139) conformément à un signal d'un courant appliqué qui est appliqué à ladite unité d'application de tension (133), le courant appliqué étant détecté par ladite unité de détection de sortie (158).

3. Réfrigérateur selon la revendication 1,
avec lequel ladite unité d'atomisation comprend :
une unité d'application de tension (133) configurée pour générer une différence de potentiel ; et
une unité de détection de sortie (158), et
ladite unité de détermination d'état d'atomisation (156) est configurée pour déterminer l'état d'atomisation de ladite unité d'atomisation (139) conformément à un signal d'une tension appliquée qui est appliquée à ladite unité d'application de tension (133), la tension appliquée étant détectée par ladite unité de détection de sortie (158).

4. Réfrigérateur selon la revendication 2,
avec lequel l'alimentation en énergie de ladite unité d'application de tension (133) est mise à l'arrêt lorsque ladite unité de détermination d'état d'atomisation (156) détermine que ladite unité d'atomisation (139) n'effectue pas une pulvérisation correcte.

5. Réfrigérateur selon la revendication 4,
avec lequel ladite unité de détermination d'état d'atomisation (156) est configurée pour déterminer à nouveau l'état d'atomisation quand au moins une durée prédéterminée s'est écoulée après que ladite unité de détermination d'état d'atomisation (156) a déterminé que ladite unité d'atomisation (139) n'effectue pas une pulvérisation correcte.

6. Réfrigérateur selon la revendication 1,
avec lequel ladite unité de réglage de cadence de détermination (145) est un registre qui ajuste le volume d'air vers ledit compartiment de stockage (107) calorifugé, et
ladite unité de détermination d'état d'atomisation (156) est configurée pour déterminer l'état d'atomisation de ladite unité d'atomisation (139) lorsque ledit registre bascule de la position ouverte à la position fermée ou de la position fermée à la position ouverte.

7. Réfrigérateur selon la revendication 1,
avec lequel ladite unité de réglage de cadence de détermination est un compresseur (109) qui refroidit ledit compartiment de stockage, et
ladite unité de détermination d'état d'atomisation (156) est configurée pour déterminer l'état d'atomisation de ladite unité d'atomisation lorsque ledit compresseur (109) commute de l'état de marche à l'état d'arrêt ou de l'état d'arrêt à l'état de marche.

8. Réfrigérateur selon la revendication 1, comprenant en outre
une unité de détection de la température de l'air extérieur (148) configurée pour détecter une température d'air extérieur du corps principal dudit réfrigérateur,
ladite unité de réglage de cadence de détermination (145) étant modifiée conformément à la température d'air extérieur détectée par ladite unité de détection de la température de l'air extérieur (148).

9. Réfrigérateur selon la revendication 1,
avec lequel ladite unité d'atomisation est un appareil d'atomisation électrostatique (415) qui comprend : une électrode d'atomisation (420) destinée à appliquer une tension à l'eau délivrée à une pointe de buse ; et une électrode auxiliaire (421), et pulvérise une brume fine dans ledit compartiment de stockage (407),
ladite unité de détermination d'état d'atomisation (156) comprenant en outre une unité de détermination de volume d'atomisation (438) configurée pour déterminer un volume atomisé de la brume fine pulvérisée depuis ledit appareil d'atomisation électrostatique (415),
ledit réfrigérateur comprenant en outre :
une unité d'application de tension (435) configurée pour appliquer une haute tension entre ladite électrode d'atomisation (420) et ladite électrode auxiliaire (421) ;
une unité d'alimentation en eau (454) configurée pour alimenter ledit appareil d'atomisation électrostatique (415) en eau, et
ladite unité de commande (439) est configurée pour ajuster le volume d'atomisation dudit appareil d'atomisation électrostatique conformément à un signal provenant de ladite unité de détermination de volume d'atomisation (438).

10. Réfrigérateur selon la revendication 9,
avec lequel ladite unité de détermination de volume d'atomisation (438) comprend une unité de détection de courant de décharge (436) configurée pour détecter un courant lorsque ladite unité d'application de tension (435) se décharge, et
ladite unité de commande (439) comprend un circuit de commande qui commande la tension de ladite unité d'application de tension (435) conformément à un signal détecté par ladite unité de détection de courant de décharge (436).

11. Réfrigérateur selon la revendication 10,
avec lequel la tension appliquée entre ladite électrode d'atomisation (420) et ladite électrode auxiliaire (421) par ladite unité d'application de tension (435) est réduite de force lorsque le courant détecté par ladite unité de détection de courant de décharge (436) est supérieur à une première valeur qui est une limite haute d'une plage correcte.

12. Réfrigérateur selon la revendication 10,
avec lequel la tension appliquée entre ladite électrode d'atomisation (420) et ladite électrode auxiliaire (421) par ladite unité d'application de tension (435) est augmentée de force lorsque le courant détecté par ladite unité de détection de courant de décharge (436) est inférieur à une troisième valeur qui est une limite basse d'une plage correcte.

13. Réfrigérateur selon la revendication 9,
avec lequel ladite unité de détermination de volume d'atomisation (438) comprend une unité de détection de courant de décharge (436) configurée pour détecter un courant lorsque ladite unité d'application de tension se décharge, et
ladite unité de commande (146) comprend un circuit de commande qui commande une quantité d'eau délivrée par ladite unité d'alimentation en eau (454) conformément à un signal détecté par ladite unité de détection de courant de décharge (436).

14. Réfrigérateur selon la revendication 13,
avec lequel ladite unité d'alimentation en eau (454) comprend une pompe à eau (465), et ledit circuit de commande (1439) commande une quantité d'eau transportée par l'adite pompe à eau (465).

15. Réfrigérateur selon la revendication 13,
avec lequel ladite unité d'alimentation en eau (454) comprend une vanne tout-ou-rien (454) qui ouvre et ferme un trajet d'écoulement d'eau, et
ledit circuit de commande (439) commande l'ouverture et la fermeture de ladite vanne tout-ou-rien.

16. Réfrigérateur selon la revendication 13,
avec lequel la quantité d'eau délivrée audit appareil d'atomisation électrostatique (415) par ladite unité d'alimentation en eau (454) est réduite lorsque le courant détecté par ladite unité de détection de courant de décharge (436) est supérieur à une première valeur qui est une limite haute d'une plage correcte.

17. Réfrigérateur selon la revendication 13,
avec lequel la quantité d'eau délivrée audit appareil d'atomisation électrostatique (415) par ladite unité d'alimentation en eau (454) est augmentée lorsque le courant détecté par ladite unité de détection de courant de décharge (436) est inférieur à une troisième valeur qui est une limite basse d'une plage correcte.

18. Réfrigérateur selon la revendication 10,
avec lequel ledit appareil d'atomisation électrostatique (415) est mis à l'arrêt lorsque le courant détecté par ladite unité de détection de courant de décharge (436) est supérieur à une deuxième valeur qui est supérieure d'une valeur prédéterminée à une limite haute d'une plage correcte.

19. Réfrigérateur selon la revendication 10,
avec lequel ledit appareil d'atomisation électrostatique (415) est mis à l'arrêt lorsque le courant détecté par ladite unité de détection de courant de décharge (436) est inférieur à une quatrième valeur qui est inférieure d'une valeur prédéterminée à une limite basse d'une plage correcte.

20. Réfrigérateur selon la revendication 9,
avec lequel ladite électrode d'atomisation (420) est refroidie pour amener l'air ambiant à former de la condensation pour générer ainsi de l'eau.

21. Réfrigérateur selon la revendication 1,
avec lequel ladite unité d'atomisation est un appareil d'atomisation électrostatique (815) qui comprend : une électrode d'application (820) destinée à appliquer une tension à un liquide ; une électrode auxiliaire (821) disposée pour faire face à ladite électrode d'application ; et une unité d'application de tension (835) configurée pour appliquer une haute tension entre ladite électrode d'application et ladite électrode auxiliaire, et pour générer une brume fine dans ledit compartiment de stockage (807),
ladite unité de détermination d'état d'atomisation (156) comprenant en outre une unité de détermination de quantité d'ozone (838) configurée pour déterminer une quantité de génération d'ozone lorsque ledit appareil d'atomisation électrostatique (815) pulvérise la brume fine,
ledit réfrigérateur comprenant en outre
une unité d'alimentation en eau (816) configurée pour délivrer un liquide audit appareil d'atomisation électrostatique (815), et
ladite unité de commande (839) est configurée pour commander ledit appareil d'atomisation électrostatique (815) conformément à un signal en provenance de ladite unité de détermination de quantité d'ozone (838).

22. Réfrigérateur selon la revendication 21,
avec lequel ladite unité de détermination de quantité d'ozone comprend une unité de détection de courant de décharge (836) configurée pour détecter un courant lorsque ladite unité d'application de tension se décharge, et
ladite unité de commande comprend un circuit de commande (837) qui commande ladite unité d'application de tension (835) conformément à un signal détecté par ladite unité de détection de courant de décharge (836).

23. Réfrigérateur selon la revendication 22,
avec lequel la tension appliquée entre ladite électrode d'application (820) et ladite électrode auxiliaire (821) par ladite unité d'application de tension est réduite de force lorsque le courant détecté par ladite unité de détection de courant de décharge (836) est supérieur à une première valeur qui est une limite haute d'une plage correcte, et
la tension appliquée entre ladite électrode d'application (820) et ladite électrode auxiliaire (821) par ladite unité d'application de tension est augmentée de force lorsque le courant détecté par ladite unité de détection de courant de décharge (836) est inférieur à une troisième valeur qui est une limite basse de la plage correcte.

24. Réfrigérateur selon la revendication 21,
avec lequel ladite unité de détermination de quantité d'ozone (838) comprend une unité de détection de courant de décharge configurée pour détecter un courant lorsque ladite unité d'application de tension (835) se décharge, et
ladite unité de commande (839) comprend un circuit de commande qui commande ladite unité d'alimentation en eau conformément à un signal par ladite unité de détection de courant de décharge.

25. Réfrigérateur selon la revendication 24,
avec lequel ladite unité d'alimentation en eau (816) comprend une pompe à eau et ladite unité de commande (839) est configurée pour commander une quantité d'eau transportée par ladite pompe à eau.

26. Réfrigérateur selon la revendication 24,
avec lequel ladite unité d'alimentation en eau (816) comprend une vanne tout-ou-rien qui ouvre et ferme un trajet d'eau, et
ladite unité de commande (839) est configurée pour commander l'ouverture et la fermeture de ladite vanne tout-ou-rien.

27. Réfrigérateur selon la revendication 24,
avec lequel une quantité de liquide délivrée audit appareil d'atomisation électrostatique (815) par ladite unité d'alimentation en eau (816) est réduite lorsque le courant détecté par ladite unité de détection de courant de décharge (836) est supérieur à une première valeur qui est une limite haute d'une plage correcte, et
la quantité de liquide délivrée audit appareil d'atomisation électrostatique (815) par ladite unité d'alimentation en eau (816) est augmentée lorsque le courant détecté par ladite unité de détection de courant de décharge (836) est inférieur à une troisième valeur qui est une limite basse de la plage correcte.

28. Réfrigérateur selon la revendication 22,
avec lequel ledit appareil d'atomisation électrostatique (815) est mis à l'arrêt lorsque le courant détecté par ladite unité de détection de courant de décharge (836) est supérieur à une deuxième valeur qui est supérieure d'une valeur prédéterminée à une limite haute d'une plage correcte.

29. Réfrigérateur selon la revendication 22,
avec lequel ledit appareil d'atomisation électrostatique (815) est mis à l'arrêt lorsque le courant détecté par ladite unité de détection de courant de décharge (836) est inférieur à une quatrième valeur qui est inférieure d'une valeur prédéterminée à une limite basse d'une plage correcte.

30. Réfrigérateur selon la revendication 21,
avec lequel ladite unité de détermination de quantité d'ozone (838) comprend une unité de détection de concentration d'ozone configurée pour détecter une concentration d'ozone ambiante dudit appareil d'atomisation électrostatique (815).

31. Réfrigérateur selon la revendication 30,
avec lequel ladite unité de commande comprend un circuit de commande qui commande ladite unité d'application de tension (835) ou ladite unité d'alimentation en eau (816) de sorte que la concentration d'ozone se trouve dans une plage prédéterminée, conformément à un signal détecté par ladite unité de détection de concentration d'ozone (838).
